# EUROPEAN PATENT SPECIFICATION

(11) **EP 3 873 080 B1**
(45) Date of publication and mention of the grant of the patent: **27.11.2024**
(21) Application number: 19879999.1
(22) Date of filing: 19.08.2019
(51) Int. Cl.: H04N 23/56, G02B 1/11, G02B 5/20, G02B 27/30, H04N 5/222, G02B 27/48, G02B 7/02, G02B 27/42, G01B 11/25, G03B 21/20, G03B 30/00, G03B 35/08, G06V 10/145

(54) **IMAGE ACQUISITION METHOD, IMAGE ACQUISITION APPARATUS, STRUCTURED LIGHT ASSEMBLY AND ELECTRONIC APPARATUS**
BILDERFASSUNGSVERFAHREN, BILDERFASSUNGSVORRICHTUNG, STRUKTURIERTE LICHTANORDNUNG UND ELEKTRONISCHES GERÄT
PROCÉDÉ D'ACQUISITION D'IMAGES, APPAREIL D'ACQUISITION D'IMAGES, ENSEMBLE À LUMIÈRE STRUCTURÉE ET APPAREIL ÉLECTRONIQUE

(30) Priority: 31.10.2018 CN 201811287250
(43) Date of publication of application: 01.09.2021
(73) Proprietor: GUANGDONG OPPO MOBILE TELECOMMUNICATIONS CORP., LTD., Dongguan, Guangdong 523860 (CN)
(72) Inventor: YANG, Xin, Dongguan, Guangdong 523860 (CN)
(74) Representative: Manitz Finsterwald Patent- und Rechtsanwaltspartnerschaft mbB
(86) International application number: PCT/CN2019/101431
(87) International publication number: WO 2020/088043

(56) References cited:
- CN-A- 108 183 991
- CN-A- 108 303 835
- CN-A- 108 399 596
- CN-A- 108 399 596
- CN-A- 108 668 078
- CN-A- 109 120 837
- CN-A- 109 167 903
- CN-A- 109 167 904
- CN-A- 109 167 905
- CN-A- 109 218 588
- US-A1- 2018 205 937
- US-A1- 2020 364 891

## Description

### FIELD

The invention relates to the field of consumer electronics technologies, and more particularly to, a method for acquiring an image, an apparatus for acquiring an image, a structured light assembly, and an electronic device.

### BACKGROUND

Mobile terminals may be equipped with depth cameras and display screens. The depth cameras may be configured to acquire depth information of objects. The display screens may be configured to display text, patterns and other content. An opening is usually formed on the display screen, such as a notch formed, which makes a display area of the display screen to be staggered with a position of the depth camera. CN108399596A puts forward a depth image engine, which comprises a buffer, an image rotator and a depth value calculator, wherein the buffer is used for receiving the data stream of a first image; after the buffer finishes receiving the data of the complete first image, the image rotator executes a rotation operation to generate a second image; and the depth value calculator receives the second image and a reference image to carry out matching calculation to generate a depth image. The invention also puts forward a depth image calculation method. By use of the depth image engine and the depth image calculation method, firstly, speckle image data is rotated, and then, a depth value is calculated; since the rotated speckle image can be favorably matched with the reference image, the problem that the depth image is wrongly calculated since the placement positions of an image sensor are different or data reading ways are different is solved; and therefore, when a corresponding depth camera is integrated to the mobile terminal, the depth camera can favorably carry out data calculation and perform functions. CN108183991A discloses an electronic device, and the electronic device comprises an enclosure, an output module, a vibration module and a piezoelectric element. The output module comprises a packaging shell, an infrared lamp and a light-transmitting component. The packaging shell comprises a packaging substrate, the infrared lamp and the light-transmitting component are packaged in the packaging shell, and the infrared lamp is supported on the packaging substrate. The light-transmitting component is located on a light-emitting light path of the infrared lamp, and the light-transmitting component comprises a base body and a telescopic film. The base body is provided with a light-transmitting hole, and the telescopic film is accommodated in the light-transmitting hole. The telescopic film can deform under the action of an electric field and change an area of being shaded of the light-transmitting hole, and the infrared light emitted by the infrared lamp can emit out from the packaging shell with different field angles. The vibration module is mounted on the shell. The piezoelectric element is combined with the vibration module and spaced from the output module, and the piezoelectric element is used for generating deformation while being applied with electric signals so as to enable the vibration module to vibrate. The electronic device realizes bone-conduction sound conduction through the piezoelectric element and the vibration module and can effectively guarantee privacy of call contents.

### SUMMARY

The invention is defined in the independent claims. Preferred embodiments are defined in the dependent claims.

### BRIEF DESCRIPTION OF THE DRAWINGS

The above and/or additional aspects and advantages of the disclosure will become apparent and more readily from the following descriptions made with reference to the drawings, in which:
FIG. 1 is a schematic diagram illustrating an electronic device according to some embodiments of the disclosure.
FIG. 2 is a schematic diagram illustrating a partial structure of an electronic device according to some embodiments of the disclosure.
FIG. 3 is a cross-sectional view illustrating an electronic device along line A-A in FIG. 2, according to some embodiments of the disclosure.
FIG. 4 is a schematic diagram illustrating a structured light projector according to some embodiments of the disclosure.
FIG. 5 is a cross-sectional view illustrating an electronic device along a position corresponding to line A-A in FIG. 2, according to some embodiments of the disclosure.
FIGS. 6 and 7 are schematic diagrams illustrating a partial structure of an electronic device according to some embodiments of the disclosure.
FIG. 8 is a cross-sectional view illustrating an electronic device along a position corresponding to line A-A in FIG. 2, according to some embodiments of the disclosure.
FIGS. 9 and 10 are schematic diagrams illustrating a partial structure of an electronic device according to some embodiments of the disclosure.
FIGS. 11 and 15 are cross-sectional views illustrating an electronic device along a position corresponding to line A-A in FIG. 2, according to some embodiments of the disclosure.
FIG. 16 is a flowchart illustrating a method for acquiring an image according to some embodiments of the disclosure.
FIG. 17 is a block diagram illustrating an apparatus for acquiring an image according to some embodiments of the disclosure.
FIGS. 18 and 19 are flowcharts illustrating a method for acquiring an image according to some embodiments of the disclosure.
FIG. 20 is a schematic diagram illustrating a scene of a method for acquiring an image according to some embodiments of the disclosure.
FIG. 21 is a flowchart illustrating a method for acquiring an image according to some embodiments of the disclosure.
FIG. 22 is a schematic diagram illustrating a scene of a method for acquiring an image according to some embodiments of the disclosure.
FIGS. 23 and 27 are flowcharts illustrating a method for acquiring an image according to some embodiments of the disclosure.
FIG. 28 is a schematic diagram illustrating a scene of a method for acquiring an image according to some embodiments of the disclosure.
FIG. 29 is a flowchart illustrating a method for acquiring an image according to some embodiments of the disclosure.
FIG. 30 is a schematic diagram illustrating a scene of a method for acquiring an image according to some embodiments of the disclosure.
FIGS. 31 and 34 are flowcharts illustrating a method for acquiring an image according to some embodiments of the disclosure.
FIG. 35 is a schematic diagram illustrating an optical path of structured light emitted by a structured light projector according to some embodiments of the disclosure.
FIGS. 36 and 41 are flowcharts illustrating a method for acquiring an image according to some embodiments of the disclosure.

### DETAILED DESCRIPTION

Description will be made in detail below to embodiments of the disclosure with reference to the drawings. The same or similar reference numerals in the drawings indicate the same or similar elements or elements with the same or similar functions throughout.

In addition, the embodiments described herein with reference to the drawings are explanatory, illustrative, and only used to explain the embodiments of the disclosure, and cannot be understood as a limitation of the disclosure.

In the description of the disclosure, unless specified or limited otherwise, the first characteristic is "on" or "under" the second characteristic refers to the first characteristic and the second characteristic can contact with each other directly or indirectly via media. And, the first characteristic is "on", "above", "over" the second characteristic may refer to the first characteristic is right over the second characteristic or is diagonal above the second characteristic, or just refer to the horizontal height of the first characteristic is higher than the horizontal height of the second characteristic. The first characteristic is "below" or "under" the second characteristic may refer to the first characteristic is right over the second characteristic or is diagonal under the second characteristic, or just refer to the horizontal height of the first characteristic is lower than the horizontal height of the second characteristic.

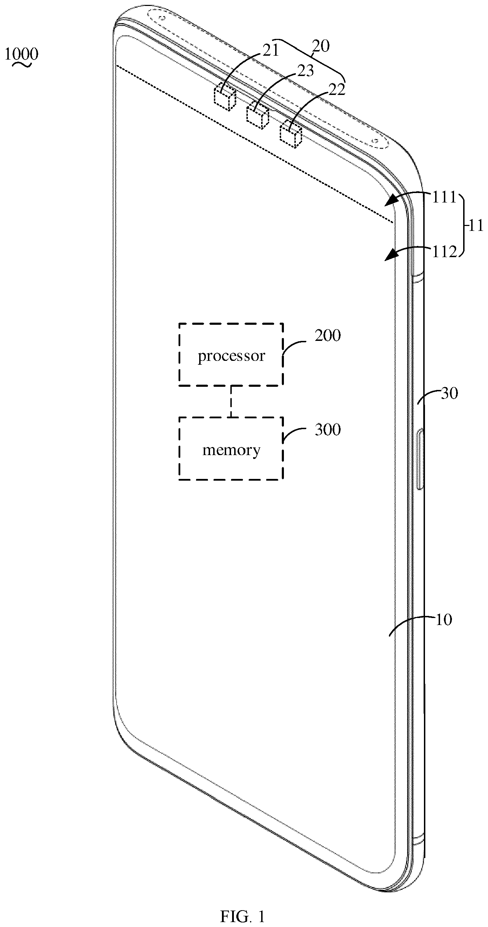

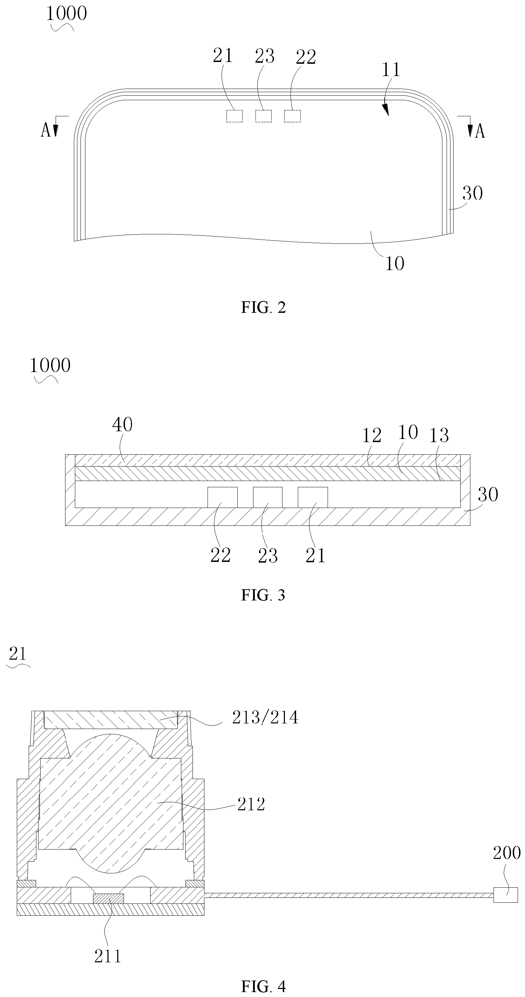

With reference to FIG. 1 and FIG. 2, the electronic device 1000 according to embodiments of the disclosure may include a display screen 10 and a structured light assembly 20. The electronic device 1000 may further include a housing 30. The housing 30 may be configured to arrange functional components such as the display screen 10 and the structured light assembly 20. The functional components may further be a mainboard, a dual camera module, a receiver, and the like. The specific form of the electronic device 1000 may be a mobile phone, a tablet computer, a smart watch, a head-mounted display device, etc. The disclosure employs the electronic device 1000 as the mobile phone for description. It is understood that the specific form of the electronic device 1000 is not limited to the mobile phone, which is not limited herein.

The display screen 10 may be arranged on the housing 30. In detail, the display screen 10 may be arranged on one surface of the housing 30 or on two opposite surfaces of the housing 30 at the same time. In an example illustrated in FIG. 1, the display screen 10 is arranged on the front surface of the housing 30. The display screen 10 may cover 85% or more of an area of the front surface, for example, 85%, 86%, 87%, 88%, 89%, 90%, 91%, 92%, 93%, 95% or even 100%. The display screen 10 may be configured to display images. The images may be information such as text, pictures, videos, and icons. The specific type of the display screen 10 may be a liquid crystal display, an OLED (organic light-emitting diode) display, a Micro LED (light-emitting diode) display, and the like. The display screen 10 may include a display area 11. The display area 11 may be configured to display the images. To adapt to requirements of different types of electronic devices 1000 and different users, a shape of the display area 11 may be a circle, an oval, a racetrack, a rounded rectangle, a rectangle, etc.

With reference to FIG. 3, the display area 11 is formed with a front surface 12 and a rear surface 13 opposite to each other. The front surface 12 may be configured to display the images. The light is emitted along a direction from the rear surface 13 to the front surface 12. The light passes through the front surface 12 and is received by a user. Pixels are formed in the display area 11. In an example, the pixels may emit light to present corresponding colors. In another example, the pixels may present corresponding colors under the action of backlight. There is usually a microscopic gap between pixels, and light will be diffracted when passing through the microscopic gap.

In some examples, the display screen 10 may further include a non-display area. The non-display area may be formed on the periphery of the display area 11. The non-display area may be configured to not display. The non-display area may be configured to be combined with the housing 30 or configured for wiring. For example, the non-display area and the housing 30 may be combined with glue without affecting the display function of the display area 11. The display screen 10 may also be a touch display screen integrated with a touch function. After the user acquires the image information displayed on the display screen 10, the user may perform touch controls on the display screen 10 to implement predetermined interactive operations.

The structured light assembly 20 may employ structured light to acquire depth information of a target object, for three-dimensional (3D) modeling, generating 3D images, ranging and the like. The structured light assembly 20 may be arranged in the housing 30 of the electronic device 1000. In detail, the structured light assembly 20 may be arranged on a bracket, and the structured light assembly 20 and the bracket together may be arranged in the housing 30. The structured light assembly 20 may include a structured light projector 21, a structured light camera 22 and a floodlight 23.

With reference to FIG. 1 and FIG. 4, the structured light projector 21 is arranged on the side where the rear surface 13 of the display screen 10 is located. In other words, the structured light projector 21 is arranged under the display area 11. The structured light projector 21 is configured to emit structured light passing through the display area 11. In detail, the structured light projector 21 may include a light source 211, a collimating element 212, and a diffractive optical element 213. The light (for example, infrared laser light) emitted by the light source 211 is collimated by the collimating element 212, then diffracted by the diffractive optical element 213, and emitted from the structured light projector 21, and then passes through the display area 11 to project to the outside. The microscopic gaps of the display area 11 and the diffractive structure on the diffractive optical element 213 both have a diffraction effect on the light emitted by the light source 211.

The structured light passing through the display area 11 and entering the outside may include a pattern diffracted by the diffractive optical element 213 (the pattern may include a plurality of spots diffracted by the diffractive optical element 213) and a pattern diffracted by microscopic gaps of the display screen 10 (the pattern may include a plurality of spots diffracted by the diffractive optical element 213 and then diffracted by the display screen 10) at the same time. Therefore, the speckle pattern after passing through the display area 11 has a higher irrelevance, which is beneficial to the subsequent processing of the acquired speckle pattern. In an example, the transmittance of the display area 11 may reach 60% or above, so that the structured light emitted by the structured light projector 21 passes through the display area 11 with less loss.

The structured light camera 22 may be an infrared camera. The structured light is emitted to the target object. After being modulated by the target object, the structured light may be acquired by the structured light camera 22. The structured light camera 22 receives the modulated structured light to acquire a speckle image. The depth data of the target object is obtained after the speckle image is processed. The structured light camera 22 may also be arranged on the side where the rear surface 13 of the display screen 10 is located, that is, under the display screen 10. In detail, the structured light camera 22 may be arranged on the same bracket as the structured light projector 21, or the structured light camera 22 may be directly arranged on the housing 30. At this time, a light incident surface of the structured light camera 22 may be aligned with the display area 11. The structured light modulated by the target object passes through the display area 11 and is received by the structured light camera 22. In detail, the structured light modulated by the target object may be diffracted by the microscopic gaps of the display screen 10, and received by the structured light camera 22.

The floodlight 23 may be configured to emit supplementary light outward. The supplementary light may be configured to supplement the light intensity in the environment when the ambient light is weak. In an example, the supplementary light may be infrared light. After the supplementary light is emitted to the target object and reflected by the target object, it may be acquired by the structured light camera 22 to acquire a two-dimensional (2D) image of the target object. The 2D image information may be configured for identity recognition. The floodlight 23 may also be arranged on the side where the rear surface 13 of the display screen 10 is located, that is, under the display screen 10. In detail, the floodlight 23 may be arranged on the same bracket as the structured light projector 21 and the structured light camera 22. In addition, the supplementary light emitted by the floodlight 23 enters the external environment after passing through the microscopic gaps of the display area 11, and the reflected supplementary light may pass through the microscopic gaps again to be received by the structured light camera 22.

In summary, since the structured light projector 21 is arranged on the side where the rear surface 13 of the display screen 10 is located, and the structured light emitted by the structured light projector 21 passes through the display area 11 and enters the external environment, there is no need to set the opening in the display screen 10 for aligning with the structured light projector 21. Therefore, the electronic device 1000 has a screen-to-body ratio.

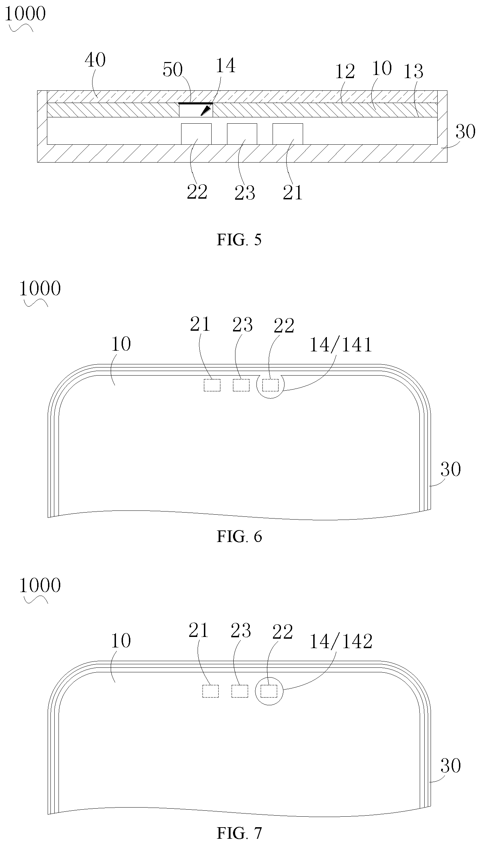

With reference to FIG. 5, in some embodiments, the display screen 10 is formed with a through slot 14. The through slot 14 may not have a display function. The through slot 14 penetrates the front surface 12 and the rear surface 13. The structured light camera 22 may be arranged on the side where the rear surface 13 of the display screen 10 is located, while the structured light camera 22 is configured to receive the modulated structured light passing through the through slot 14.

At this time, the light incident surface of the structured light camera 22 may be aligned with the through slot 14. The structured light modulated by the target object passes through the through slot 14 and received by the structured light camera 22. In embodiments, since the modulated structured light does not need to pass through the microscopic gaps of the display area 11, the modulated structured light may not be diffracted by the microscopic gaps again, and the speckle image acquired by the structured light camera 22 is the speckle image modulated by the target object. The processing difficulty of subsequent calculating the depth image based on the speckle image may be reduced.

In detail, in an example illustrated in FIG. 6, the through slot 14 may include an opening 141 formed on the edge of the display screen 10. In other words, the through slot 14 intersects with the edge of the display screen 10. The opening 141 may be formed on any one or more edges such as the upper edge, the lower edge, the left edge, and the right edge of the display screen 10. A shape of the opening 141 may be any shape such as a triangle, a semicircle, a rectangle, a racetrack, etc., which is not limited herein.

In an example illustrated in FIG. 7, the through slot 14 may include a through hole 142 spaced from the edge of the display screen 10. In other words, the through slot 14 is opened in a range enclosed by the edge of the display screen 10. The through hole 142 may be close to any one or more edges such as the upper edge, the lower edge, the left edge, and the right edge of the display screen 10. A shape of the through hole 142 may be any shape such as a triangle, a circle, a rectangle, a racetrack, etc., which is not limited herein.

In some embodiments, the through slot 14 may also include the above-mentioned opening 141 and through hole 142 at the same time. The number of openings 141 and the number of through holes 142 may be equal or not equal.

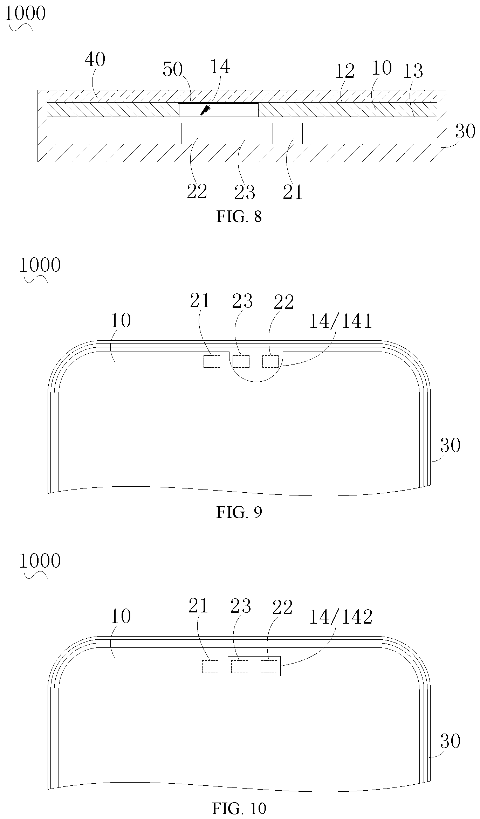

Referring to FIG. 8, in some embodiments, the floodlight 23 may be arranged on the side where the rear surface 13 of the display screen 10 is located. The floodlight 23 is configured to emit supplementary light passing through the through slot 14.

In addition, the supplementary light is directly emitted to the outside after passing through the through slot 14. The supplementary light will not be weakened during the process of passing through the display area 11, ensuring that the target object receives more supplemental light.

Similar to the structured light camera 22, as illustrated in FIG. 9, the through slot 14 may include an opening 141 formed on the edge of the display screen 10. In other words, the through slot 14 intersects with the edge of the display screen 10. The opening 141 may be formed on any one or more edges such as the upper edge, the lower edge, the left edge, and the right edge of the display screen 10. A shape of the opening 141 may be any shape such as a triangle, a semicircle, a rectangle, a racetrack, etc., which is not limited herein.

Alternatively, as illustrated in FIG. 10, the through slot 14 may include a through hole 142 spaced from the edge of the display screen 10. In other words, the through slot 14 is opened in a range enclosed by the edge of the display screen 10. The through hole 142 may be close to any one or more edges such as the upper edge, the lower edge, the left edge, and the right edge of the display screen 10. A shape of the through hole 142 may be any shape such as a triangle, a circle, a rectangle, a racetrack, etc., which is not limited herein.

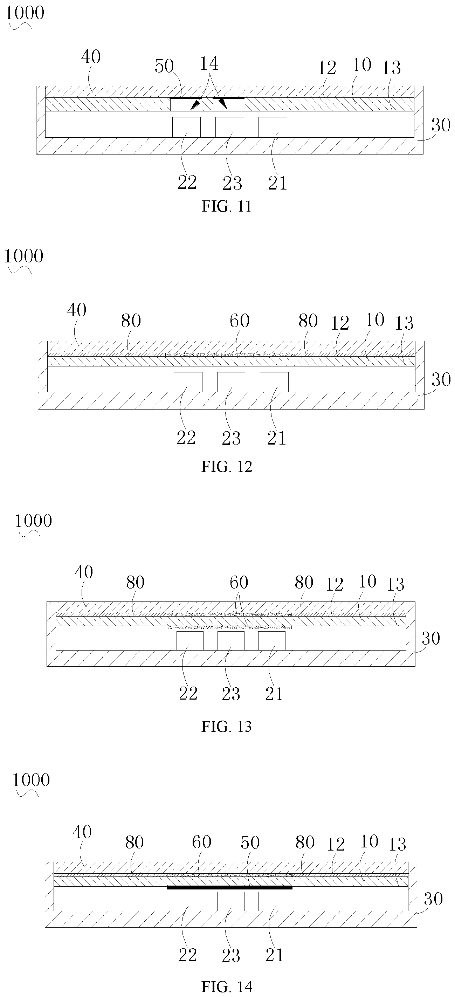

In addition, in examples illustrated in FIGS. 8 to 10, the floodlight 23 and the structured light camera 22 may correspond to the same through slot 14. In an example illustrated in FIG. 11, the floodlight 23 and the structured light camera 22 may correspond to different through slots 14.

Referring to FIGS. 3, 5, 8 and 11, in some embodiments, the electronic device 1000 may further include a cover plate 40. The cover plate 40 may be arranged on the side where the front surface 12 of the display screen 10 is located. When the display screen 10 is provided with the through slot 14, an infrared transmission layer 50 is provided on an area of the cover plate 40 corresponding to the through slot 14.

The cover plate 40 may be made of material with good light transmission properties such as glass or sapphire. The infrared transmission layer 50 may be an infrared transmission ink or an infrared transmission film. The infrared transmission layer 50 may have a high transmittance to infrared light (for example, light with a wavelength of 940 nm), for example, the transmittance may reach 85% or more, but have a low transmittance to light other than the infrared light or the light other than the infrared light cannot be transmitted at all. Therefore, it is difficult for the user to see the structured light camera 22 or the floodlight 23 aligned with the through slot 14 through the cover plate 40. The appearance of the electronic device 1000 is more beautiful.

With reference to FIG. 1 again, in some embodiments, the display area 11 may include a first display subarea 111 and a second display subarea 112. The structured light emitted by the structured light projector 21 passes through the first display subarea 111. A pixel density of the first display subarea 111 is less than a pixel density of the second display subarea 112.

The pixel density of the first display subarea 111 is less than the pixel density of the second display subarea 112, that is, the microscopic gap of the first display subarea 111 is larger than the microscopic gap of the second display subarea 112. The blocking effect of light on the first display subarea 111 is small. The transmittance of light passing through the first display subarea 111 is high. Therefore, the transmittance of the structured light emitted by the structured light projector 21 through the first display subarea 111 is relatively high.

In an example, the first display subarea 111 may be configured to display state icons of the electronic device 1000, for example, display the battery power, the network connection state, the system time, etc. of the electronic device 1000. The first display subarea 111 may be located near the edge of the display area 11, and the second display subarea 112 may be located in the middle of the display area 11.

With reference to FIG. 1 again, in some embodiments, the display area 11 may include a first display subarea 111 and a second display subarea 112. The structured light emitted by the structured light projector 21 passes through the first display subarea 111. The first display subarea 111 and the second display subarea 112 may be independently controlled and displayed in different display states. At this time, the pixel density of the first display subarea 111 and the pixel density of the second display subarea 112 may be equal, or the pixel density of the first display subarea 111 is smaller than the pixel density of the second display subarea 112.

Different display states may be powering on, powering off, displaying with different brightness, and displaying with different refresh frequencies, and the like. The display states of the first display subarea 111 and the second display subarea 112 may be independently controlled. The user may control the second display subarea 112 to display normally according to actual needs, and the first display subarea 111 to cooperate with the structured light projector 21. For example, when the structured light projector 21 emits the structured light, the first display subarea 111 may be powered off, the display brightness of the first display subarea 111 may be lowered, or the refresh frequency of the first display subarea 111 may be adjusted so that the powering time of the first display subarea 111 and the powering time of the structured light projector 21 are staggered to reduce the influence of the structured light projector 21 projecting the speckle pattern to the scene when the first display subarea 111 is displayed. When the structured light projector 21 is not activated, the first display subarea 111 and the second display subarea 112 may both be powered on and displayed at the same refresh frequency.

Referring to FIG. 12, in some embodiments, the electronic device 1000 further may include a cover plate 40. The cover plate 40 may be arranged on the side of the front surface 12 of the display screen 10. An infrared antireflection film 60 may be formed on an area of the cover plate 40 corresponding to the structured light projector 21.

The infrared antireflection film 60 may increase the transmittance of infrared light. When the structured light projector 21 projects infrared laser light, the infrared antireflection film 60 may increase the transmittance of the infrared laser light passing through the cover plate 40 to reduce the loss when the infrared laser light passes through the cover plate 40 and further reduce the power consumption of the electronic device 1000. In detail, the infrared antireflection film 60 may be plated on the upper surface, or the lower surface of the cover plate 40, or both.

Of course, an area on the cover plate 40 corresponding to the structured light camera 22 may also be formed with an infrared antireflection film 60 to reduce the loss when the external infrared light passes through the cover plate 40 before reaching the structured light camera 22. An area on the cover plate 40 corresponding to the floodlight 23 may also be formed with an infrared antireflection film 60 to reduce the loss when the supplementary light emitted by the floodlight 23 passes through the cover plate 40. At this time, an area on the cover plate 40, which does not correspond to the structured light projector 21, the structured light camera 22, and the floodlight 23, may be formed with a visible light antireflection film 80 to improve the transmittance of the visible light emitted by the display screen 10 when passing through the cover plate 40.

Referring to FIG. 13, in some embodiments, an infrared antireflection film 60 may be formed on an area of the display screen 10 corresponding to the structured light projector 21.

The infrared antireflection film 60 may increase the transmittance of infrared light. When the structured light projector 21 projects infrared laser light, the infrared antireflection film 60 may increase the transmittance of the infrared laser light passing through the display screen 10 to reduce the loss when the infrared laser light passes through the display screen 10 and further reduce the power consumption of the electronic device 1000. In detail, the infrared antireflection film 60 may be formed on the front surface 12 or the rear surface 13 of the display area 11, or at the same time the front surface 12 or the rear surface 13 of the display area 11. In an example, the infrared antireflection film 60 may also be formed inside the display screen 10. For example, when the display screen 10 is a liquid crystal display, the infrared antireflection film 60 may be formed on a polarizer in the display screen 10, or formed on an electrode plate of the display screen 10 and so on.

Of course, when the position of the display screen 10 corresponding to the structured light camera 22 is not provided with the through slot 14, an area of the display screen 10 corresponding to the structured light camera 22 may also form an infrared antireflection film 60. When the position of the display screen 10 corresponding to the floodlight 23 is not provided with the through slot 14, an area of the display screen 10 corresponding to the floodlight 23 may also form an infrared antireflection film 60.

Referring to FIG. 14, in some embodiments, an infrared transmission layer 50 may be formed on an area of the display screen 10 corresponding to the structured light projector 21. As described above, the infrared transmission layer 50 has a relatively high transmittance to the infrared light, but has a low transmittance to the light other than the infrared light (such as the visible light) or makes the light other than the infrared light (such as the visible light) to be completely impenetrable. Therefore, it is difficult for the user to see the structured light projector 21.

At the same time, when the position of the display screen 10 corresponding to the structured light camera 22 is not provided with the through slot 14, an area of the display screen 10 corresponding to the structured light camera 22 may also form an infrared transmission layer 50 to reduce the influence of the light other than the infrared light, which passes through the display screen 10, to the structured light camera 22. When the position of the display screen 10 corresponding to the floodlight 23 is not provided with the through slot 14, an area of the display screen 10 corresponding to the floodlight 23 may also form an infrared transmission layer 50.

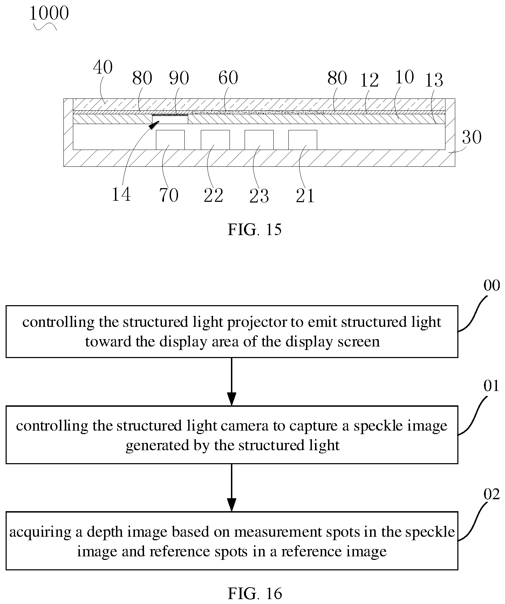

With reference to FIG. 15, in some embodiments, the display screen 10 is formed with a through slot 14 penetrating through the front surface 12 and the rear surface 13. The electronic device 1000 may further include a visible light camera 70. The visible light camera 70 may be aligned with the through slot 14. A visible light antireflection film 80 and/or an infrared cutoff film 90 may be formed on an area of the cover plate 40 corresponding to the through slot 14.

The visible light camera 70 may be configured to receive the visible light passing through the cover plate 40 and the through slot 14 to obtain images. The visible light antireflection film 80, formed on the area of the cover plate 40 corresponding to the through slot 14, may increase the transmittance of the visible light passing through the cover plate 40 so as to improve the imaging quality of the visible light camera 70. The infrared cutoff film 90, formed on the area of the cover plate 40 corresponding to the through slot 14, may reduce the transmittance of the infrared light passing through the cover plate 40, or completely prevent the infrared light from entering the visible light camera 70, so as to reduce the influence of the infrared light on the imaging effect of the visible light camera 70.

With reference to FIG. 1 and FIG. 16, the disclosure also provides a method for acquiring an image. The method may be applicable to the structured light assembly 20 described in any one of the above embodiments. The structured light assembly 20 may be arranged on the electronic device 1000. The structured light assembly 20 may include a structured light projector 21 and a structured light camera 22. The structured light projector 21 may be arranged on the side of the rear surface 13 of the display screen 10. The structured light projector 21 is configured to emit structured light passing through the display area 11. The method may include the following.
00: the structured light projector 21 is controlled to emit structured light toward the display area 11 of the display screen 10.
01: the structured light camera 22 is controlled to capture a speckle image generated by the structured light.
02: a depth image is acquired based on measurement spots in the speckle image and reference spots in a reference image.

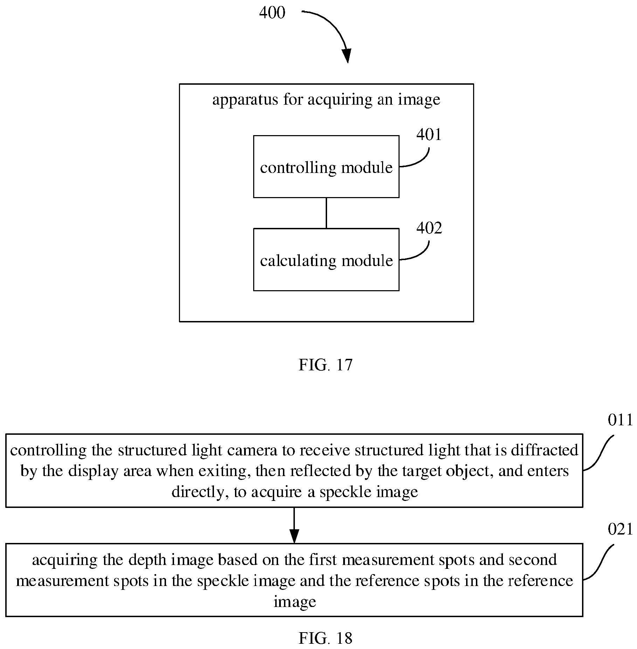

With reference to FIG. 1 and FIG. 17, the method for acquiring the image according to embodiments of the disclosure may be implemented by an apparatus 400 for acquiring an image according to embodiments of the disclosure. The apparatus 400 for acquiring the image may include a controlling module 401 and a calculating module 402. The action 00 and the actin 01 may be implemented by the controlling module 401. The action 02 may be implemented by the calculating module 402. In other words, the controlling module 401 may be configured to control the structured light projector 21 to emit structured light toward the display area 11 of the display screen 10 and control the structured light camera 22 to capture a speckle image generated by the structured light. The calculating module 402 may be configured to acquire a depth image based on measurement spots in the speckle image and reference spots in a reference image.

With reference to FIG. 1 again, the method for acquiring the image according to embodiments of the disclosure may be applicable to the structured light assembly 20 described in any of the above embodiments. The structured light assembly 20 may further include a processor 200. The actions 00, 01, and 02 may all be implemented by the processor 200. In other words, the processor 200 may be configured to control the structured light projector 21 to emit structured light toward the display area 11 of the display screen 10, control the structured light camera 22 to capture a speckle image generated by the structured light, and acquire a depth image based on measurement spots in the speckle image and reference spots in a reference image. The processor 200 of the structured light assembly 20 and the processor of the electronic device 1000 may be two independent processors. Alternatively, the processor 200 of the structured light assembly 20 and the processor of the electronic device 1000 may be the same processor. In some embodiments of the disclosure, the processor 200 of the structured light assembly 20 and the processor of the electronic device 1000 may be the same processor 200.

In detail, the structured light projector 21 is powered on and projects the structured light into the scene. The structured light projected into the scene may form a speckle pattern with a plurality of spots. Since a plurality of target objects in the scene may have different distances with the structured light projector 21, the speckle pattern projected on the target objects may be modulated due to differences in the surface height of the target objects, and the spots in the speckle pattern may be shifted to different degrees. The shifted spots may be collected by the structured light camera 22 to form the speckle image including the measurement spots. The processor 200 may acquire the speckle image and calculate depth data of a plurality of pixels based on the offsets of the measurement spots in the speckle image relative to the reference spots in the reference image. The plurality of pixels with depth data may form the depth image. The reference image may be acquired by pre-calibration.

In the method for acquiring the image and the electronic device 1000 according to embodiments of the disclosure, the structured light projector 21 may be arranged on the side where the rear surface 13 of the display screen 10 is located, that is, the structured light projector 21 may be arranged under the display screen 10. The display screen 10 may not need to set the through slot 14 to which the light projector 21 is aligned. Therefore, the electronic device 1000 may have a relatively high screen-to-body ratio while the acquisition of the depth image may not be affected.

With reference to FIG. 1, FIG. 5, FIG. 8, and FIG. 18, in some embodiments, the structured light projector 21 and the structured light camera 22 may be arranged on the side of the rear surface 13 of the display screen 10 together. The display screen 10 may be provided with the through slot 14 that is aligned with the light incident surface of the structured light camera 22. The structured light camera 22 may receive the modulated structured light passing through the through slot 14. At this time, the action 01 of controlling the structured light camera 22 to capture the speckle image generated by the structured light may include the following.

011: the structured light camera 22 is controlled to receive structured light that is diffracted by the display area 11 when exiting, then reflected by the target object, and enters directly, to acquire a speckle image. The speckle image may include a plurality of measurement spots. The plurality of measurement spots may include first measurement spots formed when the laser light is diffracted by the diffractive optical element 213 (as illustrated in FIG. 4) and reflected by the target object, and second measurement spots formed when the laser light is diffracted by the diffractive optical element 213, then diffracted by the display screen 10, and reflected by the target object. In detail, the first measurement spots may be formed when the laser light is diffracted by the diffractive optical element 213, not diffracted by the display screen 10 when passing through the display screen 10 (that is, the laser light is directly projected to the target object without encountering the microscopic gaps), and modulated and reflected by the target object. The second measurement spots may be formed when the laser light is diffracted by the diffractive optical element 213, diffracted by the display screen 10 when passing through the display screen 10 (that is, the laser light is projected to the target object after encountering the microscopic gaps), and modulated and reflected by the target object.

The action 02 of acquiring the depth image based on the measurement spots in the speckle image and the reference spots in the reference image may include the following.

021: the depth image is acquired based on the first measurement spots and second measurement spots in the speckle image and the reference spots in the reference image.

With reference to FIG. 17, in some embodiments, the action 011 may be implemented by the controlling module 401. The action 021 may be implemented by the calculating module 402.

With reference to FIG. 1 again, in some embodiments, the action 011 and the action 021 may be implemented by the processor 200. In other words, the processor 200 may also be configured to control the structured light camera 22 to receive structured light that is diffracted by the display area 11 when exiting, then reflected by the target object, and enters directly to acquire a speckle image. The speckle image may include a plurality of measurement spots. The plurality of measurement spots may include first measurement spots formed when the laser light is diffracted by the diffractive optical element 213 (as illustrated in FIG. 4) and reflected by the target object, and second measurement spots formed when the laser light is diffracted by the diffractive optical element 213, then diffracted by the display screen 10, and reflected by the target object. The processor 200 may also be configured to acquire the depth image based on the first measurement spots and second measurement spots in the speckle image and the reference spots in the reference image.

In detail, with reference to FIG. 4, the structured light projector 21 may usually include a light source 211, a collimating element 212, and a diffractive optical element 213. The light source 211 is configured to emit the laser light. The collimating element 212 is configured to collimate the laser light emitted by the light source 211. The diffractive optical element 213 is configured to diffract the laser light collimated by the collimating element 212 to project the structured light into the scene. The structured light projected into the scene may form a speckle pattern. The speckle pattern may include a plurality of spots. These spots are formed when the laser light passes through the diffraction of the diffractive optical element 213.

LCD (Liquid Crystal Display) screens, OLED screens, Micro LED screens and other types of display screens 10 may usually have fixed pixel arrangement structures formed on the display areas 11. The microscopic gap may be formed between adjacent pixels. When single-point laser light passes through these microscopic gaps, it will be diffracted to produce a series of spots. When the pixel arrangement structures in the display areas 11 are different, the spot arrangements of the speckle patterns formed after the single-point laser light passes through the display areas 11 may also be different. The structured light emitted by the structured light projector 21 is usually infrared laser light. In this way, when the structured light projector 21 is arranged on the side where the rear surface 13 of the display screen 10 is located, that is, under the display screen 10, the infrared laser light emitted by the structured light projector 21 may also be diffracted by the microscopic gaps of the display area 11 when it passes through the display area 11 to produce the speckle pattern with the plurality of spots. Thus, the plurality of spots in the speckle pattern projected by the structured light projector 21 into the space may simultaneously include first spots formed by the laser light being diffracted by the diffractive optical element 213 and second spots formed by the laser light being diffracted by the diffractive optical element 213 and then diffracted by the display screen 10.

When the structured light camera 22 is imaging, the structured light camera 22 may receive the structured light reflected by the target object in the scene to form the speckle image. In embodiments of the disclosure, since the display screen 10 is provided with the through slot 14, the light incident surface of the structured light camera 22 is aligned with the through slot 14, and the through slot 14 does not have microscopic gaps, the laser light that is diffracted by the diffractive optical element 213, then diffracted by the display screen 10, and modulated by the target object and reflected, will not be diffracted when it passes through the through slot 14. The structured light camera 22 may receive the structured light that is diffracted by the display area 11 and reflected by the target object and directly enters. The plurality of measurement spots in the formed speckle image also may include the first measurement spots formed by the laser light being diffracted by the diffractive optical element 213 and reflected by the target object, and the second measurement spots formed by the laser light being diffracted by the diffractive optical element 213, then diffracted by the display screen 10, and reflected by the target object.

After the structured light camera 22 captures the speckle image, the processor 200 may directly calculate the depth image based on the first measurement spots and second measurement spots in the speckle image and the reference spots in the reference image. The manner of calculating the depth image may include the two following manners.

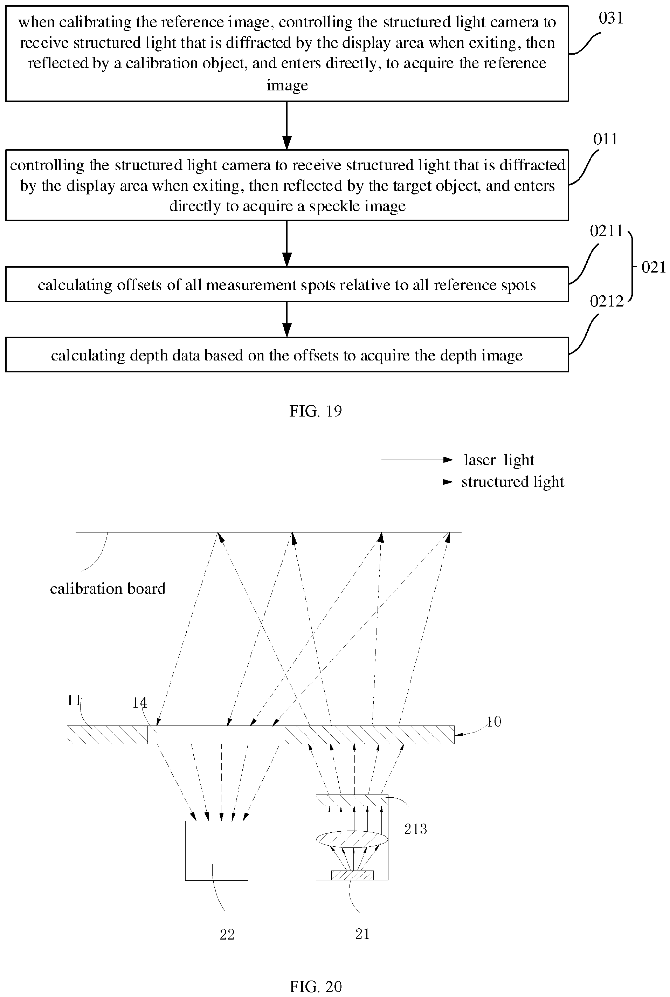

With reference to FIG 19, in one calculating manner, the action 021 may include the following.
0211: offsets of all measurement spots relative to all reference spots is calculated.
0212: depth data is calculated based on the offsets to acquire the depth image.

Correspondingly, the method for acquiring the image may further include the following.

031, when calibrating the reference image, the structured light camera 22 is controlled to receive structured light that is diffracted by the display area 11 when exiting, then reflected by a calibration object, and enters directly, to acquire the reference image. The reference image may include a plurality of reference spots.

With reference to FIG. 17 again, the action 0211 and the action 0212 may be both implemented by the calculating module 402. The action 031 may be implemented by the controlling module 401.

With reference to FIG. 1 again, all actions 0211, 0212, and 031 may be implemented by the processor 200. In other words, the processor 200 may be configured to calculate offsets of all measurement spots relative to all reference spots and calculate depth data based on the offsets to acquire the depth image. The processor 200 may be configured to control the structured light camera 22 to receive structured light that is diffracted by the display area 11 when exiting, then reflected by a calibration object, and enters directly to acquire the reference image. The reference image may include a plurality of reference spots.

In detail, with reference to FIG. 20, in the process of calibrating the reference image, the structured light projector 21 and the structured light camera 22 may be both arranged on the side of the rear surface 13 of the display screen 10. The display screen 10 may be provided with the through slot 14 that is aligned with the light incident surface of the structured light camera 22. The structured light camera 22 may receive the modulated structured light passing through the through slot 14. In this way, in the calibration scene and the actual use scene, the positions of the structured light projector 21 and the structured light camera 22 relative to the display screen 10 are consistent. In the calibration scene, the processor 200 may control the structured light projector 21 to emit the structured light. After passing through the display area 11, the structured light is projected to the calibration object such as a calibration board separated from the structured light assembly 20 by a predetermined distance, is reflected back by the calibration board, passes through the through slot 14, and is received by the structured light camera 22. At this time, the structured light camera 22 receives the structured light that is emitted by the structured light projector 21, diffracted by the display screen 10, reflected by the calibration board, and directly enters through the through slot 14. The formed reference image may include the plurality of reference spots. The reference spots may include first reference spots corresponding to the first measurement spots and second reference spots corresponding to the second measurement spots. The first reference spots may be formed by the laser light being diffracted by the diffractive optical element 213 when it passes through the diffractive optical element 213, passing through the display screen 10 without being diffracted by the display screen 10, and being modulated and reflected by the calibration board. The second reference spots may be formed by the laser light being diffracted by the diffractive optical element 213 when it passing through the diffractive optical element 213, diffracted by the display screen 10 when it passes through the display screen 10, and being modulated and reflected by the calibration board. Although the speckle image includes both the first measurement spots and the second measurement spots, and the reference image includes both the first reference spots and the second reference spots, in this calculation method, the processor 200 may not distinguish the first measurement spots and the second measurement spots in the speckle image and the first reference spots and the second reference spots in the reference image. The processor 200 may calculate the depth image directly based on all the measurement spots and all the reference spots. In detail, the processor 200 may first calculate the offsets of all measurement spots relative to all reference spots, and calculate a plurality of pieces of depth data based on the offsets, so as to obtain the depth image.

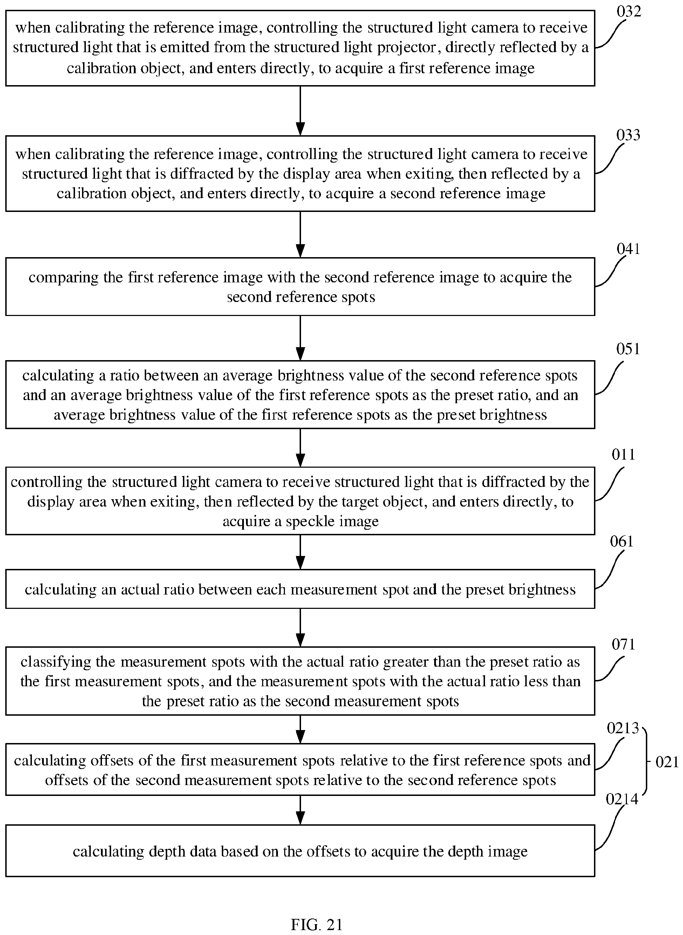

With reference to FIG 21, in another calculating manner, the action 021 may include the following.

0213: offsets of the first measurement spots relative to the first reference spots and offsets of the second measurement spots relative to the second reference spots are calculated.

0214: depth data is calculated based on the offsets to acquire the depth image.

At this time, the method for acquiring the image may further include the following.

032: when calibrating the reference image, the structured light camera 22 is controlled to receive structured light that is emitted from the structured light projector 21, directly reflected by a calibration object, and enters directly, to acquire a first reference image. The first reference image may include a plurality of reference spots. The plurality of reference spots may include first reference spots formed by the laser light being diffracted by the diffractive optical element 213 and reflected by the calibration object.

033: when calibrating the reference image, the structured light camera 22 is controlled to receive structured light that is diffracted by the display area 11 when exiting, then reflected by a calibration object, and enters directly, to acquire a second reference image. The second reference image may include a plurality of reference spots. The plurality of reference spots may include the first reference spots formed by the laser light being diffracted by the diffractive optical element 213 and reflected by the calibration object, and second reference spots formed by the laser light being diffracted by the diffractive optical element 213, then diffracted by the display screen 10, and reflected by the calibration object.

041: the first reference image is compared with the second reference image to acquire the second reference spots.

051: a ratio between an average brightness value of the second reference spots and an average brightness value of the first reference spots is calculated as the preset ratio, and an average brightness value of the first reference spots is calculated as the preset brightness.

061: an actual ratio between each measurement spot and the preset brightness is calculated.

071: the measurement spots with the actual ratio greater than the preset ratio are classified as the first measurement spots, and the measurement spots with the actual ratio less than the preset ratio are classified as the second measurement spots.

Referring to FIG. 17 again, the actions 0213, 0214, 041, 051, 061, and 071 all may be implemented by the calculating module 402. The action 032 and the action 033 both may be implemented by the controlling module 401.

Referring to FIG. 1 again, the actions 0213, 0214, 032, 033, 041, 051, 061, and 071 all may be implemented by the processor 200. That is, the processor 200 may further be configured to, when calibrating the reference image, control the structured light camera 22 to receive structured light that is emitted from the structured light projector 21, directly reflected by a calibration object, and enters directly, to acquire a first reference image; when calibrating the reference image, control the structured light camera 22 to receive structured light that is diffracted by the display area 11 when exiting, then reflected by a calibration object, and enters directly, to acquire a second reference image; compare the first reference image with the second reference image to acquire the second reference spots; calculate a ratio between an average brightness value of the second reference spots and an average brightness value of the first reference spots as the preset ratio, and calculate an average brightness value of the first reference spots as the preset brightness. The processor 200 may further be configured to calculate an actual ratio between each measurement spot and the preset brightness; and classify the measurement spots with the actual ratio greater than the preset ratio as the first measurement spots; and classify the measurement spots with the actual ratio less than the preset ratio as the second measurement spots. The processor 200 may further be configured to calculate offsets of the first measurement spots relative to the first reference spots and offsets of the second measurement spots relative to the second reference spots; and calculate depth data based on the offsets to acquire the depth image.

In this calculation method, the processor 200 may need to calibrate the first reference image and the second reference image. In detail, the processor 200 first controls the structured light projector 21 to emit the structured light to the calibration board in a scene without the obstruction of the display screen 10, and then controls the structured light camera 22 to receive the structured light that directly enters after being reflected by the calibration board to acquire the first reference image. The reference spots included in the first reference image may be the first reference spots. The first reference spots may be formed when the laser light is diffracted by the diffractive optical element 213 when it passes through the diffractive optical element 213, directly emitted to the calibration board, and modulated and reflected by the calibration board. Subsequently, the processor 200 calibrates the second reference image based on the first calculation method, that is, the calibration method of the reference image in the action 031. At this time, the second reference image may include both first reference spots corresponding to the first measurement spots and second reference spots corresponding to the second measurement spots. In the calibration scene of the first reference image and the second reference image, the relative position between the calibration board and the structured light projector 21 or between the calibration board and the structured light camera 22 remains unchanged. The relative position between the structured light projector 21 and the structured light camera 22 also remains unchanged. Subsequently, the processor 200 may mark coordinates of the first reference spots in the first reference image, and filter out the first reference spots in the second reference image based on the coordinates of the first reference spots. The remaining reference spots in the second reference image may be the second reference spots. In this way, the processor 200 may distinguish the first reference spots and the second reference spots among all the reference spots in the second reference image.

In the subsequent calculation of the depth data, the measurement spots in the speckle image also need to be distinguished. In detail, the first measurement spots and the second measurement spots may be distinguished by brightness. It may be understood that the first measurement spots are formed when the laser light is diffracted by the diffractive optical element 213, and the second measurement spots are formed when the laser light is diffracted by the diffractive optical element 213, and then diffracted by the display screen 10. The times of diffraction of the laser light for forming the second measurement spots is more than the times of diffraction of the laser light for forming the first measurement spots. Therefore, the energy loss of the laser light for forming the first measurement spots is smaller, and the energy loss of the laser light for forming the second measurement spots is larger. The brightness of the second measurement spots will be lower than the brightness of the first measurement spots. In this way, it is feasible to distinguish the first measurement spots and the second measurement spots based on the brightness. After the calibration of the reference images is completed, it is necessary to further calibrate the preset brightness and the preset ratio for distinguishing the first measurement spots from the second measurement spots. In detail, after the processor 200 distinguishes the first reference spots and the second reference spots, the processor 200 may calculate the average brightness value of the first reference spots in the second reference image, and calculate the average brightness value of the second reference spots in the second reference image. Subsequently, the processor 200 may use the average brightness value of the first reference spots as the preset brightness, and calculate the ratio between the average brightness value of the second reference spots and the average brightness value of the first reference spots as the preset ratio.

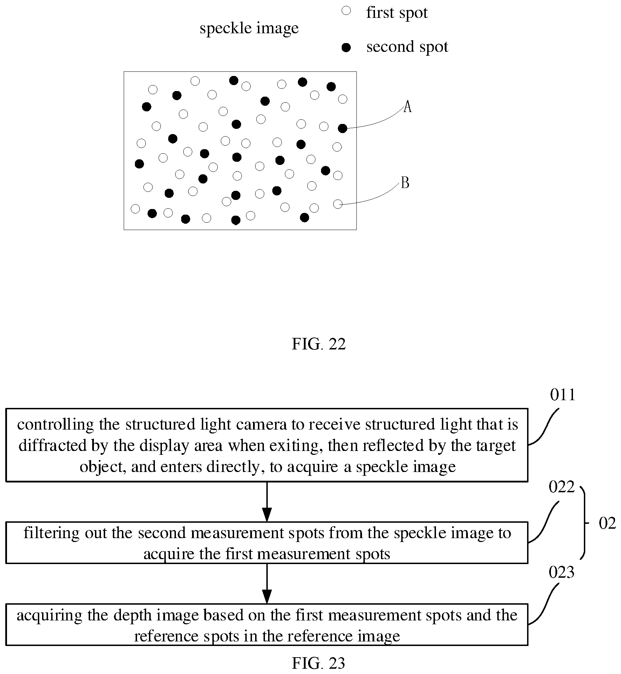

In the subsequent depth data calculation, the processor 200 may first calculate the brightness of each measurement spot. Subsequently, the processor 200 may calculate the actual ratio between each measurement spot and the preset brightness, and classify the measurement spots with the actual ratio greater than or equal to the preset ratio as the first measurement spots, and classify the measurement spots with the actual ratio less than the preset ratio as the second measurement spots. Therefore, the first measurement spots and the second measurement spots are distinguished. For example, as illustrated in FIG. 22, it is assumed that the preset ratio is 0.8. The speckle image captured by the structured light camera 22 in actual use may include the measurement spot A and the measurement spot B. If the ratio between the brightness of the measurement spot A and the preset brightness is less than 0.8, the measurement spot A is classified as the second measurement spot. At this time, it means that the measurement spot A is a measurement spot formed when the laser light is diffracted by the diffractive optical element 213, then diffracted by the display screen 10, and reflected by the target object. If the ratio between the brightness of the measurement spot B and the preset brightness is greater than or equal to 0.8, the measurement spot B may be classified into the first measurement spot. The measurement spot B is a measurement spot formed when the laser light is diffracted by the diffractive optical element 213 and reflected by the target object. The preset ratio 0.8 is only an example.

After the processor 200 distinguishes the first measurement spots and the second measurement spots, since the first reference spots and the second reference spots in the second reference image have also been distinguished, the processor 200 may use the speckle image and the second reference image to calculate the depth data. In detail, the processor 200 first may calculate the offsets of the first measurement spots relative to the first reference spots, and the offsets of the second measurement spots relative to the second reference spots. Subsequently, the processor 200 may calculate pieces of depth data based on the offsets. The pieces of depth data may form the depth image.

Compared with the first calculation method, the second calculation method distinguishes the first measurement spots from the second measurement spots, and distinguishes the first reference spots from the second reference spots. Therefore, the more accurate offsets may be acquired based on the more accurate correspondence relationship between the first measurement spots and the first reference spots, and the more accurate correspondence relationship between the second measurement spots and the second reference spots. Furthermore, the more accurate depth data may be acquired. Therefore, the accuracy of the acquired depth image may be improved.

In some embodiments, the preset brightness and the preset ratio may be determined by the ambient brightness of the scene and the luminous power of the structured light projector 21. It may be understood that there may be an infrared light component in the ambient light. This infrared light component in the ambient light may be superimposed on the measurement spots to increase the brightness of the measurement spots. The luminous power of the structured light projector 21 is closely related to the brightness of the measurement spots. When the luminous power of the structured light projector 21 is larger, the brightness of the measurement spots may be correspondingly higher. When the luminous power of the structured light projector 21 is smaller, the brightness of the measurement spots may be correspondingly lower. Therefore, different ambient brightness and luminous power should have different preset brightness and preset ratio. The preset brightness and preset ratio under different ambient brightness and different luminous power may also be calibrated based on the calibration process of the action 032 and the action 033. In the calibration process, the ambient brightness of the calibration scene and the luminous power of the structured light projector 21 are changed to acquire the preset brightness and the preset ratio corresponding to the ambient brightness and luminous power. The luminous power of the structured light projector 21 is changed by changing the driving current of the light source 211. The correspondence among the ambient brightness, the luminous power, the preset brightness, and the preset ratio may be stored in the memory 300 (illustrated in FIG. 1) in the form of a mapping table. When calculating the depth image in the second calculation method, the processor 200 first acquires the ambient brightness of the scene and the luminous power, and searches the mapping table for the preset brightness and preset ratio corresponding to the current ambient brightness and luminous power. Then, the first measurement spots and the second measurement spots are distinguished based on the searched preset brightness and preset ratio. In this way, the accuracy of distinguishing the first measurement spots and the second measurement spots may be improved.

In some embodiments, the diffractive optical element 213 may be configured to diffract the laser light emitted by the light source 211 of the structured light projector 21 to increase the number of measurement spots or reference spots, and may also be configured to compensate the brightness uniformity of the structured light diffracted by the display screen 10. Therefore, the brightness uniformity of the spots in the speckle pattern projected into the scene may be better, which is beneficial to improve the accuracy of acquiring the depth image. In detail, the convex or concave structure in the diffractive optical element 213 may be arranged densely on the middle and sparse on both edges (sides). Therefore, the diffraction effect of the middle part of the diffractive optical element 213 is stronger than that of the edge part of the diffractive optical element 213. In this way, the laser light that enters on the middle part of the diffractive optical element 213 may be diffracted out of more light beams, and the laser light that enters on the edge part of the diffractive optical element 213 may be diffracted out of fewer light beams, thereby causing the brightness of the speckle pattern projected on the scene has the high uniformity.

In summary, in the method for acquiring the image according to embodiments of the disclosure, the structured light projector 21 and the structured light camera 22 are both located on the side of the rear surface 13 of the display screen 10, and the processor 200 may directly calculate the depth image based on the first measurement spots and the second measurement spots when the structured light received by the structured light camera 22 is the modulated structured light passing through the through slot 14. Compared with the method of calculating the depth image using the first measurement spots, the diffraction effect of the display screen 10 increases the number of the measurement spots and the randomness of the arrangement of the measurement spots, which is helpful to improve the accuracy of acquiring the depth image. Further, in the method for acquiring the image according to embodiments of the disclosure, it may appropriately simplify the complexity of the structure of the diffraction grating in the diffractive optical element 213, and instead use the diffraction effect of the display screen 10 to increase the number of the measurement spots and the randomness of the arrangement of the measurement spots, which ensures the accuracy of acquiring the depth image while simplifies the manufacturing process of the structured light projector 21.

With reference to FIG. 1, FIG. 5, FIG. 8, and FIG. 23, in some embodiments, the structured light projector 21 and the structured light camera 22 may be arranged on the side of the rear surface 13 of the display screen 10 together. The display screen 10 may be provided with the through slot 14 that is aligned with the light incident surface of the structured light camera 22. The structured light camera 22 may receive the modulated structured light passing through the through slot 14. At this point, the action 01 may include the following.

011: the structured light camera 22 is controlled to receive structured light that is diffracted by the display area 11 when exiting, then reflected by the target object, and enters directly, to acquire a speckle image. The speckle image may include a plurality of measurement spots. The plurality of measurement spots may include first measurement spots formed when the laser light is diffracted by the diffractive optical element 213 and reflected by the target object, and second measurement spots formed when the laser light is diffracted by the diffractive optical element 213, then diffracted by the display screen 10, and reflected by the target object. In detail, the first measurement spots may be formed when the laser light is diffracted by the diffractive optical element 213, not diffracted by the display screen 10 when passing through the display screen 10 (that is, the laser light is directly projected to the target object without encountering the microscopic gaps), and modulated and reflected by the target object. The second measurement spots may be formed when the laser light is diffracted by the diffractive optical element 213, diffracted by the display screen 10 when passing through the display screen 10 (that is, the laser light is projected to the target object after encountering the microscopic gaps), and modulated and reflected by the target object.

The action 02 may include the following.

022: the second measurement spots are filtered out from the speckle image to acquire the first measurement spots.

023: the depth image is acquired based on the first measurement spots and the reference spots in the reference image.

With reference to FIG. 17 again, the action 011 may be implemented by the controlling module 401. The action 022 and the action 023 both may be implemented by the calculating module 402.

With reference to FIG. 1 again, the actions 011, 022, and 023 all may be implemented by the processor 200. In other words, the processor 200 may be configured to control the structured light camera 22 to receive structured light that is diffracted by the display area 11 when exiting, then reflected by the target object, and enters directly, to acquire a speckle image; filter out the second measurement spots from the speckle image to acquire the first measurement spots; and acquire the depth image based on the first measurement spots and the reference spots in the reference image.

In detail, when the structured light projector 21 and the structured light camera 22 are arranged on the side of the rear surface 13 of the display screen 10, and the display screen 10 is provided with the through slot 14 that is aligned with the light incident surface of the structured light camera 22, the structured light camera 22 may capture the speckle image including the first measurement spots and the second measurement spots. In the subsequent calculation of the depth image, the processor 200 may filter out the second measurement spots from the speckle image, and calculate the depth image with the reference spots in the reference image based on the remaining first measurement spots. At this time, the reference spots in the reference image should include the first reference spots formed by the laser light being diffracted by the diffractive optical element 213 and reflected by the calibration object. Therefore, the influence of the display screen 10 on the structured light may be eliminated by filtering out the second measurement spots from the speckle image. Therefore, it may be ensured that the depth image acquired by the electronic device 1000 has a relatively higher accuracy under the condition that the electronic device 1000 has a relatively higher screen-to-body ratio.

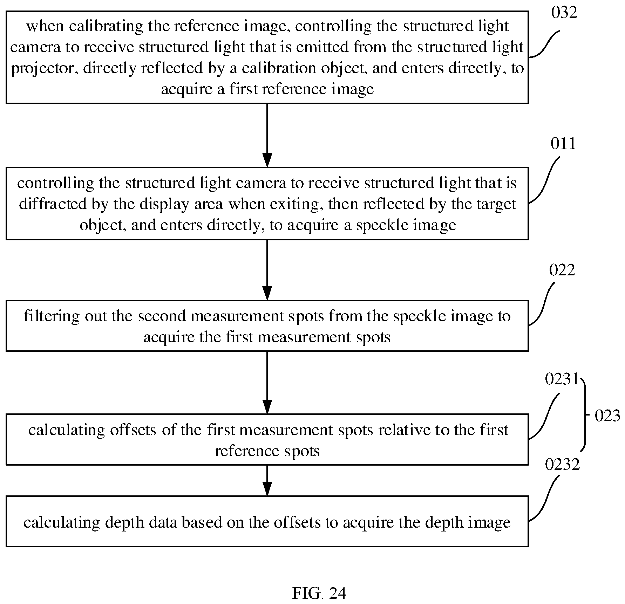

In other words, with reference to FIG. 24, the method for acquiring the image may include the following.

032: when calibrating the reference image, the structured light camera 22 is controlled to receive structured light that is emitted from the structured light projector 21, directly reflected by a calibration object, and enters directly, to acquire a first reference image. The first reference image may include a plurality of reference spots. The plurality of reference spots may include first reference spots formed by the laser light being diffracted by the diffractive optical element 213 and reflected by the calibration object.

The action 023 may include the following.
0231: offsets of the first measurement spots relative to the first reference spots are calculated.
0232: depth data is calculated based on the offsets to acquire the depth image.

With reference to FIG. 17 again, the action 032 may be implemented by the controlling module 401. The action 0231 and the action 0232 both may be implemented by the calculating module 402.

With reference to FIG. 1 again, the actions 032, 0231, and 0232 may be implemented by the processor 200. That is, the processor 200 may be further configured to, when calibrating the reference image, control the structured light camera to receive structured light that is emitted from the structured light projector 21, directly reflected by a calibration object, and enters directly, to acquire a first reference image; calculate offsets of the first measurement spots relative to the first reference spots; and calculate the depth data based on the offsets to acquire the depth image.

In detail, after the processor 200 filters out the second measurement spots, the first measurement spots remain in the speckle image. The depth image should be calculated based in the speckle image and the first reference image containing the first reference spots corresponding to the first measurement spots. The calibration process of the first reference image is consistent with the calibration process of placing the structured light projector 21 in a scene without the obstruction of the display screen 10, which is not repeated herein. The reference spots in the first reference image captured by the structured light may be the first reference spots formed by the laser light being diffracted by the diffractive optical element 213 and reflected by the calibration object. In this way, the processor 200 may calculate the offsets of the first measurement spots relative to the first reference spots, and then calculate pieces of depth data based on the offsets to obtain the depth image.

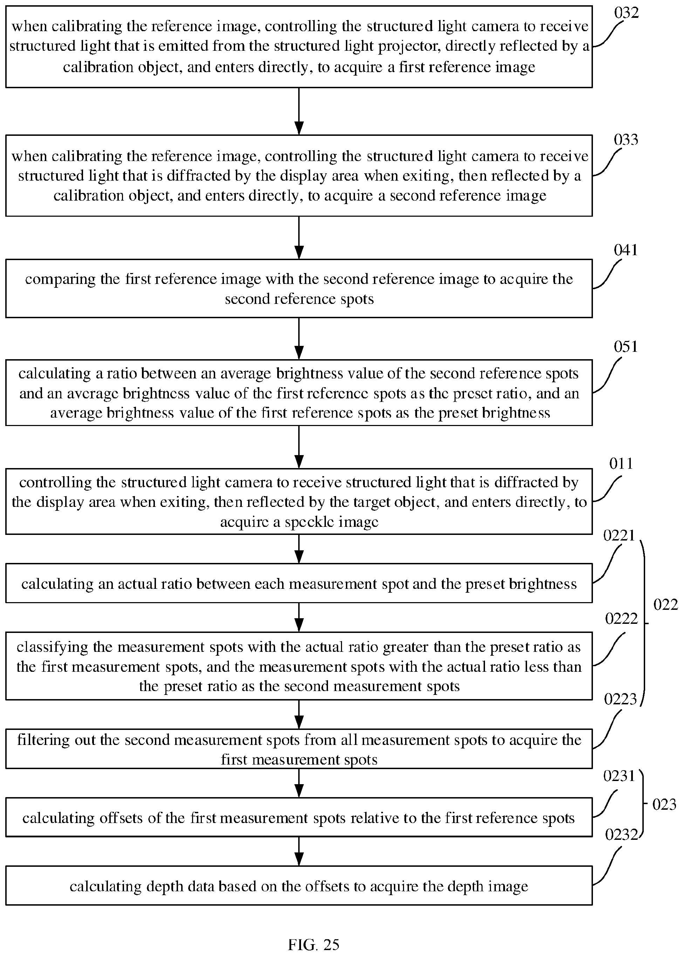

The processor 200 may filter out the second measurement spots through the brightness. In other words, with reference to FIG. 25, in some embodiments, the method for acquiring the image may include the following.

032: when calibrating the reference image, the structured light camera 22 is controlled to receive structured light that is emitted from the structured light projector 21, directly reflected by a calibration object, and enters directly, to acquire a first reference image. The first reference image may include a plurality of reference spots. The plurality of reference spots may include first reference spots formed by the laser light being diffracted by the diffractive optical element 213 and reflected by the calibration object.

033: when calibrating the reference image, the structured light camera 22 is controlled to receive structured light that is diffracted by the display area 11 when exiting, then reflected by a calibration object, and enters directly, to acquire a second reference image. The second reference image may include a plurality of reference spots. The plurality of reference spots may include the first reference spots formed by the laser light being diffracted by the diffractive optical element 213 and reflected by the calibration object, and second reference spots formed by the laser light being diffracted by the diffractive optical element 213, then diffracted by the display screen 10, and reflected by the calibration object.

041: the first reference image is compared with the second reference image to acquire the second reference spots.

051: a ratio between an average brightness value of the second reference spots and an average brightness value of the first reference spots is calculated as the preset ratio, and an average brightness value of the first reference spots is calculated as the preset brightness.

The action 022 may include the following.
0221: an actual ratio between each measurement spot and the preset brightness is calculated.
0222: the measurement spots with the actual ratio greater than the preset ratio are classified as the first measurement spot, and the measurement spots with the actual ratio less than the preset ratio are classified as the second measurement spots.
0223: the second measurement spots are filtered out from all measurement spots to acquire the first measurement spots.

With reference to FIG. 17 again, the action 032 and the action 033 may be implemented by the controlling module 401. The actions 041, 051, 0221, 0222, and 0223 all may be implemented by the calculating module 401.

With reference to FIG. 1 again, the actions 032, 033, 041, 051, 0221, 0222, and 0223 all may be implemented by the processor 200. That is, the processor 200 may be further configured to, when calibrating the reference image, control the structured light camera 22 to receive structured light that is emitted from the structured light projector 21, directly reflected by a calibration object, and enters directly, to acquire a first reference image; and when calibrating the reference image, control the structured light camera 22 to receive structured light that is diffracted by the display area 11 when exiting, then reflected by a calibration object, and enters directly, to acquire a second reference image. The processor 200 may also be configured to compare the first reference image with the second reference image to acquire the second reference spots; calculate a ratio between an average brightness value of the second reference spots and an average brightness value of the first reference spots as the preset ratio, and calculate an average brightness value of the first reference spots as the preset brightness. The processor 200 may also be configured to calculate an actual ratio between each measurement spot and the preset brightness; classify the measurement spots with the actual ratio greater than the preset ratio as the first measurement spots; classify the measurement spots with the actual ratio less than the preset ratio as the second measurement spots; and filter out the second measurement spots from all measurement spots to acquire the first measurement spots.

The process described in the action 032 for calibrating the first reference image is consistent with the calibration process of the scene where the structured light projector 21 is arranged without the obstruction of the display screen 10 in the aforementioned action 032, which is not repeated herein. The process described in the action 033 for calibrating the second reference image is consistent with the calibration process of the scene where the structured light projector 21 and the structured light camera 22 are arranged on the side of the rear surface 13 of the display screen 10, and the light incident surface of the structured light camera 22 is aligned with the through slot 14 of the display screen 10, in the aforementioned action 033, which is not repeated herein.

After obtaining the first reference image and the second reference image, the processor 200 may determine the first reference spots in the second reference image using the same manner as the foregoing action 041, that is, based on the coordinates of the first reference spots in the first reference image, and the remaining reference spots are the second reference spots, so that the first reference spots and the second reference spots may be distinguished. Subsequently, the processor 200 may calibrate and calculate the preset brightness and the preset ratio based on the distinguished first reference spots and second reference spots by the same method as the aforementioned action 051.

Similarly, in the subsequent calculation of the depth image, the processor 200 may employ the same manner as the foregoing action 061 and the foregoing action 071, that is, distinguish the first measurement spots from the second measurement spots based on the calibrated preset ratio and preset brightness. Subsequently, the processor 200 may filter out the second measurement spots to remain the first measurement spots, calculate the offsets of the first measurement spots relative to the first reference spots, and finally calculate the depth data based on the offsets to acquire the depth image.

In some embodiments, the preset brightness and the preset ratio may also be determined by the ambient brightness of the scene and the luminous power of the structured light projector 21. In this way, the accuracy of filtering out the second measurement spots may be improved.

In some embodiments, the diffractive optical element 213 may be configured to diffract the laser light emitted by the light source 211 of the structured light projector 21 to increase the number of measurement spots or reference spots, and may also be configured to compensate the brightness uniformity of the structured light diffracted by the display screen 10. Therefore, the brightness uniformity of the spots in the speckle pattern projected into the scene may be better, which is beneficial to improve the accuracy of acquiring the depth image.

In summary, in the method for acquiring the image according to embodiments of the disclosure, when the structured light projector 21 and the structured light camera 22 are both arranged under the display screen 10, and the structured light camera 22 receives the modulated structured light passing through the through slot 14, the second measurement spots may be filtered out first, and the depth image may be calculated based on the remaining first measurement spots. Therefore, the amount of data processing of the processor 200 may be reduced and it is beneficial to speed up the process of acquiring the depth image.

With reference to FIG. 1, FIG. 3, and FIG. 26, in some embodiments, the structured light projector 21 and the structured light camera 22 both may be arranged on the side of the rear surface 13 of the display screen 10, and the display screen 10 may be not provided with the through slot 14. The structured light camera 22 may receive the modulated structured light that passes through the display area 11 twice. At this point, the action 01 may include the following.

012: the structured light camera 22 is controlled to receive structured light that is diffracted by the display area 11 when exiting, then reflected by a target object, and diffracted by the display area 11 again when entering to acquire a speckle image. The speckle image may include a plurality of measurement spots. The plurality of measurement spots may include first measurement spots formed when laser light is diffracted by the diffractive optical element 213 (illustrated in FIG. 4) and reflected by the target object, second measurement spots formed when the laser light is diffracted by the diffractive optical element 213, then diffracted by the display screen 10, and reflected by the target object, and third measurement spots formed when the laser light is diffracted by the diffractive optical element 213, diffracted by the display screen 10, then reflected by the target object, and diffracted by the display screen 10 again. In detail, the first measurement spots may be formed when the laser light is diffracted by the diffractive optical element 213, not diffracted by the display screen 10 when passing through the display screen 10 (that is, it is directly projected to the target object without encountering the microscopic gaps), and modulated and reflected by the target object. The second measurement spots may be formed when the laser light is diffracted by the diffractive optical element 213, diffracted by the display screen 10 when passing through the display screen 10 (that is, it is projected to the target object after encountering the microscopic gaps), modulated and reflected by the target object, and not diffracted by the display screen 10 when passing through the display screen 10 again. The third measurement spots may be formed when the laser light is diffracted by the diffractive optical element 213, diffracted by the display screen 10 when passing through the display screen 10 (that is, it is projected to the target object after encountering the microscopic gaps), modulated and reflected by the target object, and diffracted by the microscopic gaps in the display screen 10 again when passing through the display screen 10 again.

The action 02 may include the following.

024: the depth image is calculated based on the first measurement spots, the second measurement spots, and the third measurement spots in the speckle image, and reference spots in a reference image.

With reference to FIG. 17 again, the action 012 may be implemented by the controlling module 401. The action 024 may be implemented by the calculating module 402.

With reference to FIG. 1 again, the action 012 and the action 024 both may be implemented by the processor 200. In other words, the processor 200 may further be configured to control the structured light camera 22 to receive structured light that is diffracted by the display area 11 when exiting, then reflected by a target object, and diffracted by the display area 11 again when entering to acquire a speckle image. The processor 200 may further be configured to calculate the depth image based on the first measurement spots, the second measurement spots, and the third measurement spots in the speckle image, and reference spots in a reference image.

In detail, with reference to FIG. 4, the light source 211 of the structured light projector 21 may emit the laser light. The laser light is diffracted by the diffractive optical element 213 and then forms the structured light to be projected into the scene to form a speckle pattern. The speckle pattern may include a plurality of spots. These spots may be formed when the laser light is diffracted by the diffractive optical element 213.

When the structured light camera 22 is imaging, the structured light camera 22 may receive the structured light reflected by the target object in the scene to form the speckle image. In some embodiment of the disclosure, since the display screen 10 is not provided with the through slot 14, the laser light that is diffracted by the diffractive optical element 213 and then by the display screen 10 and modulated by the target object to reflect back, may be diffracted again by the display area 11 in the display screen 10 when passing through the display screen 10. The structured light camera 22 may receive the structured light that is diffracted by the display area 11 when exiting and passing through the display area 11, then reflected by the target object, and diffracted by the display area 11 again when passing through the display area 11 again. The speckle image formed may include a plurality of measurement spots. The plurality of measurement spots may include the first measurement spots formed when the laser light is diffracted by the diffractive optical element 213 and reflected by the target object, the second measurement spots formed when the laser light is diffracted by the diffractive optical element 213, then diffracted by the display screen 10, and reflected by the target object, and the third measurement spots formed when the laser light is diffracted by the diffractive optical element 213, diffracted by the display screen 10, then reflected by the target object, and diffracted by the display screen again.

After the structured light camera 22 captures the speckle image, the processor 200 may directly calculate the depth image based on the first measurement spots, second measurement spots, and third measurement spots in the speckle image and the reference image. At this time, the reference spots in the reference image need to include first reference spots, second reference spots, and third reference spots. The depth image calculation method may include the following two manners.

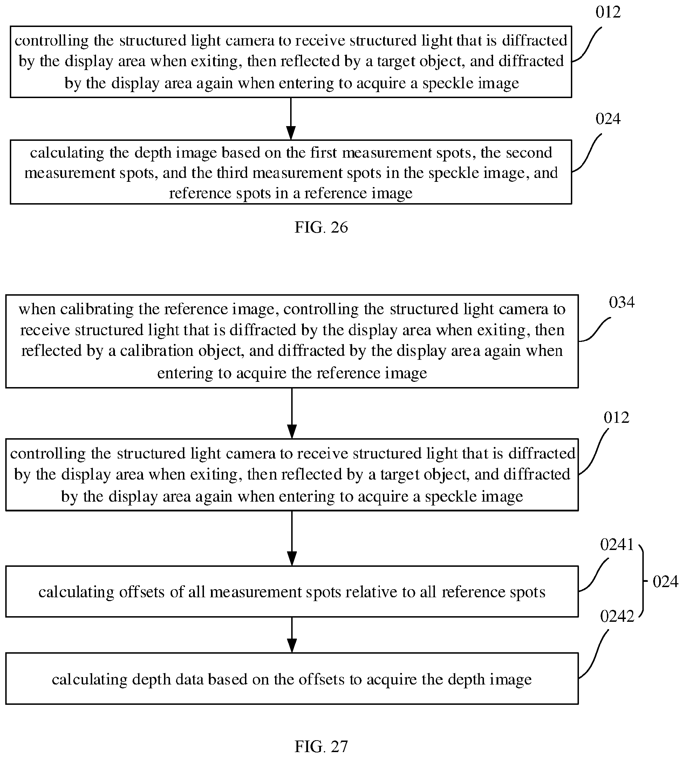

With reference to FIG. 27, in one calculation method, the action 024 may include the following.
0241: offsets of all measurement spots relative to all reference spots are calculated.
0242: depth data is calculated based on the offsets to acquire the depth image.

Correspondingly, the method for acquiring the image may further include the following.

034: when calibrating the reference image, the structured light camera 22 is controlled to receive structured light that is diffracted by the display area 11 when exiting, then reflected by a calibration object, and diffracted by the display area 11 again when entering to acquire the reference image. The reference image may include references spots.

With reference to FIG. 17 again, the action 0241 and the action 0242 may be implemented by the calculating module 401. The action 034 may be implemented by the controlling module 402.

With reference to FIG. 1 again, the actions 0241, 0242, and 034 may be implemented by the processor 200. In other words, the processor 200 may further be configured to calculate offsets of all measurement spots relative to all reference spots, and calculate the depth data based on the offsets to acquire the depth image. The processor 200 may further be configured to, when calibrating the reference image, control the structured light camera 22 to receive structured light that is diffracted by the display area 11 when exiting, then reflected by a calibration object, and diffracted by the display area 11 again when entering to acquire the reference image. The reference image may include references spots.

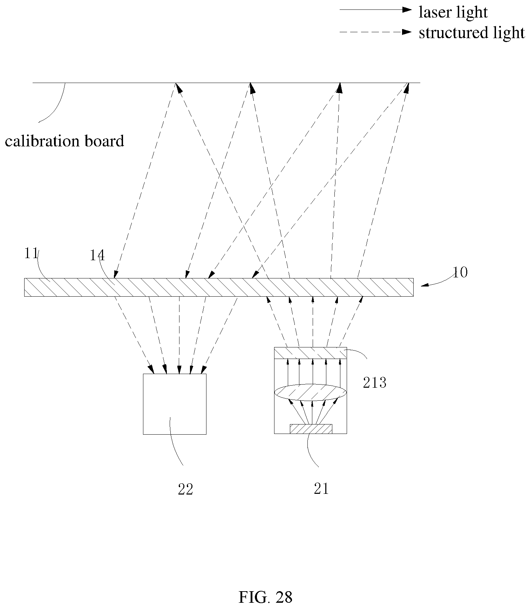

In detail, with reference to FIG. 28, in the process of calibrating the reference image, the structured light projector 21 and the structured light camera 22 both are arranged on the side of the rear surface 13 of the display screen 10, and the display screen 10 is not provided with the through slot 14. In this way, in the calibration scene and the actual use scene, the positions of the structured light projector 21 and the structured light camera 22 relative to the display screen 10 are consistent. In the calibration scene, the processor 200 may control the structured light projector 21 to emit the structured light. After passing through the display area 11, the structured light is projected to the calibration board separated from the structured light assembly 20 by a predetermined distance. The structured light reflected by the calibration board may pass through the display area 11 again and be received by the structured light camera 22. At this time, the structured light camera 22 may receive the structured light emitted by the structured light projector 21, diffracted by the display screen 10, reflected by the calibration board, diffracted by the display screen 10 again and enters. The reference image formed may include reference spots. The reference spots may include first reference spots corresponding to the first measurement spots, second reference spots corresponding to the second measurement spots, and third reference spots corresponding to the third measurement spots. The first reference spots may be formed when the laser light is diffracted by the diffractive optical element 213 when passing through the diffractive optical element 213, not diffracted by the display screen 10 when passing through the display screen 10, reflected by the calibration object, and still not diffracted by the display screen 10 when passing through the display screen 10 again. The second reference spots may be formed when the laser light is diffracted by the diffractive optical element 213 when passing through the diffractive optical element 213, diffracted by the display screen 10 when passing through the display screen 10, reflected by the calibration object, and not diffracted by the display screen 10 when passing through the display screen 10 again. The third reference spots may be formed when the laser light is diffracted by the diffractive optical element 213 when passing through the diffractive optical element 213, diffracted by the display screen 10 when passing through the display screen 10, reflected by the calibration object, and diffracted by the display screen 10 when passing through the display screen 10 again.

Although the speckle image may include the first measurement spots, the second measurement spots, and the third measurement spots at the same time, the reference image includes the first reference spots, the second reference spots, and the third reference spots at the same time, the processor 200 may not distinguish the first measurement spots, the second measurement spots, and the third measurement spots in the speckle image, and also not distinguish the first reference spots, the second reference spots and the third reference spots in the reference image in this calculation method. The processor 200 may calculate the depth image based on all the measurements spots and all the reference spots. In detail, the processor 200 first calculates the offsets of all measurement spots relative to all reference spots, and then calculates pieces of depth data based on the offsets, so as to acquire the depth image.

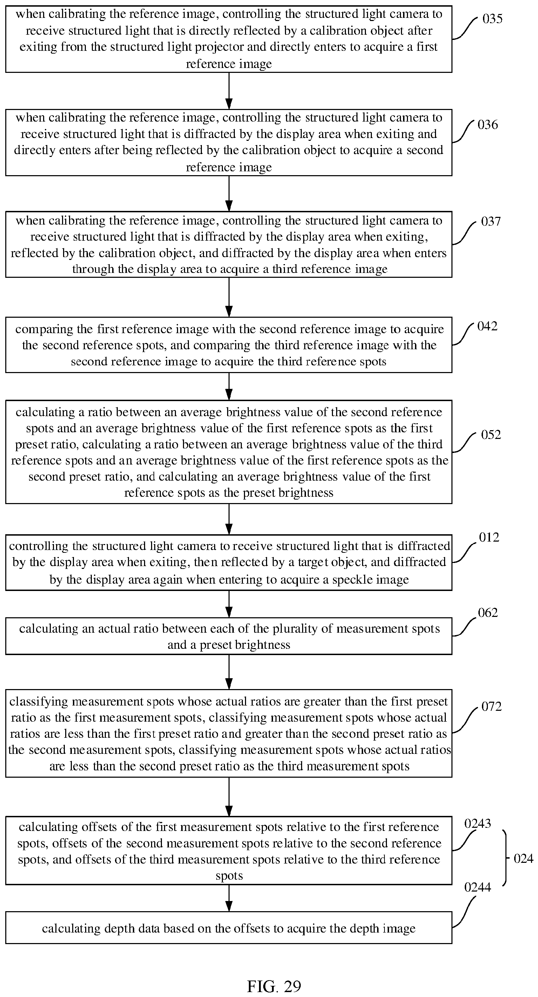

With reference to FIG. 29, in another calculation method, the action 024 may include the following.

0243: offsets of the first measurement spots relative to the first reference spots are calculated, offsets of the second measurement spots relative to the second reference spots are calculated, and offsets of the third measurement spots relative to the third reference spots are calculated.

0244: depth data is calculated based on the offsets to acquire the depth image.

Correspondingly, the method for acquiring the image may further include the following.

035: when calibrating the reference image, the structured light camera 22 is controlled to receive structured light that is directly reflected by a calibration object after exiting from the structured light projector 21 and directly enters to acquire a first reference image. The first reference image may include a plurality of reference spots. The plurality of reference spots may include first reference spots formed when the laser light is diffracted by the diffractive optical element 213 and reflected by the calibration object.

036: when calibrating the reference image, the structured light camera 22 is controlled to receive structured light that is diffracted by the display area 11 when exiting and directly enters after being reflected by the calibration object to acquire a second reference image. The second reference image may include a plurality of reference spots. The plurality of reference spots may include first reference spots formed when the laser light is diffracted by the diffractive optical element 213 and reflected by the calibration object, and second reference spots formed when the laser light is diffracted by the diffractive optical element 213, diffracted by the display screen 11, and reflected by the calibration object.

037: when calibrating the reference image, the structured light camera 22 is controlled to receive structured light that is diffracted by the display area 11 when exiting, reflected by the calibration object, and diffracted by the display area 11 when enters through the display area 11 to acquire a third reference image. The third reference image may include a plurality of reference spots. The plurality of reference spots may include first reference spots formed when the laser light is diffracted by the diffractive optical element 213 and reflected by the calibration object, second reference spots formed when the laser light is diffracted by the diffractive optical element 213, diffracted by the display screen 11, and reflected by the calibration object, and third reference spots formed when the laser light is diffracted by the diffractive optical element 213, diffracted by the display screen 11, reflected by the calibration object, and diffracted by the display screen 11 again.

042: the first reference image is compared with the second reference image to acquire the second reference spots, and the third reference image is compared with the second reference image to acquire the third reference spots.

052: a ratio between an average brightness value of the second reference spots and an average brightness value of the first reference spots is calculated as the first preset ratio, a ratio between an average brightness value of the third reference spots and an average brightness value of the first reference spots is calculated as the second preset ratio, and an average brightness value of the first reference spots is calculated as the preset brightness.

062: an actual ratio between each of the plurality of measurement spots and a preset brightness is calculated.

072: measurement spots whose actual ratios are greater than the first preset ratio are classified as the first measurement spots, measurement spots whose actual ratios are less than the first preset ratio and greater than the second preset ratio are classified as the second measurement spots, measurement spots whose actual ratios are less than the second preset ratio are classified as the third measurement spots.

With reference to FIG. 17, the actions 0243, 0244, 042, 052, 062, and 072 all may be implemented by the calculating module 402. The actions 035, 036, and 037 all may be implemented by the controlling module 401.

With reference to FIG. 1, the actions 0243, 0244, 035, 036, 037, 042, 052, 062, and 072 all may be implemented by the processor 200. In other words, the processor 200 may further be configured to, when calibrating the reference image, control the structured light camera 22 to receive structured light that is directly reflected by a calibration object after exiting from the structured light projector 21 and directly enters to acquire a first reference image; when calibrating the reference image, control the structured light camera 22 to receive structured light that is diffracted by the display area 11 when exiting and directly enters after being reflected by the calibration object to acquire a second reference image; and when calibrating the reference image, control the structured light camera to receive structured light that is diffracted by the display area 11 when exiting, reflected by the calibration object, and diffracted by the display area 11 when enters through the display area 11 to acquire a third reference image. The processor 200 may further be configured to compare the first reference image with the second reference image to acquire the second reference spots; compare the third reference image with the second reference image to acquire the third reference spots; calculate a ratio between an average brightness value of the second reference spots and an average brightness value of the first reference spots as the first preset ratio, calculate a ratio between an average brightness value of the third reference spots and an average brightness value of the first reference spots as the second preset ratio, and calculate an average brightness value of the first reference spots as the preset brightness. The processor 200 may further be configured to calculate an actual ratio between each of the plurality of measurement spots and a preset brightness; classify measurement spots whose actual ratios are greater than the first preset ratio as the first measurement spots, classify measurement spots whose actual ratios are less than the first preset ratio and greater than the second preset ratio as the second measurement spots, and classify measurement spots whose actual ratios are less than the second preset ratio as the third measurement spots.

In this calculation method, the processor 200 needs to calibrate the first reference image, the second reference image, and the third reference image.

In detail, the processor 200 first controls the structured light projector 21 to emit structured light to the calibration board in a scene without the display screen 10, and then controls the structured light camera 22 to receive the structured light directly enters after being reflected by the calibration board to acquire the first reference image. The reference spots included in the first reference image are the first reference spots. The first reference spots may be formed when the laser light is diffracted by the diffractive optical element 213 when passing through the diffractive optical element 213, then directly emitted to the calibration board and then modulated and reflected by the calibration board.

Subsequently, the structured light projector 21 and the structured light camera 22 both are arranged on the side of the rear surface 13 of the display screen 10, and the display screen 10 is provided with the through slot 14 aligned with the light incident surface of the structured light camera 22. In a scene where the structured light camera 22 may receive the modulated structured light passing through the through slot 14, the processor 200 controls the structured light projector 21 to emit structured light. The structured light passes through the display area 11 and is projected to the calibration board separated from the structured light assembly 20 by a predetermined distance. The structured light reflected by the calibration board passes through the through slot 14 and is received by the structured light camera 22 to acquire the second reference image. The reference spots in the second reference image may include the first reference spots and the second reference spots at the same time. The first reference spots may be formed when the laser light is diffracted by the diffractive optical element 213 when it passes through the diffractive optical element 213, not diffracted by the display screen 10 when it passes through the display screen 10, and modulated and reflected by the calibration board. The second reference spots may be formed when the laser light is diffracted by the diffractive optical element 213 for the first time when it passes through the diffractive optical element 213, diffracted by the display screen 10 when it passes through the display screen 10 for the second time, and modulated and reflected by the calibration board.

Subsequently the processor 200 calibrates the third reference image based on the first calculation method, that is, the method for calibrating the reference image described in the action 034. At this time, the third reference image may include the first reference spots corresponding to the first measurement spots, the second reference spots corresponding to the second measurement spots, and the third reference spots corresponding to the third measurement spots.

In the calibration scene of the first reference image, the second reference image, and the third reference image, the positions of the calibration board relative to the structured light projector 21 and the structured light camera 22 remain unchanged. The position of the structured light projector 21 and the structured light camera 22 remains unchanged.

Subsequently, the processor 200 marks the first coordinates of the first reference spots in the first reference image, and then filters out the first reference spots from the second reference image based on the coordinates of the first reference spots. The remaining reference spots in the second reference image may be the second reference spots. The processor 200 marks the second coordinates of the second reference spots in the second reference image. The processor 200 filters out the first reference spots and the second reference spots from the third reference image based on the first coordinates and the second coordinates in the second reference image respectively. The remaining reference spots in the third reference image may be the third reference spots. In this way, the processor 200 may distinguish the first reference spots, the second reference spots, and the third reference spots among all the reference spots in the third reference image.

The measurement spots in the speckle image also need to be distinguished in the subsequent calculation of the depth data. In detail, the first measurement spots, the second measurement spots, and the third measurement spots may be distinguished by brightness. It may be understood that the first measurement spots may be formed when the laser light is diffracted by the diffractive optical element 213 for the first time, the second measurement spots may be formed when the laser light is diffracted by the diffractive optical element 213 for the first time and then diffracted by the display screen 10 for the second time, and the third measurement spots may be formed when the laser light is diffracted by the diffractive optical element 213 and then diffracted by the display screen 10 for the second time and the third time. The times of diffraction of the laser light for forming the second measurement spots is more than the times of diffraction of the laser light for forming the first measurement spots. The times of diffraction of the laser light for forming the third measurement spots is more than the times of diffraction of the laser light for forming the second measurement spots. Therefore, the energy loss of the laser light for forming the first measurement spots is smallest, and the energy loss of the laser light for forming the third measurement spots is largest. The brightness of the second measurement spots will be lower than the brightness of the first measurement spots. The brightness of the third measurement spots will be lower than the brightness of the second measurement spots. In this way, it is feasible to distinguish the first measurement spots, the second measurement spots, and the third measurement spots based on the brightness. After the calibration of the reference images is completed, it is necessary to further calibrate the preset brightness and the preset ratio for distinguishing the first measurement spots, the second measurement spots, and the third measurement spots. In detail, after the processor 200 distinguishes the first reference spots, the second reference spots, and the third reference spots, the processor 200 may calculate the average brightness value of the first reference spots in the third reference image, the average brightness value of the second reference spots in the third reference image, and the average brightness value of the third reference spots in the third reference image. The processor 200 may use the average brightness value of the first reference spots as the preset brightness, calculate the ratio between the average brightness value of the second reference spots and the average brightness value of the first reference spots as the first preset ratio, and calculate the ratio between the average brightness value of the third reference spots and the average brightness value of the first reference spots as the second preset ratio.

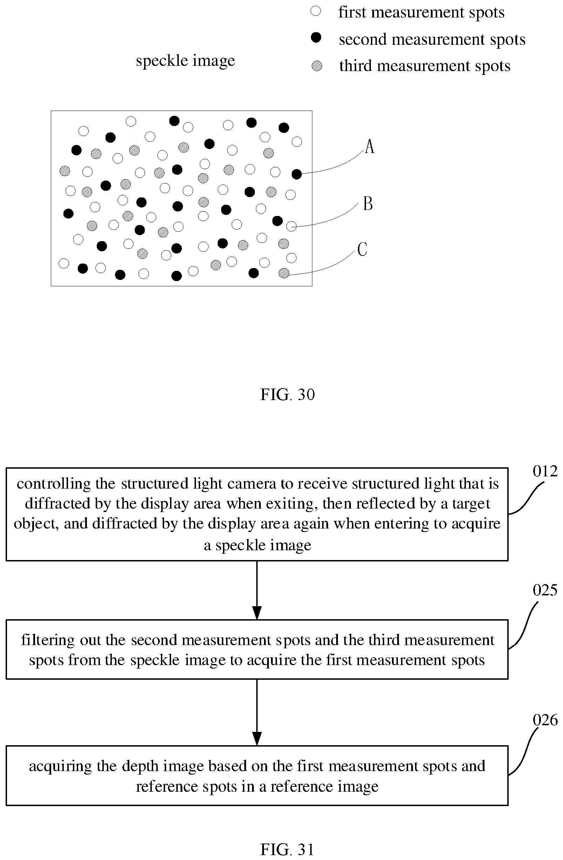

In the subsequent depth data calculation, the processor 200 first calculates the brightness of each measurement spot. Subsequently, the processor 200 calculates the actual ratio between each measurement spot and the preset brightness. The measurement spots whose actual ratio is greater than or equal to the first preset ratio are classified as the first measurement spots. The measurement spots whose actual ratio is less than the first preset ratio and greater than the second preset ratio are classified as the second measurement spots. The measurement spots whose actual ratio is less than the second preset ratio are classified as the third measurement spots. Therefore, the first measurement spots, the second measurement spots, and the third measurement spots may be distinguished. For example, as illustrated in FIG. 30, it is assumed that the preset ratio is 0.8, and the speckle image captured by the structured light camera 22 in actual use includes measurement spot A, measurement spot B, and measurement spot C. If the ratio between the brightness of the measurement spot A and the preset brightness is less than 0.8 and greater than or equal to 0.6, the measurement spot A is classified as the second measurement spot, which means that the measurement spot A is a measurement spot formed when the laser light is diffracted by the diffractive optical element 213 for the first time and diffracted by the display screen 10 for the second time and reflected by the target object. If the ratio between the brightness of the measurement spot B and the preset brightness is greater than or equal to 0.8, the measurement spot B is classified as the first measurement spot, which means that the measurement spot B is a measurement spot formed when the laser light is diffracted by the diffractive optical element 213 for the first time and reflected by the target object. If the ratio between the brightness of the measurement spot C and the preset brightness is less than 0.6, the measurement spot C is classified as the third measurement spot, it means that the measurement spot C is a measurement spot formed when the laser light is diffracted by the diffractive optical element 213 for the first time, diffracted by the display screen 10 for the second time, reflected by the calibration object, and diffracted by the display screen 10 for the third time. The ratios of 0.8 and 0.6 are only examples.

After the processor 200 distinguishes the first measurement spots, the second measurement spots and the third measurement spots, the processor 200 may calculate the depth data based on the speckle image and the third reference image because the first reference spots, the second reference spots, and the third reference spots in the third reference image have also been distinguished. In detail, the processor 200 first calculates the offsets of the first measurement spots relative to the first reference spots, the offsets of the second measurement spots relative to the second reference spots, and the offsets of the third measurement spots relative to the third reference spots. The processor 200 calculates pieces of depth data based on the offsets. The pieces of depth data may form the depth image.

Compared with the first calculation method, the second calculation method distinguishes the first measurement spots, the second measurement spots, and the third measurement spots, and distinguishes the first reference spots, the second reference spots, and the third reference spots. Based on the more accurate correspondence between the first measurement spots and the first reference spots, correspondence between the second measurement spots and the second reference spots, and correspondence between the third measurement spots and the third reference spots, the more accurate offsets may be acquired. The accurate depth data may be further acquired based on the more accurate offsets. Therefore, the accuracy of the acquired depth image may be improved.

In some embodiments, the preset brightness, the first preset ratio, and the second preset ratio may be determined by the ambient brightness of the scene and the luminous power of the structured light projector 21. In this way, the accuracy of the distinction among the first measurement spots, the second measurement spots, and the third measurement spots may be improved.

In some embodiments, the diffractive optical element 213 may be configured to diffract the laser light emitted by the light source 211 of the structured light projector 21 to increase the number of measurement spots or reference spots, and may also be configured to compensate the brightness uniformity of the structured light diffracted by the display screen 10. Therefore, the brightness uniformity of the spots in the speckle pattern projected into the scene may be better, which is beneficial to improve the accuracy of acquiring the depth image.

In summary, in the method for acquiring the image according to embodiments of the disclosure, the structured light projector 21 and the structured light camera 22 are both arranged on the side of the rear surface 13 of the display screen 10, and the structured light camera 22 receives the modulated structured light that passes through the display area 11 twice. Therefore, the processor 200 may directly calculate the depth image based on the first measurement spots, the second measurement spots, and the third measurement spots. Compared with the method of calculating the depth image using the first measurement spots, the diffraction effect of the display screen 10 increases the number of the measurement spots and the randomness of the arrangement of the measurement spots, which is helpful to improve the accuracy of acquiring the depth image. Further, in the method for acquiring the image according to embodiments of the disclosure, it may appropriately simplify the complexity of the structure of the diffraction grating in the diffractive optical element 213, and instead use the diffraction effect of the display screen 10 to increase the number of the measurement spots and the randomness of the arrangement of the measurement spots, which ensures the accuracy of acquiring the depth image while simplifies the manufacturing process of the structured light projector 21.

With reference to FIG. 1, FIG. 3, and FIG. 31, in some embodiments, the structured light projector 21 and the structured light camera 22 both may be arranged on the side of the rear surface 13 of the display screen 10, and the display screen 10 may be not provided with the through slot 14. The structured light camera 22 may receive the modulated structured light that passes through the display area 11 twice. At this point, the action 01 may include the following.

012: the structured light camera 22 is controlled to receive structured light that is diffracted by the display area 11 when exiting, then reflected by a target object, and diffracted by the display area 11 again when entering to acquire a speckle image. The speckle image may include a plurality of measurement spots. The plurality of measurement spots may include first measurement spots formed when laser light is diffracted by the diffractive optical element 213 and reflected by the target object, second measurement spots formed when the laser light is diffracted by the diffractive optical element 213, then diffracted by the display screen 10, and reflected by the target object, and third measurement spots formed when the laser light is diffracted by the diffractive optical element 213, diffracted by the display screen 10, then reflected by the target object, and diffracted by the display screen 10 again. In detail, the first measurement spots may be formed when the laser light is diffracted by the diffractive optical element 213, not diffracted by the display screen 10 when passing through the display screen 10 (that is, it is directly projected to the target object without encountering the microscopic gaps), and modulated and reflected by the target object. The second measurement spots may be formed when the laser light is diffracted by the diffractive optical element 213, diffracted by the display screen 10 when passing through the display screen 10 (that is, it is projected to the target object after encountering the microscopic gaps), modulated and reflected by the target object, and not diffracted by the display screen 10 when passing through the display screen 10 again. The third measurement spots may be formed when the laser light is diffracted by the diffractive optical element 213, diffracted by the display screen 10 when passing through the display screen 10 (that is, it is projected to the target object after encountering the microscopic gaps), modulated and reflected by the target object, and diffracted by the microscopic gaps in the display screen 10 again when passing through the display screen 10 again.

The action 02 may include the following.

025: the second measurement spots and the third measurement spots are filtered out from the speckle image to acquire the first measurement spots.

026: the depth image is acquired based on the first measurement spots and reference spots in a reference image.

With reference to FIG. 17 again, the action 012 may be implemented by the controlling module 401. The action 025 and the action 026 both may be implemented by the calculating module 402.

With reference to FIG. 1 again, the actions 012, 025, and 026 all may be implemented by the processor 200. In other words, the processor 200 may be further configured to control the structured light camera 22 to receive structured light that is diffracted by the display area 11 when exiting, then reflected by a target object, and diffracted by the display area 11 again when entering to acquire a speckle image; filter out the second measurement spots and the third measurement spots from the speckle image to acquire the first measurement spots; and acquire a depth image based on the first measurement spots and reference spots in a reference image.

In detail, when the structured light projector 21 and the structured light camera 22 are arranged on the side of the rear surface 13 of the display screen 10 together, and the display screen 10 is not provided with the through slot 14, the structured light camera 22 may capture the speckle image including the first measurement spots, the second measurement spots, and the third measurement spots. In the subsequent calculation of the depth image, the processor 200 may filter out the second measurement spots and the third measurement spots from the speckle image, and employs the remaining first measurement spots and the reference spots in the reference image to calculate the depth image. At this time, the reference spots in the reference image should include the first reference spots formed when the laser light is diffracted by the diffractive optical element 213 and reflected by the calibration object. Therefore, the influence of the display screen 10 on the structured light may be eliminated by filtering out the second measurement spots and the third measurement spots from the speckle image, so that the accuracy of the acquired depth image is higher under the condition that the electronic device 1000 has a relatively high screen-to-body ratio.

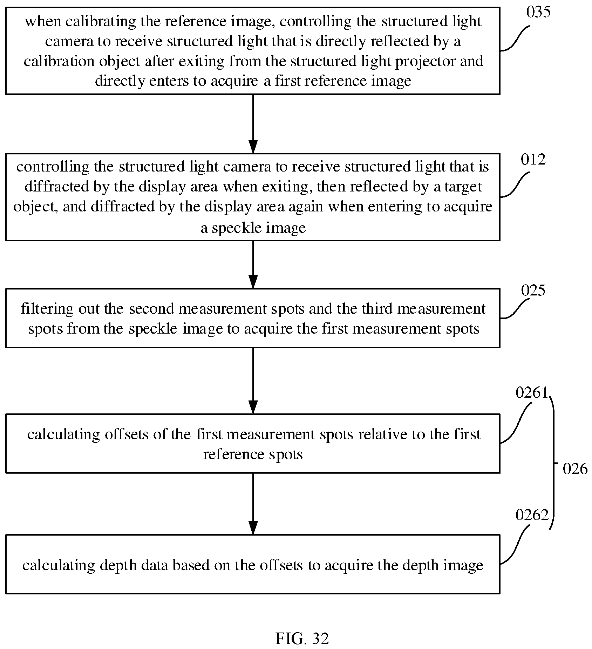

In other words, with reference to FIG. 32, the method for acquiring the image may include the following.

035: when calibrating the reference image, the structured light camera 22 is controlled to receive structured light that is directly reflected by a calibration object after exiting from the structured light projector 21 and directly enters to acquire a first reference image. The first reference image may include a plurality of reference spots. The plurality of reference spots may include first reference spots formed when the laser light is diffracted by the diffractive optical element 213 and reflected by the calibration object.

The action 026 may include the following.

0261: offsets of the first measurement spots relative to the first reference spots are calculated.

0262: depth data is calculated based on the offsets to acquire the depth image.

With reference to FIG. 17 again, the action 035 may be implemented by the controlling module 401. The actions 0261 and 0262 both may be implemented by the calculating module 402.

With reference to FIG. 1 again, the actions 035, 0261, and 0262 may be implemented by the processor 200. That is, the processor 200 may further be configured to, when calibrating the reference image, control the structured light camera 22 to receive structured light that is directly reflected by a calibration object after exiting from the structured light projector 21 and directly enters to acquire a first reference image; calculate offsets of the first measurement spots relative to the first reference spots; and calculate the depth data based on the offsets to acquire the depth image.

In detail, after the processor 200 filters out the second measurement spots and the third measurement spots, the first measurement spots remain in the speckle image. At this time, the speckle image should be calculated with the first reference image including the first reference spots corresponding to the first measurement spots to calculate the depth image. The process for calibrating the first reference image is consistent with the calibration process of the scene described in the action 035 where the structured light projector 21 is arranged without the obstruction of the display screen 10, which is not repeated herein. The reference spots in the first reference image captured by the structured light camera are the first reference spots formed when the laser light is diffracted by the diffractive optical element 213 and reflected by the calibration object. In this way, the processor 200 may calculate the offsets of the first measurement spots relative to the first reference spots and calculate pieces of depth data based on the offsets to acquire the depth image.

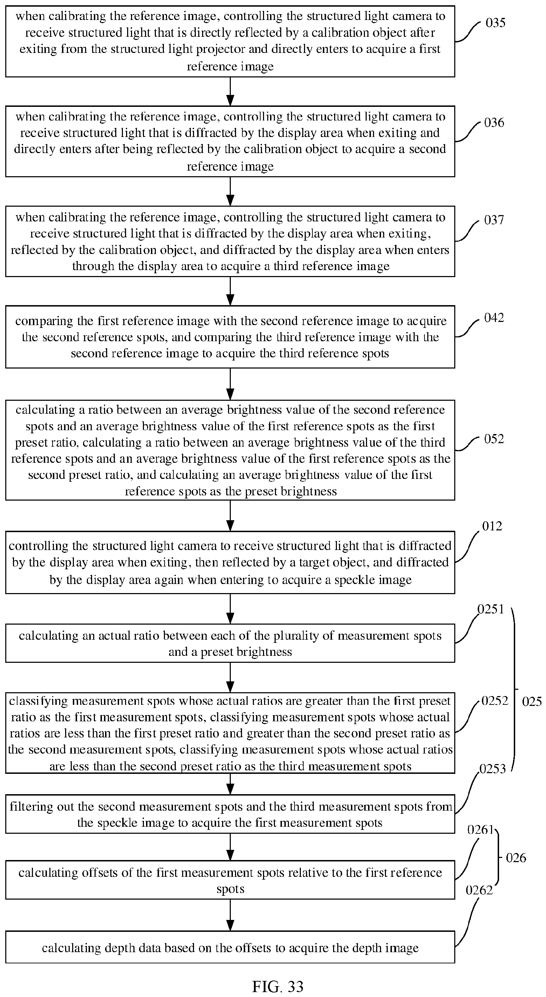

The processor 200 may filter out the second measurement spots and the third measurement spots by brightness. In other words, with reference to Fig. 33, in some embodiments, the method for acquiring the image may include the following.

035: when calibrating the reference image, the structured light camera 22 is controlled to receive structured light that is directly reflected by a calibration object after exiting from the structured light projector 21 and directly enters to acquire a first reference image. The first reference image may include a plurality of reference spots. The plurality of reference spots may include first reference spots formed when the laser light is diffracted by the diffractive optical element 213 and reflected by the calibration object.

036: when calibrating the reference image, the structured light camera 22 is controlled to receive structured light that is diffracted by the display area 11 when exiting and directly enters after being reflected by the calibration object to acquire a second reference image. The second reference image may include a plurality of reference spots. The plurality of reference spots may include first reference spots formed when the laser light is diffracted by the diffractive optical element 213 and reflected by the calibration object, and second reference spots formed when the laser light is diffracted by the diffractive optical element 213, diffracted by the display screen 11, and reflected by the calibration object.

037: when calibrating the reference image, the structured light camera 22 is controlled to receive structured light that is diffracted by the display area 11 when exiting, reflected by the calibration object, and diffracted by the display area 11 when enters through the display area 11 to acquire a third reference image. The third reference image may include a plurality of reference spots. The plurality of reference spots may include first reference spots formed when the laser light is diffracted by the diffractive optical element 213 and reflected by the calibration object, second reference spots formed when the laser light is diffracted by the diffractive optical element 213, diffracted by the display screen 11, and reflected by the calibration object, and third reference spots formed when the laser light is diffracted by the diffractive optical element 213, diffracted by the display screen 11, reflected by the calibration object, and diffracted by the display screen 11 again.

042: the first reference image is compared with the second reference image to acquire the second reference spots, and the third reference image is compared with the second reference image to acquire the third reference spots.

052: a ratio between an average brightness value of the second reference spots and an average brightness value of the first reference spots is calculated as the first preset ratio, a ratio between an average brightness value of the third reference spots and an average brightness value of the first reference spots is calculated as the second preset ratio, and an average brightness value of the first reference spots is calculated as the preset brightness.

The action 025 may include the following.

0251: an actual ratio between each of the plurality of measurement spots and the preset brightness is calculated.

0252: measurement spots whose actual ratios are greater than the first preset ratio are classified as the first measurement spots, measurement spots whose actual ratios are less than the first preset ratio and greater than the second preset ratio are classified as the second measurement spots, measurement spots whose actual ratios are less than the second preset ratio are classified as the third measurement spots.

0253: the second measurement spots and the third measurement spots are filtered out from all measurement spots to acquire the first measurement spots.

With reference to Fig. 17 again, the actions 035, 036, and 037 all may be implemented by the controlling module 401. The actions 042, 052, 0251, 0252, and 0253 all may be implemented by the calculating module 402.

With reference to Fig. 1 again, the actions 035, 036, 037, 042, 052, 0251, 0252, and 0253 all may be implemented by the processor 200. In other words, the processor 200 may be further configured to, when calibrating the reference image, control the structured light camera 22 to receive structured light that is directly reflected by a calibration object after exiting from the structured light projector 21 and directly enters to acquire a first reference image; when calibrating the reference image, control the structured light camera 22 to receive structured light that is diffracted by the display area 11 when exiting and directly enters after being reflected by the calibration object to acquire a second reference image; and when calibrating the reference image, control the structured light camera 22 to receive structured light that is diffracted by the display area 11 when exiting, reflected by the calibration object, and diffracted by the display area 11 when enters through the display area 11 to acquire a third reference image. The processor 200 may be further configured to compare the first reference image with the second reference image to acquire the second reference spots, and compare the third reference image with the second reference image to acquire the third reference spots; calculate a ratio between an average brightness value of the second reference spots and an average brightness value of the first reference spots as the first preset ratio, calculate a ratio between an average brightness value of the third reference spots and an average brightness value of the first reference spots as the second preset ratio, and calculate an average brightness value of the first reference spots as the preset brightness. The processor 200 may be further configured to calculate an actual ratio between each of the plurality of measurement spots and the preset brightness, classify measurement spots whose actual ratios are greater than the first preset ratio as the first measurement spots, classify measurement spots whose actual ratios are less than the first preset ratio and greater than the second preset ratio as the second measurement spots, classify measurement spots whose actual ratios are less than the second preset ratio as the third measurement spots; and filter out the second measurement spots and the third measurement spots from all measurement spots to acquire the first measurement spots.

The process for calibrating the first reference image described in the action 035 is consistent with the calibration process of the scene described in the above-mentioned action 035 where the structured light projector 21 is arranged without the obstruction of the display screen 10. The process for calibrating the second reference image described in the action 036 is consistent with the calibration process of the scene described in the above-mentioned action 036 where the structured light projector 21 and the structured light camera 22 are arranged on the side of the rear surface 13 of the display screen 10, and the light incident surface of the structured light camera 22 is aligned with the through slot 14 of the display screen 10. The process for calibrating the third reference image described in the action 037 is consistent with the calibration process of the scene described in the above-mentioned action 037 where the structured light projector 21 and the structured light camera 22 are arranged on the side of the rear surface 13 of the display screen 10, and the display screen 10 is not provided with the through slot 14. All of the above is not repeated herein.

After acquiring the first reference image, the second reference image, and the third reference image, the processor 200 may employ the same manner as the foregoing action 042. That is, the first reference spots in the second reference image may be determined based on the first coordinates of the first reference spots in the first reference image, and the remaining reference spots in the second reference image are the second reference spots. The second coordinates of the second reference spots are marked, so that the first reference spots and the second reference spots in the second reference image are distinguished. Subsequently, the processor 200 may determine the first reference spots and the second reference spots in the third reference image based on the first coordinates and the second coordinates, and the remaining reference spots in the third reference image are the third reference spots. Therefore, the first reference spots, the second reference spots, and the third reference spots in the third reference image may be distinguished. Subsequently, the processor 200 may employ the same manner as the aforementioned action 052 to calibrate based on the distinguished first reference spots, second reference spots, and third reference spots to acquire the preset brightness, the first preset ratio, and the second preset ratio.

Similarly, in the subsequent calculation of the depth image, the processor 200 may employ the same manners as the foregoing action 062 and the foregoing action 072. That is, the first measurement spots, the second measurement spots, and the third measurement spots may be distinguished based on the calibrated first preset ratio, second preset ratio, and preset brightness. The second measurement spots and the third measurement spots may be filtered out to remain the first measurement spots. Offsets of the first measurement spots relative to the first reference spots may be calculated, and finally the depth data may be calculated based on the offsets to acquire the depth image.

In some embodiments, the preset brightness, the first preset ratio, and the second preset ratio may also be determined by the ambient brightness of the scene and the luminous power of the structured light projector 21. In this way, the accuracy of filtering out the second measurement spots and the third measurement spots may be improved.

In some embodiments, the diffractive optical element 213 may be configured to diffract the laser light emitted by the light source 211 of the structured light projector 21 to increase the number of measurement spots or reference spots, and may also be configured to compensate the brightness uniformity of the structured light diffracted by the display screen 10. Therefore, the brightness uniformity of the spots in the speckle pattern projected into the scene may be better, which is beneficial to improve the accuracy of acquiring the depth image.

In summary, in the method for acquiring the image according to embodiments of the disclosure, the structured light projector 21 and the structured light camera 22 are both located under the display screen 10, and the display screen 10 is not provided with the through slot 14. The second measurement spots and the third measurement spots are filtered out first. The depth image may be calculated based on the remaining first measurement spots, to reduce the amount of data processing of the processor 200, which is beneficial to speed up the process of acquiring the depth image.

With reference to FIG. 1, FIG. 34, and FIG. 35, in some embodiments, when the structured light projector 21 is arranged on the side of the rear surface 13 of the display screen 10, the electronic device 1000 may further include a compensation optical element 500. The compensation optical element 500 may be provided between the diffractive optical element and the display screen 10. The structured light emitted by the structured light projector 21 sequentially passes through the compensation optical element 500 and the display screen 10 and exits into the scene. The compensation optical element 500 is configured to counteract the diffraction effect of the display screen 10. At this time, the structured light camera 22 may be arranged on the side of the rear surface of the display screen 10, and the display screen 10 may not be provided with the through slot 14. Correspondingly, the structured light camera 22 may receive the modulated structured light passing through sequentially the compensation optical element 500, the display area 11, the display area 11, and the compensation optical element 500. Or, the structured light camera 22 may be arranged on the side of the rear surface of the display screen 10, the display screen 10 may be provided with the through slot 14, and the light incident surface of the structured light camera 22 may be aligned with the through slot 14. Correspondingly, the structured light camera 22 may receive the modulated structured light passing through sequentially the compensation optical element 500, the display area 11, and the through slot 14.

The action 01 may include the following.

013: the structured light camera 22 is controlled to receive structured light that passes through the compensation optical element 500 and the display area 11 of the display screen 10 sequentially when existing and is reflected by the target object to acquire a speckle image. The compensation optical element 500 is configured to counteract the diffraction effect of the display screen 10. The speckle image may include measurement spots. The measurement spots may include measurement spots formed when the laser light is diffracted by the diffractive optical element 213 and reflected by the target object.

With reference to FIG. 17 again, the action 013 may be implemented by the controlling module 401.

With reference to FIG. 1 again, the action 013 may be implemented by the processor 200. In other words, the processor 200 may be configured to control structured light that passes through the compensation optical element 500 and the display area 11 of the display screen 10 sequentially when existing and is reflected by the target object to acquire a speckle image.

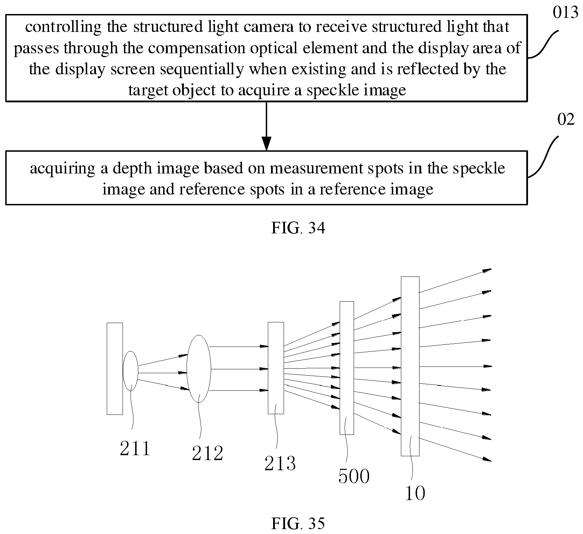

In the method for acquiring the image according to embodiments of the disclosure, the compensation optical element 500 may be arranged between the structured light projector 21 and the display screen 10 to counteract the diffraction effect of the display screen 10. The compensation optical element 500 and the display screen 10 may be arranged at a certain distance (as illustrated in FIG. 35). Or, the compensation optical element 500 and the rear surface 13 of the display screen 10 may be attached (not illustrated in FIGS.). In this way, the compensation optical element 500 and a part of the display screen 10 corresponding to the compensation optical element 500 may form a flat mirror. The number of spots may not be changed when the structured light passes through the flat mirror. Therefore, spots in the speckle pattern, formed by the structured light emitted into the scene, may include the spots formed when the laser light is diffracted by the diffractive optical element 213, and the measurement spots may include the spots formed when the laser light is diffracted by the diffractive optical element 213 and reflected by the target object.

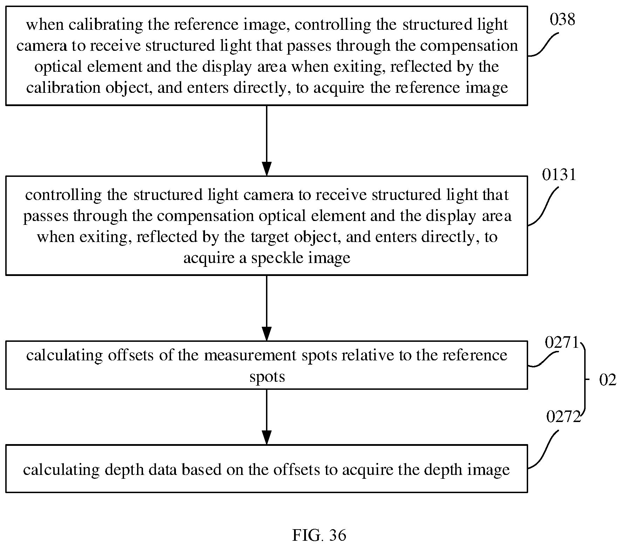

In detail, with reference to FIG. 1, FIG. 5, FIG. 8, and FIG. 36, in some embodiments, when the structured light camera 22 is arranged on the side of the rear surface 13 of the display screen 10, and the display screen 10 is provided with the through slot 14 that is aligned with the light incident surface of the structured light camera 22, the action 013 may include the following.

0131: the structured light camera 22 is controlled to receive structured light that passes through the compensation optical element 500 and the display area 11 when exiting, reflected by the target object, and enters directly, to acquire a speckle image.

The method for acquire the image may include the following.

038: when calibrating the reference image, the structured light camera 22 is controlled to receive structured light that passes through the compensation optical element 500 and the display area 11 when exiting, reflected by the calibration object, and enters directly, to acquire the reference image. The reference image may include reference spots. The reference spots may include reference spots formed when the laser light is diffracted by the diffractive optical element 213 and reflected by the calibration object.

The action 02 may include the following.

0271: offsets of the measurement spots relative to the reference spots are calculated.

0272: depth data is calculated based on the offsets to acquire the depth image.

With reference to FIG. 17 again, the action 0131 and the action 038 both may be implemented by the controlling module 401. The actions 0271 and 0272 both may be implemented by the calculating module 402.

With reference to FIG. 1 again, the actions 0131, 038, 0271, and 0272 all may be implemented by the processor 200. That is, the processor 200 may be configured to control the structured light camera 22 to receive structured light that passes through the compensation optical element 500 and the display area 11 when exiting, reflected by the target object, and enters directly, to acquire a speckle image; when calibrating the reference image, control the structured light camera 22 to receive structured light that passes through the compensation optical element 500 and the display area 11 when exiting, reflected by the calibration object, and enters directly, to acquire the reference image; calculate offsets of the measurement spots relative to the reference spots; and calculate depth data based on the offsets to acquire the depth image.

An area of the compensation optical element 500 should be slightly greater than or equal to a divergence area formed by the structured light emitted by the structured light projector 21. In this way, the structured light emitted by the structured light projector 21 may all pass through the compensation optical element 500, which may counteract the diffraction effect of the display screen 10. In addition, the compensation optical element 500 may not block the light incident surface of the structured light camera 22, that is, the compensation optical element 500 may not overlap with the through slot 14. It may be understood that the through slot 14 may not have the diffraction effect. The structured light reflected by the target object may not be diffracted when passing through the through slot 14. Therefore, there is no need to arrange the compensation optical element 500 at the position of the through slot 14 to counteract the diffraction effect of the display area 11. Conversely, if the compensation optical element 500 is provided at the position of the through slot 14, the structured light passing through the compensation optical element 500 may be diffracted by the compensation optical element 500, resulting in that the speckle image received by the structured light camera 22 may include measurement spots when the laser light is diffracted by the diffractive optical element 213 when passing through the diffractive optical element 213, passes through the flat mirror formed by the compensation optical element 500 and the part of the display screen 10 corresponding to the compensation optical element 500, and is diffracted by the compensation optical element 500 again.

When the structured light camera 22 is arranged on the side of the rear surface of the display screen 10, and the display screen 10 is provided with the through slot 14 aligned with the light incident surface of the structured light camera 22, the laser light emitted by the light source 211 of the structured light projector 21 may pass through the compensation optical element 500 and the display area 11 in turn. The structured light camera 22 may receive the structured light that passes through the flat mirror including the compensation optical element 500 and the display screen 10 when emitting, is modulated and reflected by the target object, and passes through the through slot 14. Since the compensation optical element 500 may counteract the diffraction effect of the display area 11, the speckle image captured by the structured light camera 22 may include the measurement spots formed when the laser light is diffracted by the diffractive optical element 213 and reflected by the target object, but not include the measurement spots formed when the laser light is diffracted by the diffractive optical element 213, diffracted by the display screen 10, and reflected by the target object.

Correspondingly, the reference spots in the reference image should also include reference spots formed when the laser light is diffracted by the diffractive optical element 213 and reflected by the calibration object. The calibration scene should be as follows. The structured light projector 21 and the structured light camera 22 may be arranged on the side of the rear surface 13 of the display screen 10 provided with the compensation optical element 500, and the light incident surface of the structured light camera 22 is aligned with the through slot 14 of the display screen 10. In this way, in the calibration scene and the actual use scene, the positions of the structured light projector 21 and the structured light camera 22 relative to the display screen 10 are consistent. The processor 200 controls the structured light projector 21 to emit structured light. The structured light passes through the compensation optical element 500 and the display screen 10 in turn, and then is projected to a calibration board separated from the structured light assembly 20 by a predetermined distance. The structured light reflected by the calibration board passes through the through slot 14 and is received by the structured light camera 22. At this time, the structured light camera 22 receives the laser light that is emitted by the light source 211, diffracted by the diffractive optical element 211, and then directly enters through the through slot 14 after being reflected by the calibration board. The reference spots included in the formed reference image may be formed when the laser light is diffracted by the diffractive optical element 213 and reflected the calibration object.

When calculating the depth image, the processor 200 does not need to filter out the measurement spots formed when the laser light is diffracted for two times. The processor 200 may directly calculate the depth image based on the measurement spots formed when the laser light is diffracted for one time and the reference spots in the reference image. In detail, the processor 200 may calculate offsets between the measurements spots and the reference spots, and calculate the depth data based on the offsets, thereby acquiring the depth image.

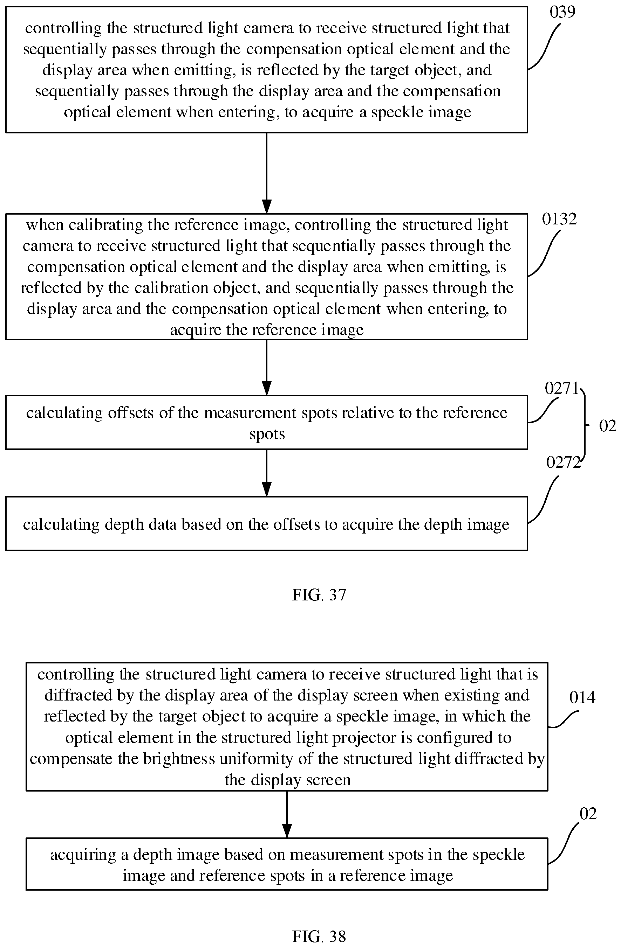

Similarly, with reference to FIG. 3 and FIG. 37, in some embodiments, when the structured light camera 22 is arranged on the side of the rear surface of the display screen 10, and the display screen 10 is not provided with the through slot 14, the action 013 may include the following.

0132: the structured light camera 22 is controlled receive structured light that sequentially passes through the compensation optical element 500 and the display area 11 when emitting, is reflected by the target object, and sequentially passes through the display area 11 and the compensation optical element 500 when entering, to acquire a speckle image.

The method for acquiring the image may include the following.

039: when calibrating the reference image, the structured light camera 22 is controlled to receive structured light that sequentially passes through the compensation optical element 500 and the display area 11 when emitting, is reflected by the calibration object, and sequentially passes through the display area 11 and the compensation optical element 500 when entering, to acquire the reference image. The reference image may include reference spots. The reference spots may include reference spots formed when the laser light is diffracted by the diffractive optical element 213 and reflected by the calibration object.

The action 02 may include the following.

0271: offsets of the measurement spots relative to the reference spots are calculated.

0272: depth data is calculated based on the offsets to acquire the depth image.

With reference to FIG. 17 again, the action 0132 and the action 039 may be implemented by the controlling module 401. The actions 0271 and 0272 may be implemented by the calculating module 402.

With reference to FIG. 1 again, the actions 0132, 039, 0271, and 0272 may be implemented by the processor 200. That is, the processor 200 may be further configured to control the structured light camera 22 to receive structured light that sequentially passes through the compensation optical element 500 and the display area 11 when emitting, is reflected by the target object, and sequentially passes through the display area 11 and the compensation optical element 500 when entering, to acquire a speckle image; when calibrating the reference image, control the structured light camera 22 to receive structured light that sequentially passes through the compensation optical element 500 and the display area 11 when emitting, is reflected by the calibration object, and sequentially passes through the display area 11 and the compensation optical element 500 when entering, to acquire the reference image; calculate offsets of the measurement spots relative to the reference spots; and calculate depth data based on the offsets to acquire the depth image.

The compensation optical element 500 should completely cover the structured light projector 21 and the structured light camera 22 at the same time. In this way, on the one hand, the structured light emitted by the structured light projector 21 may all pass through the compensation optical element 500, which may counteract the diffraction effect of the display screen 10; on the other hand, the structured light reflected by the target object may also all pass through the compensation optical element 500 to counteract the diffraction effect of the display screen 10, so that the speckle image captured by the structured light camera 22 may include the measurement spot formed when the laser light is diffracted by the diffractive optical element 213 and reflected by the target object.

In detail, when the structured light camera 22 is arranged on the side of the rear surface 13 of the display screen 10, and the display screen 10 is not provided with the through slot 14, the laser light emitted by the light source 211 of the structured light projector 21 may sequentially pass through the compensation optical element 500 and the display area 11. The structured light camera 22 may receive the structured light that passes through the flat mirror including the compensation optical element 500 and the display screen 10 when exiting, is reflected by the target object, and passes through the flat mirror including the compensation optical element 500 and the display screen 10 when entering. Since the compensation optical element 500 counteracts the diffraction effect of the display area 11, the speckle image captured by the structured light camera 22 may include the measurement spots formed when the laser light is diffracted by the diffractive optical element 213 and reflected by the target object, not include the measurement spots formed when the laser light is diffracted by the diffractive optical element 213, diffracted by the display screen 10, and reflected by the target object, and not include the measurement spots formed when the laser light is diffracted by the diffractive optical element 213, diffracted by the display screen 10, reflected by the target object, and diffracted by the display screen 10 again.

Correspondingly, the reference spots in the reference image should also include reference spots formed when the laser light is diffracted by the diffractive optical element 213 and reflected by the calibration object. The calibration scene should be as follows. The structured light projector 21 and the structured light camera 22 may be arranged on the side of the rear surface 13 of the display screen 10 having the compensation optical element 500, and the display screen 10 may be not provided with the through slot 14. In this way, in the calibration scene and the actual use scene, the positions of the structured light projector 21 and the structured light camera 22 relative to the display screen 10 are consistent. The processor 200 may control the structured light projector 21 to emit structured light. The structured light passes through the compensation optical element 500 and the display screen 10 in turn, and is projected to the calibration board separated from the structured light assembly 20 by a predetermined distance. The structured light reflected by the calibration board passes through the display screen 10 and the compensation optical element 500 in turn, and is received by the structured light camera 22. The reference spots included in the formed reference image are the reference spots formed when the laser light is diffracted by the diffractive optical element 213 and reflected by the calibration object.

When calculating the depth image, the processor 200 may not need to filter out the measurement spots formed when the laser light is diffracted for multiple times. The processor 200 may directly calculate the depth image based on the measurement spots formed when the laser light is diffracted for one time and the reference spots in the reference image. In detail, the processor 200 may calculate the offsets between the measurement spots and the reference spots, and calculate the depth data based on the offsets, thereby acquiring the depth image.

In summary, in the method for acquiring the image according to embodiments of the disclosure, the diffraction effect of the display screen 10 may be counteracted by setting the compensation optical element 500. In this way, the speckle image captured by the structured light camera 22 may include the measurement spots formed when the laser light is diffracted by the diffractive optical element 213 and reflected by the target object, not include the measurement spots formed when the laser light is diffracted by the diffractive optical element 213, diffracted by the display screen 10, and reflected by the target object, and not include the measurement spots formed when the laser light is diffracted by the diffractive optical element 213, diffracted by the display screen 10, reflected by the target object, and diffracted by the display screen 10 again

With reference to FIG. 1, FIG. 4, and FIG. 38, in some embodiments, the diffractive optical element 213 in the structured light projector 21 is replaced with an optical element 214. The optical element 214 is configured to compensate the brightness uniformity of the structured light diffracted by the display screen 10. The action 01 may include the following.

014: the structured light camera 22 is controlled to receive structured light that is diffracted by the display area 11 of the display screen 10 when existing and reflected by the target object to acquire a speckle image. The optical element 214 in the structured light projector 21 is configured to compensate the brightness uniformity of the structured light diffracted by the display screen 10. The speckle image may include measurement spots.

With reference to FIG. 17 again, the action 014 may be implemented by the controlling module 401.

With reference to FIG. 1 again, the action 014 may be implemented by the processor 200. That is, the processor 200 may be further configured to control the structured light camera 22 to receive structured light that is diffracted by the display area 11 of the display screen 10 when existing and reflected by the target object to acquire a speckle image. The optical element 214 in the structured light projector 21 is configured to compensate the brightness uniformity of the structured light diffracted by the display screen 10. The speckle image may include measurement spots.

In detail, microscopic gaps may be formed between adjacent pixels in the display area 11 of the display screen 10. The structured light emitted by the structured light projector 21 passes through the display area 11 and is diffracted by the display area 11 to form spots. However, the brightness distribution of the diffracted spots in the display area 11 is not uniform.

In the method for acquiring the image according to embodiments of the disclosure, the diffraction effect of the display screen 10 may be employed to form the spots. The diffractive optical element 213 in the structured light projector 21 is replaced with the optical element 214. The optical element 214 may compensate the brightness uniformity of the structured light diffracted by the display screen 10. That is, the laser light emitted by the light source 211 of the structured light projector 21 passes through the optical element 214 and the display screen 10 in turn and is projected to the scene. There are spots in the speckle pattern projected on the scene. The brightness of the spots is relatively uniform. The spots are diffracted by the display screen 10, and the brightness uniformity of the spots is compensated by the optical element 214.

In this way, the measurement spots in the speckle image captured by the structured light camera 22 are directly formed by the diffraction effect of the display screen 10, and the processor 200 may calculate the depth image based on these measurement spots. The optical element 214 compensates the brightness uniformity of the structured light diffracted by the display screen 10 to improve the accuracy of the acquired depth image.

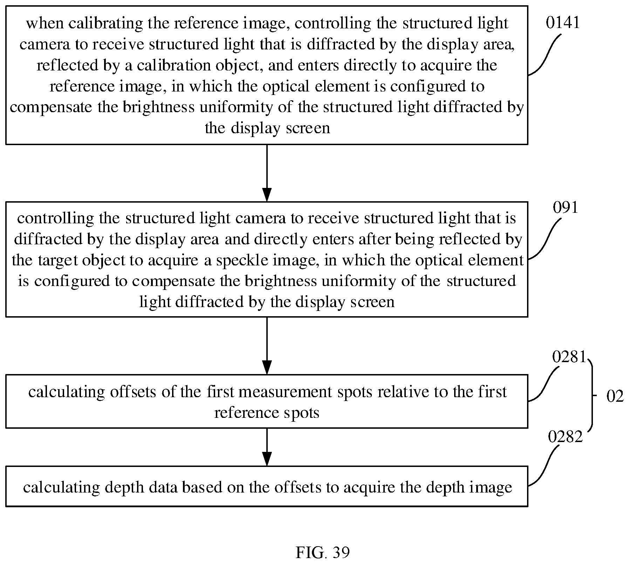

With reference to FIG. 1, FIG. 4, FIG. 5, FIG. 8, and FIG. 39, in some embodiments, when the structured light projector 21 and the structured light camera 22 are arranged on the side of the rear surface of the display screen 10, the display screen 10 is provided with the through slot 14, and the light incident surface of the structured light camera 22 is aligned with the through slot 14, the action 014 may include the following.

0141: the structured light camera 22 is controlled to receive structured light that is diffracted by the display area 11 and directly enters after being reflected by the target object to acquire a speckle image. The optical element 214 is configured to compensate the brightness uniformity of the structured light diffracted by the display screen 10. The speckle image may measurement spots. The measurement spots may include the first measurement spots formed when the laser light is diffused by the optical element 214 and then diffracted by the display screen 10 and reflected by the target object.

The method for acquiring the image may include the following.

091: when calibrating the reference image, the structured light camera 22 is controlled to receive structured light that is diffracted by the display area 11, reflected by a calibration object, and enters directly to acquire the reference image. The optical element 214 is configured to compensate the brightness uniformity of the structured light diffracted by the display screen 10. The reference image may include reference spots. The reference spots may include first reference spot formed when the laser light is diffused by the optical element 214, diffracted by the display screen 10, and reflected by the calibration object.

The action 02 may include the following.

0281: offsets of the first measurement spots relative to the first reference spots are calculated.

0282: depth data is calculated based on the offsets to acquire the depth image.

With reference to FIG. 17 again, the action 0141 and the action 091 may be implemented by the controlling module 401. The action 0281 and the action 0282 may be implemented by the calculating module 402.

With reference to FIG. 1 again, the actions 0141, 091, 0281, and 0282 may be implemented by the processor 200. In other words, the processor 200 may be configured to control the structured light camera 22 to receive structured light that is diffracted by the display area 11 and directly enters after being reflected by the target object to acquire a speckle image. The optical element 214 is configured to compensate the brightness uniformity of the structured light diffracted by the display screen 10. The processor 200 may be configured to, when calibrating the reference image, control the structured light camera 22 to receive structured light that is diffracted by the display area 11, reflected by a calibration object, and enters directly to acquire the reference image. The optical element 214 is configured to compensate the brightness uniformity of the structured light diffracted by the display screen 10. The processor 200 may be configured to calculate offsets of the first measurement spots relative to the first reference spots, and calculate the depth data based on the offsets to acquire the depth image.

In detail, when the structured light camera 22 is arranged on the side of the rear surface 13 of the display screen 10, and the display screen 10 is provided with the through slot 14 aligned with the light incident surface of the structured light camera 22, the laser light emitted by the light source 211 of the structured light projector 21 sequentially passes through the optical element 214 and the display area 11 of the display screen 10 to form the structured light and exit into the scene. The structured light is reflected by the target object and enters through the through slot 14 to be received by the structured light camera 22. Since the optical element 214 is configured to compensate the brightness uniformity of the structured light diffracted by the display screen 10 without increasing the number of measurement spots, and the through groove 14 does not have microscopic gaps and does not diffract the reflected structured light, the speckle image captured by the structured light camera 22 may include the first measurement spots formed when the laser light is diffused by the optical element 214, diffracted by the display screen 10, and reflected by the target object.

Correspondingly, the reference spots in the reference image should also include the first reference spots formed when the laser light is diffused by the optical element 214, diffracted by the display screen 10, and reflected by the calibration object. The calibration scene should be as follows. The structured light projector 21 with the optical element 214, and the structured light camera 22 may be arranged on the side of the rear surface 13 of the display screen 10, and the light incident surface of the structured light camera 22 is aligned with the through slot 14 of the display screen 10. In this way, in the calibration scene and the actual use scene, the positions of the structured light projector 21 and the structured light camera 22 relative to the display screen 10 are consistent. The processor 200 controls the light source 211 of the structured light projector 21 to emit laser light, and the laser light passes through the optical element 214 and the display screen 10 in turn to form the structured light. The structured light is projected to the calibration board separated by a predetermined distance from the structured light assembly 20, and is reflected by the calibration board. The structured light reflected by the calibration board passes through the through slot 14 and is received by the structured light camera 22. At this time, the structured light camera 22 receives the laser light emitted by the light source 211, diffused by the diffractive optical element 213, diffracted by the display screen 10, reflected by the calibration board, and directly enters through the through slot 14. The reference spots in the formed reference image may include the first reference spots formed when the laser light is diffused by the optical element 214, diffracted by the display screen 10, and reflected by the calibration object.

When calculating the depth image, the processor 200 directly calculates the depth image based on the first measurement spots and the first reference spots in the reference image. In detail, the processor 200 calculates the offsets between the first measurement spots and the first reference spots, and calculates the depth data based on the offsets to acquire the depth image.

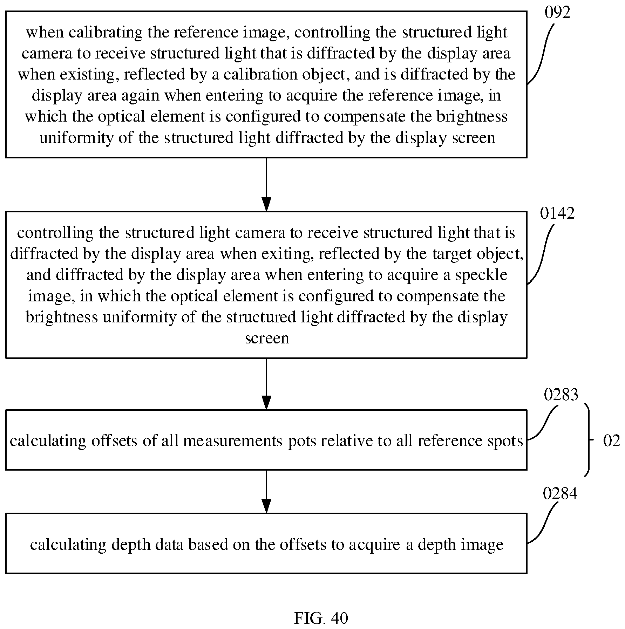

Similarly, with reference to FIG. 3 and FIG. 40, in some embodiments, when the structured light camera 22 is arranged on the side of the rear surface of the display screen 10, and the display screen 10 is not provided with the through slot 14, the action 014 may include the following.

0142: the structured light camera 22 is controlled to receive structured light that is diffracted by the display area 11 when exiting, reflected by the target object, and diffracted by the display area 11 when entering to acquire a speckle image. The optical element 214 is configured to compensate the brightness uniformity of the structured light diffracted by the display screen 10. The speckle image may include measurement spots. The measurement spots may include first measurement spots formed when the laser light is diffused by the optical element 214, diffracted by the display screen 10, and reflected by the target object, and second measurement spots formed when the laser light is diffused by the optical element 214, diffracted by the display screen 10, reflected by the target object, and diffracted by the display screen 10 again.

With reference to FIG. 17 again, the action 0142 may be implemented by the controlling module 401.

With reference to FIG. 1 again, the action 0142 may be implemented by the processor 200. In other words, the processor 200 may be configured to control the structured light camera 22 to receive structured light that is diffracted by the display area 11 when exiting, reflected by the target object, and diffracted by the display area 11 when entering to acquire a speckle image. The optical element 214 is configured to compensate the brightness uniformity of the structured light diffracted by the display screen 10.

In detail, when the structured light camera 22 is arranged on the side of the rear surface 13 of the display screen 10, and the display screen 10 is not provided with the through slot 14, the laser light emitted by the light source 211 of the structured light projector 21 passes through the optical element 214 and the display area 11 of the display screen 10 to form the structured light to exit into the scene. The structured light may be reflected by the target object and enter through the display screen 10 to be received by the structured light camera 22. Since the optical element 214 is configured to compensate the brightness uniformity of the structured light diffracted by the display screen 10 without increasing the number of measurement spots, and the display screen 10 has microscopic gaps that diffract the reflected structured light, the speckle image captured by the optical camera 22 may include first measurement spots formed when the laser light is diffused by the optical element 214, diffracted by the display screen 10, and reflected by the target object, and second measurement spots formed when the laser light is diffused by the optical element 214, diffracted by the display screen 10, reflected by the target object, and diffracted by the display screen 10 again.

After the structured light camera 22 captures the speckle image, the processor 200 may directly calculate the depth image based on the first measurement spots and the second measurement spots in the speckle image and the reference spots in the reference image. The calculation manner of the depth image may include the two following.

With reference to FIG. 40 again, in the one calculation method, the action 02 may include the following.

0283: offsets of all measurements pots relative to all reference spots are calculated.

0284: depth data is calculated based on the offsets to acquire a depth image.

Correspondingly, the method for acquiring the image may include the following.

092: when calibrating the reference image, the structured light camera 22 is controlled to receive structured light that is diffracted by the display area 11 when existing, reflected by a calibration object, and is diffracted by the display area 11 again when entering to acquire the reference image. The optical element 214 is configured to compensate the brightness uniformity of the structured light diffracted by the display screen 10. The reference image may include reference spots. The reference spots may include first reference spots formed when the laser light is diffused by the optical element 214, diffracted by the display screen 10, and reflected by the calibration object, and second reference spots formed when the laser light is diffused by the optical element 214, diffracted by the display screen 10, reflected by the calibration object, and diffracted by the display screen 10 again.

With reference to FIG. 17 again, the actions 0283 and 0284 may be implemented by the calculating module 402. The action 0292 may be implemented by the controlling module 401.

With reference to FIG. 1 again, the actions 0283, 0284, and 0292 may be implemented by the processor 200. That is, the processor 200 may further be configured to calculate offsets of all measurements pots relative to all reference spots, and calculate depth data based on the offsets to acquire a depth image. The processor 200 may further be configured to, when calibrating the reference image, control the structured light camera 22 to receive structured light that is diffracted by the display area 11 when existing, reflected by a calibration object, and is diffracted by the display area 11 again when entering, to acquire the reference image. The optical element 214 is configured to compensate the brightness uniformity of the structured light diffracted by the display screen 10.

In detail, in the process of calibrating the reference image, the structured light projector 21 provided with the optical element 214, and the structured light camera 22 may be arranged on the side of the rear surface 13 of the display screen 10, and the display screen 10 is not provided with the through slot 14. In this way, in the calibration scene and the actual use scene, the positions of the structured light projector 21 and the structured light camera 22 relative to the display screen 10 are consistent. The processor 200 controls the light source 211 of the structured light projector 21 to emit laser light. The laser light passes through the optical element 214 and the display screen 10 in turn to form the structured light. The structured light is projected to a calibration board separated by a predetermined distance from the structured light assembly 20, and is reflected by the calibration board. The structured light reflected by the calibration board passes through the display screen 10, and is received by the structured light camera 22. At this time, the reference image captured by the structured light camera 22 includes first reference spots and second reference spots at the same time. The first reference spots may be formed when the laser light is diffused by the optical element 214, diffracted by the display screen 10, and reflected by the calibration object. The second reference spots may be formed when the laser light is diffused by the optical element 214, diffracted by the display screen 10, reflected by the calibration object, and diffracted by the display screen 10 again. Although the speckle image includes both the first measurement spots and the second measurement spots, and the reference image includes both the first reference spots and the second reference spots, in this calculation method, the processor 200 does not distinguish the first measurement spots and the second measurement spots in the speckle image, and also does not distinguish the first reference spots and the second reference spots in the reference image. The processor 200 may directly calculate the depth image based on all the measurement spots and reference spots. In detail, the processor 200 first calculates the offsets of all measurement spots relative to all reference spots, and calculates pieces of depth data based on the offsets, so as to acquire the depth image.

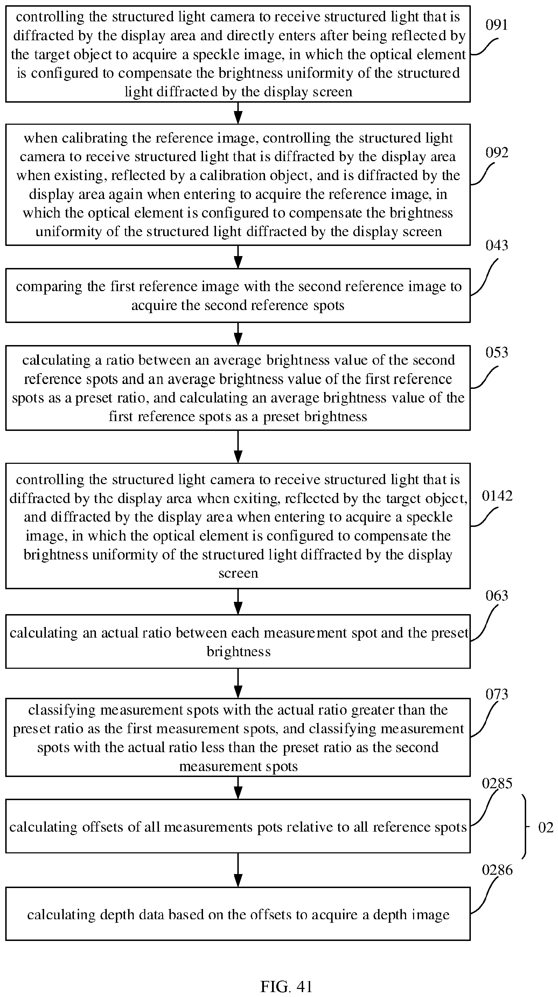

With reference to FIG. 41, in another calculation method, the action 02 may include the following.

0285: offsets of the first measurement spots relative to the first reference spots are calculated, and offsets of the second measurement spots relative to the second reference spots are calculated.

0286: depth data is calculated based on the offsets to acquire the depth image.

Correspondingly, the method for acquiring the image may include the following.

091: when calibrating the reference image, the structured light camera 22 is controlled to receive structured light that is diffracted by the display area 11, reflected by a calibration object, and enters directly to acquire the reference image. The optical element 214 is configured to compensate the brightness uniformity of the structured light diffracted by the display screen 10. The reference image may include reference spots. The reference spots may include first reference spots formed when the laser light is diffused by the optical element 214, diffracted by the display screen 10, and reflected by the calibration object.

092: when calibrating the reference image, the structured light camera 22 is controlled to receive structured light that is diffracted by the display area 11 when existing, reflected by a calibration object, and is diffracted by the display area 11 again when entering to acquire the reference image. The optical element 214 is configured to compensate the brightness uniformity of the structured light diffracted by the display screen 10. The reference image may include reference spots. The reference spots may include first reference spots formed when the laser light is diffused by the optical element 214, diffracted by the display screen 10, and reflected by the calibration object, and second reference spots formed when the laser light is diffused by the optical element 214, diffracted by the display screen 10, reflected by the calibration object, and diffracted by the display screen 10 again.

043: the first reference image is compared with the second reference image to acquire the second reference spots.

053: a ratio between an average brightness value of the second reference spots and an average brightness value of the first reference spots is calculated as a preset ratio, and an average brightness value of the first reference spots is calculated as a preset brightness.

063: an actual ratio between each measurement spot and the preset brightness is calculated.

073: measurement spots with the actual ratio greater than the preset ratio are classified as the first measurement spots, and measurement spots with the actual ratio less than the preset ratio as the second measurement spots.

With reference to FIG. 17 again, the actions 0285, 0286, 043, 053, 063, and 073 all may be implemented by the calculating module 401. The actions 091 and 092 both may be implemented by the controlling module 402.

With reference to FIG. 1 again, the actions 0285, 0286, 091, 092, 043, 053, 063, and 073 all may be implemented by the processor 200. In other words, the processor 200 may further be configured to, calculate offsets of the first measurement spots relative to the first reference spots, calculate offsets of the second measurement spots relative to the second reference spots, and calculate depth data based on the offsets to acquire the depth image. The processor 200 may be further configured to, when calibrating the reference image, control the structured light camera 22 to receive structured light that is diffracted by the display area 11, reflected by a calibration object, and enters directly to acquire the reference image; and when calibrating the reference image, control the structured light camera 22 to receive structured light that is diffracted by the display area 11 when existing, reflected by a calibration object, and is diffracted by the display area 11 again when entering to acquire the reference image. The processor 200 may further be configured to compare the first reference image with the second reference image to acquire the second reference spots; calculate a ratio between an average brightness value of the second reference spots and an average brightness value of the first reference spots as a preset ratio, and calculate an average brightness value of the first reference spots as a preset brightness. The processor 200 may be further configured to calculate an actual ratio between each measurement spot and the preset brightness, classify measurement spots with the actual ratio greater than the preset ratio as the first measurement spots, and classify measurement spots with the actual ratio less than the preset ratio as the second measurement spots.

In this calculation method, the processor 200 needs to calibrate the first reference image and the second reference image. The process for calibrating the first reference image is consistent with the calibration process of the scene described in the action 091 where the structured light projector 21 provided with the optical element 214, and the structured light camera 22 may be arranged on the side of the rear surface 13 of the display screen 10, and the light incident surface of the structured light camera 22 is aligned with the through slot 14 of the display screen 10. The process for calibrating the second reference image is consistent with the calibration process of the scene described in the action 092 where the structured light projector 21 provided with the optical element 214, and the structured light camera 22 may be arranged on the side of the rear surface 13 of the display screen 10, and the display screen 10 does not have the through slot 14. All of the above may be not repeated herein.

After the processor 200 calibrates the first reference image and the second reference image, the processor 200 marks the coordinates of the first reference spots in the first reference image, and filters out the first reference spots in the second reference image based on the coordinates of the first reference spots. The remaining reference spots in the second reference image are the second reference spots. In this way, the processor may distinguish the first reference spots and the second reference spots among all the reference spots in the second reference image.

In the subsequent calculation of the depth data, the measurement spots in the speckle image also need to be distinguished. In detail, the first measurement spots and the second measurement spots may be distinguished by brightness. It may be understood that the first measurement spots may be formed when the laser light is diffused by the optical element 214 and diffracted by the display screen 10, and the second measurement spots may be formed when the laser light is diffused by the optical element 214, and diffracted by the display screen 10 for two times. The times of diffraction of the laser light for forming the second measurement spots is more than the times of diffraction of the laser light for forming the first measurement spots. Therefore, the energy loss of the laser light for forming the first measurement spots is smaller, and the energy loss of the laser light for forming the second measurement spots is larger. The brightness of the second measurement spots will be lower than the brightness of the first measurement spots. In this way, it is feasible to distinguish the first measurement spots and the second measurement spots based on the brightness. After the calibration of the reference images is completed, it is necessary to further calibrate the preset brightness for distinguishing the first measurement spots from the second measurement spots. In detail, after the processor 200 distinguishes the first reference spots and the second reference spots, the processor 200 may calculate the average brightness value of the first reference spots in the second reference image, and calculate the average brightness value of the second reference spots in the second reference image. Subsequently, the processor 200 may use the average brightness value of the first reference spots as the preset brightness, and calculate the ratio between the average brightness value of the second reference spots and the average brightness value of the first reference spots as the preset ratio.

In the subsequent depth data calculation, the processor 200 may first calculate the brightness of each measurement spot. Subsequently, the processor 200 may calculate the actual ratio between each measurement spot and the preset brightness, and classify the measurement spots with the actual ratio greater than or equal to the preset ratio as the first measurement spots, and classify the measurement spots with the actual ratio less than the preset ratio as the second measurement spots. Therefore, the first measurement spots and the second measurement spots are distinguished.

After the processor 200 distinguishes the first measurement spots and the second measurement spots, since the first reference spots and the second reference spots in the second reference image have also been distinguished, the processor 200 may use the speckle image and the second reference image to calculate the depth data. In detail, the processor 200 first may calculate the offsets of the first measurement spots relative to the first reference spots, and the offsets of the second measurement spots relative to the second reference spots. Subsequently, the processor 200 may calculate pieces of depth data based on the offsets. The pieces of depth data may form the depth image.

Compared with the first calculation method, the second calculation method distinguishes the first measurement spots from the second measurement spots, and distinguishes the first reference spots from the second reference spots. Therefore, the more accurate offsets may be acquired based on the more accurate correspondence relationship between the first measurement spots and the first reference spots, and the more accurate correspondence relationship between the second measurement spots and the second reference spots. Furthermore, the more accurate depth data may be acquired. Therefore, the accuracy of the acquired depth image may be improved.

In some embodiments, the preset brightness and the preset ratio may be determined by the ambient brightness of the scene and the luminous power of the structured light projector 21. In this way, the accuracy of distinguishing the first measurement spots and the second measurement spots may be improved.

In summary, in the method for acquiring the image according to embodiments of the disclosure, the measurement spots in the speckle image captured by the structured light camera 22 are directly formed by the diffraction effect of the display screen 10. The processor 200 may calculate the depth image based on these measurement spots. The optical element 214 compensates the brightness uniformity of the structured light diffracted by the display screen 10, which is beneficial to improve the acquisition accuracy of the depth image.

In the description of the present disclosure, reference throughout this specification to "an embodiment," "some embodiments," "an example," "a specific example," or "some examples," means that a particular feature, structure, material, or characteristic described in connection with the embodiment or example is included in at least one embodiment or example of the present disclosure. Thus, the appearances of the phrases in various places throughout this specification are not necessarily referring to the same embodiment or example of the present disclosure. Furthermore, the particular features, structures, materials, or characteristics may be combined in any suitable manner in one or more embodiments or examples. Without a contradiction, the different embodiments or examples and the features of the different embodiments or examples can be combined by those skilled in the art.

In addition, terms such as "first" and "second" are used herein for purposes of description and are not intended to indicate or imply relative importance or significance. Furthermore, the feature defined with "first" and "second" may comprise one or more this feature distinctly or implicitly. In the description of the present disclosure, "a plurality of" means two or more than two, unless specified otherwise.

## Claims

1. A method for acquiring an image, comprising:
controlling (012) a structured light camera to receive structured light that is diffracted by a display area of a display screen when exiting from a structured light projector, then reflected by a target object, and diffracted by the display area again when entering to acquire a speckle image, the speckle image including a plurality of measurement spots, the plurality of measurement spots including first measurement spots formed when the structured light is diffracted by a diffractive optical element of the structured light projector and reflected by the target object, second measurement spots formed when the structured light is diffracted by the diffractive optical element, then diffracted by the display screen, and reflected by the target object, and third measurement spots formed when the structured light is diffracted by the diffractive optical element, diffracted by the display screen, then reflected by the target object, and diffracted by the display screen again; and
acquiring (024) a depth image based on the first measurement spots, the second measurement spots, and the third measurement spots and reference spots in a reference image.

2. The method of claim 1, wherein acquiring the depth image based on the first measurement spots, the second measurement spots, and the third measurement spots and the reference spots in the reference image, comprises:
filtering out (025) the second measurement spots and the third measurement spots from the speckle image to acquire the first measurement spots; and
acquiring (026) the depth image based on the first measurement spots and the reference spots in the reference image.

3. The method of claim 2, wherein filtering out (025) the second measurement spots and the third measurement spots from the speckle image to acquire the first measurement spots comprises:
calculating (0251) an actual ratio between each of the plurality of measurement spots and a preset brightness;
classifying (0252) measurement spots whose actual ratios are greater than a first preset ratio as the first measurement spots, classifying measurement spots whose actual ratios are less than the first preset ratio and greater than a second preset ratio as the second measurement spots, classifying measurement spots whose actual ratios are less than the second preset ratio as the third measurement spots; and
filtering out (0253) the second measurement spots and the third measurement spots from the plurality of measurement spots to acquire the first measurement spots.

4. The method of claim 2 or 3, wherein acquiring (026) the depth image based on the first measurement spots and the reference spots in the reference image, comprises:
calculating (0261) offsets of the first measurement spots relative to first reference spots, wherein the reference spots in the reference image comprises the first reference spots corresponding to the first measurement spots; and
calculating (0262) depth data based on the offsets to acquire the depth image.

5. The method of claim 3 or 4, further comprising:
when calibrating the reference image, controlling (035) the structured light camera to receive structured light that is directly reflected by a calibration object after exiting from the structured light projector and directly enters to acquire a first reference image including a plurality of reference spots, the plurality of reference spots including first reference spots formed when the structured light is diffracted by the diffractive optical element and reflected by the calibration object;
when calibrating the reference image, controlling (036) the structured light camera to receive structured light that is diffracted by the display area when exiting and directly enters after being reflected by the calibration object to acquire a second reference image including a plurality of reference spots, the plurality of reference spots including first reference spots formed when the structured light is diffracted by the diffractive optical element and reflected by the calibration object, and second reference spots formed when the structured light is diffracted by the diffractive optical element, diffracted by the display screen, and reflected by the calibration object;
when calibrating the reference image, controlling (037) the structured light camera to receive structured light that is diffracted by the display area when exiting, reflected by the calibration object, and diffracted by the display area when enters through the display area to acquire a third reference image including a plurality of reference spots, the plurality of reference spots including first reference spots formed when the structured light is diffracted by the diffractive optical element and reflected by the calibration object, second reference spots formed when the structured light is diffracted by the diffractive optical element, diffracted by the display screen, and reflected by the calibration object, and third reference spots formed when the structured light is diffracted by the diffractive optical element, diffracted by the display screen, reflected by the calibration object, and diffracted by the display screen again;
comparing (042) the first reference image with the second reference image to acquire the second reference spots, and comparing (042) the third reference image with the second reference image to acquire the third reference spots; and
calculating (052) a ratio between an average brightness value of the second reference spots and an average brightness value of the first reference spots as the first preset ratio, calculating (052) a ratio between an average brightness value of the third reference spots and an average brightness value of the first reference spots as the second preset ratio, and calculating (052) an average brightness value of the first reference spots as the preset brightness.

6. The method of claim 1, wherein acquiring (024) the depth image based on the first measurement spots, the second measurement spots, and the third measurement spots and the reference spots in the reference image, comprises:
calculating (0243) offsets of the first measurement spots relative to first reference spots, wherein the reference spots in the reference image comprises the first reference spots corresponding to the first measurement spots;
calculating (0243) offsets of the second measurement spots relative to second reference spots, wherein the reference spots in the reference image comprises the second reference spots corresponding to the second measurement spots;
calculating (0243) offsets of the third measurement spots relative to third reference spots, wherein the reference spots in the reference image comprises the third reference spots corresponding to the third measurement spots; and
calculating (0244) depth data based on the offsets to acquire the depth image.

7. The method of claim 6, further comprising:
when calibrating the reference image, controlling (035) the structured light camera to receive structured light that is directly reflected by a calibration object after exiting from the structured light projector and directly enters to acquire a first reference image including a plurality of reference spots, the plurality of reference spots including first reference spots formed when the structured light is diffracted by the diffractive optical element and reflected by the calibration object;
when calibrating the reference image, controlling (036) the structured light camera to receive structured light that is diffracted by the display area when exiting and directly enters after being reflected by the calibration object to acquire a second reference image including a plurality of reference spots, the plurality of reference spots including the first reference spots formed when the structured light is diffracted by the diffractive optical element and reflected by the calibration object, and second reference spots formed when the structured light is diffracted by the diffractive optical element, diffracted by the display screen, and reflected by the calibration object;
when calibrating the reference image, controlling (037) the structured light camera to receive structured light that is diffracted by the display area when exiting, reflected by the calibration object, and diffracted by the display area when enters through the display area to acquire a third reference image including a plurality of reference spots, the plurality of reference spots including the first reference spots formed when the structured light is diffracted by the diffractive optical element and reflected by the calibration object, the second reference spots formed when the structured light is diffracted by the diffractive optical element, diffracted by the display screen, and reflected by the calibration object, and third reference spots formed when the structured light is diffracted by the diffractive optical element, diffracted by the display screen, reflected by the calibration object, and diffracted by the display screen again.

8. The method of claim 2, further comprising:
when calibrating the reference image, controlling (035) the structured light camera to receive structured light that is directly reflected by a calibration object after exiting from the structured light projector and directly enters to acquire a first reference image including a plurality of reference spots, the plurality of reference spots including first reference spots formed when the structured light is diffracted by the diffractive optical element and reflected by the calibration object;
wherein acquiring (026) the depth image based on the first measurement spots and the reference spots in the reference image comprises:
calculating (0261) offsets of the first measurement spots relative to the first reference spots; and
calculating (0262) depth data based on the offsets to acquire the depth image.

9. An electronic device, comprising:
a housing;
a display screen arranged on the housing;
a structured light projector (21);
a structured light camera (22), and
a processor (200), wherein the processor (200) is configured to:
control the structured light camera (22) to receive structured light that is diffracted by a display area of a display screen when exiting from a structured light projector, then reflected by a target object, and diffracted by the display area again when entering to acquire a speckle image, the speckle image including a plurality of measurement spots, the plurality of measurement spots including first measurement spots formed when the structured light is diffracted by a diffractive optical element of the structured light projector and reflected by the target object, second measurement spots formed when the structured light is diffracted by the diffractive optical element, then diffracted by the display screen, and reflected by the target object, and third measurement spots formed when the structured light is diffracted by the diffractive optical element, diffracted by the display screen, then reflected by the target object, and diffracted by the display screen again; and
acquire a depth image based on the first measurement spots, the second measurement spots, and the third measurement spots and reference spots in a reference image.

10. The electronic device of claim 9, wherein the processor (200) is configured to:
filter out the second measurement spots and the third measurement spots from the speckle image to acquire the first measurement spots; and
acquire the depth image based on the first measurement spots and the reference spots in the reference image.

11. The electronic device of claim 10, wherein the processor (200) is configured to:
calculate an actual ratio between each of the plurality of measurement spots and a preset brightness;
classify measurement spots whose actual ratios are greater than a first preset ratio as the first measurement spots, classify measurement spots whose actual ratios are less than the first preset ratio and greater than a second preset ratio as the second measurement spots, classify measurement spots whose actual ratios are less than the second preset ratio as the third measurement spots; and
filtering out the second measurement spots and the third measurement spots from the plurality of measurement spots to acquire the first measurement spots.

12. The electronic device of claim 10 or 11, wherein the processor (200) is configured to:
calculate offsets of the first measurement spots relative to first reference spots, wherein the reference spots in the reference image comprises the first reference spots corresponding to the first measurement spots; and
calculate depth data based on the offsets to acquire the depth image.

13. The electronic device of claim 11 or 12, wherein the processor (200) is configured to:
when calibrating the reference image, control the structured light camera to receive structured light that is directly reflected by a calibration object after exiting from the structured light projector and directly enters to acquire a first reference image including a plurality of reference spots, the plurality of reference spots including first reference spots formed when the structured light is diffracted by the diffractive optical element and reflected by the calibration object;
when calibrating the reference image, control the structured light camera to receive structured light that is diffracted by the display area when exiting and directly enters after being reflected by the calibration object to acquire a second reference image including a plurality of reference spots, the plurality of reference spots including the
first reference spots formed when the structured light is diffracted by the diffractive optical element and reflected by the calibration object, and second reference spots formed when the structured light is diffracted by the diffractive optical element, diffracted by the display screen, and reflected by the calibration object;
when calibrating the reference image, control the structured light camera to receive structured light that is diffracted by the display area when exiting, reflected by the calibration object, and diffracted by the display area when enters through the display area to acquire a third reference image including a plurality of reference spots, the plurality of reference spots including the first reference spots formed when the structured light is diffracted by the diffractive optical element and reflected by the calibration object, the second reference spots formed when the structured light is diffracted by the diffractive optical element, diffracted by the display screen, and reflected by the calibration object, and third reference spots formed when the structured light is diffracted by the diffractive optical element, diffracted by the display screen, reflected by the calibration object, and diffracted by the display screen again;
compare the first reference image with the second reference image to acquire the second reference spots, and compare the third reference image with the second reference image to acquire the third reference spots; and
calculate a ratio between an average brightness value of the second reference spots and an average brightness value of the first reference spots as the first preset ratio, calculate a ratio between an average brightness value of the third reference spots and an average brightness value of the first reference spots as the second preset ratio, and calculate an average brightness value of the first reference spots as the preset brightness.

14. The electronic device of claim 9, wherein the processor (200) is configured to:
calculate offsets of the first measurement spots relative to first reference spots, wherein the reference spots in the reference image comprises the first reference spots corresponding to the first measurement spots;
calculate offsets of the second measurement spots relative to second reference spots, wherein the reference spots in the reference image comprises the second reference spots corresponding to the second measurement spots;
calculate offsets of the third measurement spots relative to third reference spots, wherein the reference spots in the reference image comprises the third reference spots corresponding to the third measurement spots; and
calculate depth data based on the offsets to acquire the depth image.

## Patentansprüche

1. Verfahren zum Erfassen eines Bilds, das Folgendes umfasst:
Steuern (012) einer Streifenlichtkamera zum Empfangen von Streifenlicht, das beim Austreten aus einem Streifenlichtprojektor von einer Anzeigefläche eines Bildschirms gebeugt, dann von einem Zielobjekt reflektiert und beim Eintreten erneut von der Anzeigefläche gebeugt wird, um ein Specklebild zu erfassen, wobei das Specklebild eine Vielzahl von Messpunkten enthält, wobei die Vielzahl von Messpunkten erste Messpunkte, die gebildet werden, wenn das Streifenlicht von einem diffraktiven optischen Element des Streifenlichtprojektors gebeugt und von dem Zielobjekt reflektiert wird, zweite Messpunkte, die gebildet werden, wenn das Streifenlicht von dem diffraktiven optischen Element gebeugt, dann von dem Bildschirm gebeugt und von dem Zielobjekt reflektiert wird, und dritte Messpunkte, die gebildet werden, wenn das Streifenlicht von dem diffraktiven optischen Element gebeugt, von dem Bildschirm gebeugt, dann von dem Zielobjekt reflektiert und erneut von dem Bildschirm gebeugt wird, enthält; und
Erfassen (024) eines Tiefenbilds basierend auf den ersten Messpunkten, den zweiten Messpunkten und den dritten Messpunkten und Referenzpunkten in einem Referenzbild.

2. Verfahren nach Anspruch 1, wobei das Erfassen des Tiefenbilds basierend auf den ersten Messpunkten, den zweiten Messpunkten und den dritten Messpunkten und den Referenzpunkten in dem Referenzbild Folgendes umfasst:
Herausfiltern (025) der zweiten Messpunkte und der dritten Messpunkte aus dem Specklebild, um die ersten Messpunkte zu erfassen; und
Erfassen (026) des Tiefenbilds basierend auf den ersten Messpunkten und den Referenzpunkten in dem Referenzbild.

3. Verfahren nach Anspruch 2, wobei das Herausfiltern (025) der zweiten Messpunkte und der dritten Messpunkte aus dem Specklebild, um die ersten Messpunkte zu erfassen, Folgendes umfasst:
Berechnen (0251) eines tatsächlichen Verhältnisses zwischen jedem der Vielzahl von Messpunkten und einer voreingestellten Helligkeit;
Klassifizieren (0252) von Messpunkten, deren tatsächliche Verhältnisse größer als ein erstes voreingestelltes Verhältnis sind, als die ersten Messpunkte, Klassifizieren von Messpunkten, deren tatsächliche Verhältnisse kleiner als das erste voreingestellte Verhältnis und größer als ein zweites voreingestelltes Verhältnis sind, als die zweiten Messpunkte, Klassifizieren von Messpunkten, deren tatsächliche Verhältnisse kleiner als das zweite voreingestellte Verhältnis sind, als die dritten Messpunkte; und
Herausfiltern (0253) der zweiten Messpunkte und der dritten Messpunkte aus der Vielzahl von Messpunkten, um die ersten Messpunkte zu erfassen.

4. Verfahren nach Anspruch 2 oder 3, wobei das Erfassen (026) des Tiefenbilds basierend auf den ersten Messpunkten und den Referenzpunkten in dem Referenzbild Folgendes umfasst:
Berechnen (0261) von Versätzen der ersten Messpunkte relativ zu ersten Referenzpunkten, wobei die Referenzpunkte in dem Referenzbild die ersten Referenzpunkte, die mit den ersten Messpunkten korrespondieren, umfassen; und
Berechnen (0262) von Tiefendaten basierend auf den Versätzen, um das Tiefenbild zu erfassen.

5. Verfahren nach Anspruch 3 oder 4, das ferner Folgendes umfasst:
beim Kalibrieren des Referenzbilds Steuern (035) der Streifenlichtkamera zum Empfangen von Streifenlicht, das nach dem Austreten aus dem Streifenlichtprojektor direkt von einem Kalibrierobjekt reflektiert wird und direkt eintritt, um ein erstes Referenzbild, das eine Vielzahl von Referenzpunkten enthält, zu erfassen, wobei die Vielzahl von Referenzpunkten erste Referenzpunkte, die gebildet werden, wenn das Streifenlicht von dem diffraktiven optischen Element gebeugt und von dem Kalibrierobjekt reflektiert wird, enthält;
beim Kalibrieren des Referenzbilds Steuern (036) der Streifenlichtkamera zum Empfangen von Streifenlicht, das beim Austreten von der Anzeigefläche gebeugt wird und direkt eintritt, nachdem es von dem Kalibrierobjekt reflektiert worden ist, um ein zweites Referenzbild, das eine Vielzahl von Referenzpunkten enthält, zu erfassen, wobei die Vielzahl von Referenzpunkten erste Referenzpunkte, die gebildet werden, wenn das Streifenlicht von dem diffraktiven optischen Element gebeugt und von dem Kalibrierobjekt reflektiert wird, und zweite Referenzpunkte, die gebildet werden, wenn das Streifenlicht von dem diffraktiven optischen Element gebeugt, von dem Bildschirm gebeugt und von dem Kalibrierobjekt reflektiert wird, enthält;
beim Kalibrieren des Referenzbilds Steuern (037) der Streifenlichtkamera zum Empfangen von Streifenlicht, das beim Austreten von der Anzeigefläche gebeugt, von dem Kalibrierobjekt reflektiert und von der Anzeigefläche gebeugt wird, wenn es durch die Anzeigefläche eintritt, um ein drittes Referenzbild, das eine Vielzahl von Referenzpunkten enthält, zu erfassen, wobei die Vielzahl von Referenzpunkten erste Referenzpunkte, die gebildet werden, wenn das Streifenlicht von dem diffraktiven optischen Element gebeugt und von dem Kalibrierobjekt reflektiert wird, zweite Referenzpunkte, die gebildet werden, wenn das Streifenlicht von dem diffraktiven optischen Element gebeugt, von dem Bildschirm gebeugt und von dem Kalibrierobjekt reflektiert wird, und dritte Referenzpunkte, die gebildet werden, wenn das Streifenlicht von dem diffraktiven optischen Element gebeugt, von dem Bildschirm gebeugt, von dem Kalibrierobjekt reflektiert und erneut von dem Bildschirm gebeugt wird, enthält;
Vergleichen (042) des ersten Referenzbilds mit dem zweiten Referenzbild, um die zweiten Referenzpunkte zu erfassen, und Vergleichen (042) des dritten Referenzbilds mit dem zweiten Referenzbild, um die dritten Referenzpunkte zu erfassen; und
Berechnen (052) eines Verhältnisses zwischen einem durchschnittlichen Helligkeitswert der zweiten Referenzpunkte und einem durchschnittlichen Helligkeitswert der ersten Referenzpunkte als das erste voreingestellte Verhältnis, Berechnen (052) eines Verhältnisses zwischen einem durchschnittlichen Helligkeitswert der dritten Referenzpunkte und einem durchschnittlichen Helligkeitswert der ersten Referenzpunkte als das zweite voreingestellte Verhältnis und Berechnen (052) eines durchschnittlichen Helligkeitswerts der ersten Referenzpunkte als die voreingestellte Helligkeit.

6. Verfahren nach Anspruch 1, wobei das Erfassen (024) des Tiefenbilds basierend auf den ersten Messpunkten, den zweiten Messpunkten und den dritten Messpunkten und den Referenzpunkten in dem Referenzbild Folgendes umfasst:
Berechnen (0243) von Versätzen der ersten Messpunkte relativ zu ersten Referenzpunkten, wobei die Referenzpunkte in dem Referenzbild die ersten Referenzpunkte, die mit den ersten Messpunkten korrespondieren, umfassen;
Berechnen (0243) von Versätzen der zweiten Messpunkte relativ zu zweiten Referenzpunkten, wobei die Referenzpunkte in dem Referenzbild die zweiten Referenzpunkte, die mit den zweiten Messpunkten korrespondieren, umfassen;
Berechnen (0243) von Versätzen der dritten Messpunkte relativ zu dritten Referenzpunkten, wobei die Referenzpunkte in dem Referenzbild die dritten Referenzpunkte, die mit den dritten Messpunkten korrespondieren, umfassen; und
Berechnen (0244) von Tiefendaten basierend auf den Versätzen, um das Tiefenbild zu erfassen.

7. Verfahren nach Anspruch 6, das ferner Folgendes umfasst:
beim Kalibrieren des Referenzbilds Steuern (035) der Streifenlichtkamera zum Empfangen von Streifenlicht, das nach dem Austreten aus dem Streifenlichtprojektor direkt von einem Kalibrierobjekt reflektiert wird und direkt eintritt, um ein erstes Referenzbild, das eine Vielzahl von Referenzpunkten enthält, zu erfassen, wobei die Vielzahl von Referenzpunkten erste Referenzpunkte, die gebildet werden, wenn das Streifenlicht von dem diffraktiven optischen Element gebeugt und von dem Kalibrierobjekt reflektiert wird, enthält;
beim Kalibrieren des Referenzbilds Steuern (036) der Streifenlichtkamera zum Empfangen von Streifenlicht, das beim Austreten von der Anzeigefläche gebeugt wird und direkt eintritt, nachdem es von dem Kalibrierobjekt reflektiert worden ist, um ein zweites Referenzbild, das eine Vielzahl von Referenzpunkten enthält, zu erfassen, wobei die Vielzahl von Referenzpunkten die ersten Referenzpunkte, die gebildet werden, wenn das Streifenlicht von dem diffraktiven optischen Element gebeugt und von dem Kalibrierobjekt reflektiert wird, und zweite Referenzpunkte, die gebildet werden, wenn das Streifenlicht von dem diffraktiven optischen Element gebeugt, von dem Bildschirm gebeugt und von dem Kalibrierobjekt reflektiert wird, enthält;
beim Kalibrieren des Referenzbilds Steuern (037) der Streifenlichtkamera zum Empfangen von Streifenlicht, das beim Austreten von der Anzeigefläche gebeugt, von dem Kalibrierobjekt reflektiert und von der Anzeigefläche gebeugt wird, wenn es durch die Anzeigefläche eintritt, um ein drittes Referenzbild, das eine Vielzahl von Referenzpunkten enthält, zu erfassen, wobei die Vielzahl von Referenzpunkten die ersten Referenzpunkte, die gebildet werden, wenn das Streifenlicht von dem diffraktiven optischen Element gebeugt und von dem Kalibrierobjekt reflektiert wird, die zweiten Referenzpunkte, die gebildet werden, wenn das Streifenlicht von dem diffraktiven optischen Element gebeugt, von dem Bildschirm gebeugt und von dem Kalibrierobjekt reflektiert wird, und dritte Referenzpunkte, die gebildet werden, wenn das Streifenlicht von dem diffraktiven optischen Element gebeugt, von dem Bildschirm gebeugt, von dem Kalibrierobjekt reflektiert und erneut von dem Bildschirm gebeugt wird, enthält.

8. Verfahren nach Anspruch 2, das ferner Folgendes umfasst:
beim Kalibrieren des Referenzbilds Steuern (035) der Streifenlichtkamera zum Empfangen von Streifenlicht, das nach dem Austreten aus dem Streifenlichtprojektor direkt von einem Kalibrierobjekt reflektiert wird und direkt eintritt, um ein erstes Referenzbild, das eine Vielzahl von Referenzpunkten enthält, zu erfassen, wobei die Vielzahl von Referenzpunkten erste Referenzpunkte, die gebildet werden, wenn das Streifenlicht von dem diffraktiven optischen Element gebeugt und von dem Kalibrierobjekt reflektiert wird, enthält;
wobei das Erfassen (026) des Tiefenbilds basierend auf den ersten Messpunkten und den Referenzpunkten in dem Referenzbild Folgendes umfasst:
Berechnen (0261) von Versätzen der ersten Messpunkte relativ zu den ersten Referenzpunkten; und
Berechnen (0262) von Tiefendaten basierend auf den Versätzen, um das Tiefenbild zu erfassen.

9. Elektronisches Gerät, das Folgendes umfasst:
ein Gehäuse;
einen auf dem Gehäuse angeordneten Bildschirm;
einen Streifenlichtprojektor (21);
eine Streifenlichtkamera (22); und
einen Prozessor (200), wobei der Prozessor (200) für Folgendes konfiguriert ist:
Steuern der Streifenlichtkamera (22) zum Empfangen von Streifenlicht, das beim Austreten aus einem Streifenlichtprojektor von einer Anzeigefläche eines Bildschirms gebeugt, dann von einem Zielobjekt reflektiert und beim Eintreten erneut von der Anzeigefläche gebeugt wird, um ein Specklebild zu erfassen, wobei das Specklebild eine Vielzahl von Messpunkten enthält, wobei die Vielzahl von Messpunkten erste Messpunkte, die gebildet werden, wenn das Streifenlicht von einem diffraktiven optischen Element des Streifenlichtprojektors gebeugt und von dem Zielobjekt reflektiert wird, zweite Messpunkte, die gebildet werden, wenn das Streifenlicht von dem diffraktiven optischen Element gebeugt, dann von dem Bildschirm gebeugt und von dem Zielobjekt reflektiert wird, und dritte Messpunkte, die gebildet werden, wenn das Streifenlicht von dem diffraktiven optischen Element gebeugt, von dem Bildschirm gebeugt, dann von dem Zielobjekt reflektiert und erneut von dem Bildschirm gebeugt wird, enthält; und
Erfassen eines Tiefenbilds basierend auf den ersten Messpunkten, den zweiten Messpunkten und den dritten Messpunkten und Referenzpunkten in einem Referenzbild.

10. Elektronisches Gerät nach Anspruch 9, wobei der Prozessor (200) für Folgendes konfiguriert ist:
Herausfiltern der zweiten Messpunkte und der dritten Messpunkte aus dem Specklebild, um die ersten Messpunkte zu erfassen; und
Erfassen des Tiefenbilds basierend auf den ersten Messpunkten und den Referenzpunkten in dem Referenzbild.

11. Elektronisches Gerät nach Anspruch 10, wobei der Prozessor (200) für Folgendes konfiguriert ist:
Berechnen eines tatsächlichen Verhältnisses zwischen jedem der Vielzahl von Messpunkten und einer voreingestellten Helligkeit;
Klassifizieren von Messpunkten, deren tatsächliche Verhältnisse größer als ein erstes voreingestelltes Verhältnis sind, als die ersten Messpunkte, Klassifizieren von Messpunkten, deren tatsächliche Verhältnisse kleiner als das erste voreingestellte Verhältnis und größer als ein zweites voreingestelltes Verhältnis sind, als die zweiten Messpunkte, Klassifizieren von Messpunkten, deren tatsächliche Verhältnisse kleiner als das zweite voreingestellte Verhältnis sind, als die dritten Messpunkte; und
Herausfiltern der zweiten Messpunkte und der dritten Messpunkte aus der Vielzahl von Messpunkten, um die ersten Messpunkte zu erfassen.

12. Elektronisches Gerät nach Anspruch 10 oder 11, wobei der Prozessor (200) für Folgendes konfiguriert ist:
Berechnen von Versätzen der ersten Messpunkte relativ zu ersten Referenzpunkten, wobei die Referenzpunkte in dem Referenzbild die ersten Referenzpunkte, die mit den ersten Messpunkten korrespondieren, umfassen; und
Berechnen von Tiefendaten basierend auf den Versätzen, um das Tiefenbild zu erfassen.

13. Elektronisches Gerät nach Anspruch 11 oder 12, wobei der Prozessor (200) für Folgendes konfiguriert ist:
beim Kalibrieren des Referenzbilds Steuern der Streifenlichtkamera zum Empfangen von Streifenlicht, das nach dem Austreten aus dem Streifenlichtprojektor direkt von einem Kalibrierobjekt reflektiert wird und direkt eintritt, um ein erstes Referenzbild, das eine Vielzahl von Referenzpunkten enthält, zu erfassen, wobei die Vielzahl von Referenzpunkten erste Referenzpunkte, die gebildet werden, wenn das Streifenlicht von dem diffraktiven optischen Element gebeugt und von dem Kalibrierobjekt reflektiert wird, enthält;
beim Kalibrieren des Referenzbilds Steuern der Streifenlichtkamera zum Empfangen von Streifenlicht, das beim Austreten von der Anzeigefläche gebeugt wird und direkt eintritt, nachdem es von dem Kalibrierobjekt reflektiert worden ist, um ein zweites Referenzbild, das eine Vielzahl von Referenzpunkten enthält, zu erfassen, wobei die Vielzahl von Referenzpunkten die ersten Referenzpunkte, die gebildet werden, wenn das Streifenlicht von dem diffraktiven optischen Element gebeugt und von dem Kalibrierobjekt reflektiert wird, und zweite Referenzpunkte, die gebildet werden, wenn das Streifenlicht von dem diffraktiven optischen Element gebeugt, von dem Bildschirm gebeugt und von dem Kalibrierobjekt reflektiert wird, enthält;
beim Kalibrieren des Referenzbilds Steuern der Streifenlichtkamera zum Empfangen von Streifenlicht, das beim Austreten von der Anzeigefläche gebeugt, von dem Kalibrierobjekt reflektiert und von der Anzeigefläche gebeugt wird, wenn es durch die Anzeigefläche eintritt, um ein drittes Referenzbild, das eine Vielzahl von Referenzpunkten enthält, zu erfassen, wobei die Vielzahl von Referenzpunkten die ersten Referenzpunkte, die gebildet werden, wenn das Streifenlicht von dem diffraktiven optischen Element gebeugt und von dem Kalibrierobjekt reflektiert wird, die zweiten Referenzpunkte, die gebildet werden, wenn das Streifenlicht von dem diffraktiven optischen Element gebeugt, von dem Bildschirm gebeugt und von dem Kalibrierobjekt reflektiert wird, und dritte Referenzpunkte, die gebildet werden, wenn das Streifenlicht von dem diffraktiven optischen Element gebeugt, von dem Bildschirm gebeugt, von dem Kalibrierobjekt reflektiert und erneut von dem Bildschirm gebeugt wird, enthält;
Vergleichen des ersten Referenzbilds mit dem zweiten Referenzbild, um die zweiten Referenzpunkte zu erfassen, und Vergleichen des dritten Referenzbilds mit dem zweiten Referenzbild, um die dritten Referenzpunkte zu erfassen; und
Berechnen eines Verhältnisses zwischen einem durchschnittlichen Helligkeitswert der zweiten Referenzpunkte und einem durchschnittlichen Helligkeitswert der ersten Referenzpunkte als das erste voreingestellte Verhältnis, Berechnen eines Verhältnisses zwischen einem durchschnittlichen Helligkeitswert der dritten Referenzpunkte und einem durchschnittlichen Helligkeitswert der ersten Referenzpunkte als das zweite voreingestellte Verhältnis und Berechnen eines durchschnittlichen Helligkeitswerts der ersten Referenzpunkte als die voreingestellte Helligkeit.

14. Elektronisches Gerät nach Anspruch 9, wobei der Prozessor (200) für Folgendes konfiguriert ist:
Berechnen von Versätzen der ersten Messpunkte relativ zu ersten Referenzpunkten, wobei die Referenzpunkte in dem Referenzbild die ersten Referenzpunkte, die mit den ersten Messpunkten korrespondieren, umfassen;
Berechnen von Versätzen der zweiten Messpunkte relativ zu zweiten Referenzpunkten, wobei die Referenzpunkte in dem Referenzbild die zweiten Referenzpunkte, die mit den zweiten Messpunkten korrespondieren, umfassen;
Berechnen von Versätzen der dritten Messpunkte relativ zu dritten Referenzpunkten, wobei die Referenzpunkte in dem Referenzbild die dritten Referenzpunkte, die mit den dritten Messpunkten korrespondieren, umfassen; und
Berechnen von Tiefendaten basierend auf den Versätzen, um das Tiefenbild zu erfassen.

## Revendications

1. Procédé d'acquisition d'une image, comprenant :
la commande (012) d'une caméra à lumière structurée pour recevoir une lumière structurée qui est diffractée par une zone d'affichage d'un écran d'affichage lorsqu'elle sort d'un projecteur de lumière structurée, puis réfléchie par un objet cible, et diffractée de nouveau par la zone d'affichage lorsqu'elle entre pour acquérir une image tachetée, l'image tachetée comprenant une pluralité de points de mesure, la pluralité de points de mesure comprenant des premiers points de mesure formés lorsque la lumière structurée est diffractée par un élément optique de diffraction du projecteur de lumière structurée et réfléchie par l'objet cible, des deuxièmes points de mesure formés lorsque la lumière structurée est diffractée par l'élément optique de diffraction, puis diffractée par l'écran d'affichage, et réfléchie par l'objet cible, et des troisièmes points de mesure formés lorsque la lumière structurée est diffractée par l'élément optique de diffraction, diffractée par l'écran d'affichage, puis réfléchie par l'objet cible, et diffractée de nouveau par l'écran d'affichage ; et
l'acquisition (024) d'une image en profondeur sur la base des premiers points de mesure, des deuxièmes points de mesure et des troisièmes points de mesure et de points de référence dans une image de référence.

2. Procédé selon la revendication 1, dans lequel l'acquisition de l'image en profondeur sur la base des premiers points de mesure, des deuxièmes points de mesure et des troisièmes points de mesure et des points de référence dans l'image de référence comprend :
le filtrage (025) des deuxièmes points de mesure et des troisièmes points de mesure de l'image tachetée pour acquérir les premiers points de mesure ; et
l'acquisition (026) de l'image en profondeur sur la base des premiers points de mesure et des points de référence dans l'image de référence.

3. Procédé selon la revendication 2, dans lequel le filtrage (025) des deuxièmes points de mesure et des troisièmes points de mesure de l'image tachetée pour acquérir les premiers points de mesure comprend :
le calcul (0251) d'un rapport réel entre chacun de la pluralité de points de mesure et une luminosité prédéfinie ;
la classification (0252) des points de mesure dont les rapports réels sont supérieurs à un premier rapport prédéfini en tant que premiers points de mesure, la classification des points de mesure dont les rapports réels sont inférieurs au premier rapport prédéfini et supérieurs à un second rapport prédéfini en tant que deuxièmes points de mesure, la classification des points de mesure dont les rapports réels sont inférieurs au second rapport prédéfini en tant que troisièmes points de mesure ; et
le filtrage (0253) des deuxièmes points de mesure et des troisièmes points de mesure de la pluralité de points de mesure pour acquérir les premiers points de mesure.

4. Procédé selon la revendication 2 ou 3, dans lequel l'acquisition (026) de l'image en profondeur sur la base des premiers points de mesure et des points de référence dans l'image de référence comprend :
le calcul (0261) de décalages des premiers points de mesure par rapport à des premiers points de référence, dans lequel les points de référence dans l'image de référence comprennent les premiers points de référence correspondant aux premiers points de mesure ; et
le calcul (0262) de données de profondeur sur la base des décalages pour acquérir l'image en profondeur.

5. Procédé selon la revendication 3 ou 4, comprenant en outre :
lors de l'étalonnage de l'image de référence, la commande (035) de la caméra à lumière structurée pour recevoir une lumière structurée qui est directement réfléchie par un objet d'étalonnage après être sortie du projecteur de lumière structurée et entre directement pour acquérir une première image de référence comprenant une pluralité de points de référence, la pluralité de points de référence comprenant des premiers points de référence formés lorsque la lumière structurée est diffractée par l'élément optique de diffraction et réfléchie par l'objet d'étalonnage ;
lors de l'étalonnage de l'image de référence, la commande (036) de la caméra à image structurée pour recevoir une lumière structurée qui est diffractée par la zone d'affichage lorsqu'elle sort et entre directement après avoir été réfléchie par l'objet d'étalonnage pour acquérir une deuxième image de référence comprenant une pluralité de points de référence, la pluralité de points de référence comprenant des premiers points de référence formés lorsque la lumière structurée est diffractée par l'élément optique de diffraction et réfléchie par l'objet d'étalonnage, et des deuxièmes points de référence formés lorsque la lumière structurée est diffractée par l'élément optique de diffraction, diffractée par l'écran d'affichage et réfléchie par l'objet d'étalonnage ;
lors de l'étalonnage de l'image de référence, la commande (037) de la caméra à image structurée pour recevoir une lumière structurée qui est diffractée par la zone d'affichage lorsqu'elle sort, réfléchie par l'objet d'étalonnage, et diffractée par la zone d'affichage lorsqu'elle entre dans la zone d'affichage pour acquérir une troisième image de référence comprenant une pluralité de points de référence, la pluralité de points de référence comprenant des premiers points de référence formés lorsque la lumière structurée est diffractée par l'élément optique de diffraction et réfléchie par l'objet d'étalonnage, des deuxièmes points de référence formés lorsque la lumière structurée est diffractée par l'élément optique de diffraction, diffractée par l'écran d'affichage et réfléchie par l'objet d'étalonnage, et des troisièmes points de référence formés lorsque la lumière structurée est diffractée par l'élément optique de diffraction, diffractée par l'écran d'affichage, réfléchie par l'objet d'étalonnage et diffractée de nouveau par l'écran d'affichage ;
la comparaison (042) de la première image de référence et de la deuxième image de référence pour acquérir les deuxièmes points de référence, et la comparaison (042) de la troisième image de référence et de la deuxième image de référence pour acquérir les troisièmes points de référence ; et
le calcul (052) d'un rapport entre une valeur de luminosité moyenne des deuxièmes points de référence et une valeur de luminosité moyenne des premiers points de référence en tant que premier rapport prédéfini, le calcul (052) d'un rapport entre une valeur de luminosité moyenne des troisièmes points de référence et une valeur de luminosité moyenne des premiers points de référence en tant que second rapport prédéfini, et le calcul (052) d'une valeur de luminosité moyenne des premiers points de référence en tant que luminosité prédéfinie.

6. Procédé selon la revendication 1, dans lequel l'acquisition (024) de l'image en profondeur sur la base des premiers points de mesure, des deuxièmes points de mesure, et des troisièmes points de mesure et des points de référence dans l'image de référence comprend :
le calcul (0243) de décalages des premiers points de mesure par rapport aux premiers points de référence, dans lequel les points de référence dans l'image de référence comprennent les premiers points de référence correspondant aux premiers points de mesure ;
le calcul (0243) de décalages des deuxièmes points de mesure par rapport aux deuxièmes points de référence, dans lequel les points de référence dans l'image de référence comprennent les deuxièmes points de référence correspondant aux deuxièmes points de mesure ;
le calcul (0243) de décalages des troisièmes points de mesure par rapport aux troisièmes points de référence, dans lequel les points de référence dans l'image de référence comprennent les troisièmes points de référence correspondant aux troisièmes points de mesure ; et
le calcul (0244) de données de profondeur sur la base des décalages pour acquérir l'image en profondeur.

7. Procédé selon la revendication 6, comprenant en outre
lors de l'étalonnage de l'image de référence, la commande (035) de la caméra à lumière structurée pour recevoir une lumière structurée qui est directement réfléchie par un objet d'étalonnage après être sortie du projecteur de lumière structurée et entre directement pour acquérir une première image de référence comprenant une pluralité de points de référence, la pluralité de points de référence comprenant des premiers points de référence formés lorsque la lumière structurée est diffractée par l'élément optique de diffraction et réfléchie par l'objet d'étalonnage ;
lors de l'étalonnage de l'image de référence, la commande (036) de la caméra à image structurée pour recevoir une lumière structurée qui est diffractée par la zone d'affichage lorsqu'elle sort et entre directement après avoir été réfléchie par l'objet d'étalonnage pour acquérir une deuxième image de référence comprenant une pluralité de points de référence, la pluralité de points de référence comprenant les premiers points de référence formés lorsque la lumière structurée est diffractée par l'élément optique de diffraction et réfléchie par l'objet d'étalonnage, et des deuxièmes points de référence formés lorsque la lumière structurée est diffractée par l'élément optique de diffraction, diffractée par l'écran d'affichage et réfléchie par l'objet d'étalonnage ;
lors de l'étalonnage de l'image de référence, la commande (037) de la caméra à image structurée pour recevoir une lumière structurée qui est diffractée par la zone d'affichage lorsqu'elle sort, réfléchie par l'objet d'étalonnage, et diffractée par la zone d'affichage lorsqu'elle entre dans la zone d'affichage pour acquérir une troisième image de référence comprenant une pluralité de points de référence, la pluralité de points de référence comprenant les premiers points de référence formés lorsque la lumière structurée est diffractée par l'élément optique de diffraction et réfléchie par l'objet d'étalonnage, les deuxièmes points de référence formés lorsque la lumière structurée est diffractée par l'élément optique de diffraction, diffractée par l'écran d'affichage et réfléchie par l'objet d'étalonnage, et des troisièmes points de référence formés lorsque la lumière structurée est diffractée par l'élément optique de diffraction, diffractée par l'écran d'affichage, réfléchie par l'objet d'étalonnage et diffractée de nouveau par l'écran d'affichage.

8. Procédé selon la revendication 2, comprenant en outre
lors de l'étalonnage de l'image de référence, la commande (035) de la caméra à lumière structurée pour recevoir une lumière structurée qui est directement réfléchie par un objet d'étalonnage après être sortie du projecteur de lumière structurée et entre directement pour acquérir une première image de référence comprenant une pluralité de points de référence, la pluralité de points de référence comprenant des premiers points de référence formés lorsque la lumière structurée est diffractée par l'élément optique de diffraction et réfléchie par l'objet d'étalonnage ;
dans lequel l'acquisition (026) de l'image en profondeur sur la base des premiers points de mesure et des points de référence dans l'image de référence comprend :
le calcul (0261) de décalages des premiers points de mesure par rapport aux premiers points de référence ; et le calcul (0262) de données de profondeur sur la base des décalages pour acquérir l'image en profondeur.

9. Dispositif électronique, comprenant :
un boîtier ;
un écran d'affichage disposé sur le boîtier ;
un projecteur de lumière structurée (21) ;
une caméra à lumière structurée (22), et
un processeur (200), dans lequel le processeur (200) est configuré pour :
commander la caméra à lumière structurée (22) pour recevoir une lumière structurée qui est diffractée par une zone d'affichage d'un écran d'affichage lorsqu'elle sort d'un projecteur de lumière structurée, puis réfléchie par un objet cible, et diffractée de nouveau par la zone d'affichage lorsqu'elle entre pour acquérir une image tachetée, l'image tachetée comprenant une pluralité de points de mesure, la pluralité de points de mesure comprenant des premiers points de mesure formés lorsque la lumière structurée est diffractée par un élément optique de diffraction du projecteur de lumière structurée et réfléchie par l'objet cible, des deuxièmes points de mesure formés lorsque la lumière structurée est diffractée par l'élément optique de diffraction, puis diffractée par l'écran d'affichage, et réfléchie par l'objet cible, et des troisièmes points de mesure formés lorsque la lumière structurée est diffractée par l'élément optique de diffraction, diffractée par l'écran d'affichage, puis réfléchie par l'objet cible, et diffractée de nouveau par l'écran d'affichage ; et
acquérir une image en profondeur sur la base des premiers points de mesure, des deuxièmes points de mesure et des troisièmes points de mesure et de points de référence dans une image de référence.

10. Dispositif électronique selon la revendication 9, dans lequel le processeur (200) est configuré pour :
filtrer les deuxièmes points de mesure et les troisièmes points de mesure de l'image tachetée pour acquérir les premiers points de mesure ; et
acquérir l'image en profondeur sur la base des premiers points de mesure et des points de référence dans l'image de référence.

11. Dispositif électronique selon la revendication 10, dans lequel le processeur (200) est configuré pour :
calculer un rapport réel entre chacun de la pluralité de points de mesure et une luminosité prédéfinie ;
classifier des points de mesure dont les rapports réels sont supérieurs à un premier rapport prédéfini en tant que premier points de mesure, classifier des points de mesure dont les rapports réels sont inférieurs au premier rapport prédéfini et supérieurs à un second rapport prédéfini en tant que deuxièmes points de mesure, classifier des points de mesure dont les rapports réels sont inférieurs au second rapport prédéfini en tant que troisièmes points de mesure ; et
filtrer les deuxièmes points de mesure et les troisièmes points de mesure de la pluralité de points de mesure pour acquérir les premiers points de mesure.

12. Dispositif électronique selon la revendication 10 ou 11, dans lequel le processeur (200) est configuré pour :
calculer des décalages des premiers points de mesure par rapport à des premiers points de référence, dans lequel les points de référence dans l'image de référence comprennent les premiers points de référence correspondant aux premiers points de mesure ; et
calculer des données de profondeur sur la base des décalages pour acquérir l'image en profondeur.

13. Dispositif électronique selon la revendication 11 ou 12, dans lequel le processeur (200) est configuré pour :
lors de l'étalonnage de l'image de référence, commander la caméra à lumière structurée pour recevoir une lumière structurée qui est directement réfléchie par un objet d'étalonnage après être sortie du projecteur de lumière structurée et entre directement pour acquérir une première image de référence comprenant une pluralité de points de référence, la pluralité de points de référence comprenant des premiers points de référence formés lorsque la lumière structurée est diffractée par l'élément optique de diffraction et réfléchie par l'objet d'étalonnage ;
lors de l'étalonnage de l'image de référence, commander la caméra à image structurée pour recevoir une lumière structurée qui est diffractée par la zone d'affichage lorsqu'elle sort et entre directement après avoir été réfléchie par l'objet d'étalonnage pour acquérir une deuxième image de référence comprenant une pluralité de points de référence, la pluralité de points de référence comprenant les premiers points de référence formés lorsque la lumière structurée est diffractée par l'élément optique de diffraction et réfléchie par l'objet d'étalonnage, et des deuxièmes points de référence formés lorsque la lumière structurée est diffractée par l'élément optique de diffraction, diffractée par l'écran d'affichage et réfléchie par l'objet d'étalonnage ;
lors de l'étalonnage de l'image de référence, commander la caméra à image structurée pour recevoir une lumière structurée qui est diffractée par la zone d'affichage lorsqu'elle sort, réfléchie par l'objet d'étalonnage, et diffractée par la zone d'affichage lorsqu'elle entre dans la zone d'affichage pour acquérir une troisième image de référence comprenant une pluralité de points de référence, la pluralité de points de référence comprenant les premiers points de référence formés lorsque la lumière structurée est diffractée par l'élément optique de diffraction et réfléchie par l'objet d'étalonnage, les deuxièmes points de référence formés lorsque la lumière structurée est diffractée par l'élément optique de diffraction, diffractée par l'écran d'affichage et réfléchie par l'objet d'étalonnage, et des troisièmes points de référence formés lorsque la lumière structurée est diffractée par l'élément optique de diffraction, diffractée par l'écran d'affichage, réfléchie par l'objet d'étalonnage et diffractée de nouveau par l'écran d'affichage ;
comparer la première image de référence et la deuxième image de référence pour acquérir les deuxièmes points de référence, et comparer la troisième image de référence et la deuxième image de référence pour acquérir les troisièmes points de référence ; et
calculer un rapport entre une valeur de luminosité moyenne des deuxièmes points de référence et une valeur de luminosité moyenne des premiers points de référence en tant que premier rapport prédéfini, calculer un rapport entre une valeur de luminosité moyenne des troisièmes points de référence et une valeur de luminosité moyenne des premiers points de référence en tant que second rapport prédéfini, et calculer une valeur de luminosité moyenne des premiers points de référence en tant que luminosité prédéfinie.

14. Dispositif électronique selon la revendication 9, dans lequel le processeur (200) est configuré pour :
calculer des décalages des premiers points de mesure par rapport aux premiers points de référence, dans lequel les points de référence dans l'image de référence comprennent les premiers points de référence correspondant aux premiers points de mesure ;
calculer des décalages des deuxièmes points de mesure par rapport aux deuxièmes points de référence, dans lequel les points de référence dans l'image de référence comprennent les deuxièmes points de référence correspondant aux deuxièmes points de mesure ;
calculer des décalages des troisièmes points de mesure par rapport aux troisièmes points de référence, dans lequel les points de référence dans l'image de référence comprennent les troisièmes points de référence correspondant aux troisièmes points de mesure ; et
calculer des données de profondeur sur la base des décalages pour acquérir l'image en profondeur.
